# EUROPEAN PATENT APPLICATION

(11) **EP 4 492 851 A1**
(43) Date of publication of application: **15.01.2025**
(21) Application number: 23766051.9
(22) Date of filing: 08.03.2023
(51) Int. Cl.: H04W 24/02

(54) **SERVICE PROCESSING METHOD AND APPARATUS, AND COMMUNICATION DEVICE AND READABLE STORAGE MEDIUM**

(30) Priority: 11.03.2022 CN 202210239685; 01.04.2022 CN 202210349454; 05.05.2022 CN 202210483960
(71) Applicant: VIVO MOBILE COMMUNICATION CO., LTD., Dongguan, Guangdong 523863 (CN)
(72) Inventor: KE, Xiaowan, Dongguan, Guangdong 523863 (CN)
(74) Representative: Lavoix
(86) International application number: PCT/CN2023/080317
(87) International publication number: WO 2023/169474

(57) **Abstract**

The disclosure belongs to the technical field of communication. Disclosed are a method and apparatus for processing a service, a communication device, and a readable storage medium. The method for processing a service in an embodiment of the disclosure includes: acquiring, by a first communication device, coordination configuration information, and executing a first operation according to the coordination configuration information; where the coordination configuration information includes at least one of the following: coordination configuration information of a first channel, coordination configuration information of a second channel, and coordination configuration information of a first channel group; and the first operation includes at least one of the following: rejecting or releasing the first channel in a case that the second channel fails or is released, and executing, in a case that establishment or resource allocation of the second channel fails, at least one of the following: rejecting establishment of the first channel, rejecting or releasing the first channel, releasing a resource allocated to the first channel, and rejecting allocation of a resource to the first channel, where the second channel is a channel on which the first channel is dependent.

## Description

### CROSS-REFERENCE TO RELATED APPLICATIONS

The disclosure claims the priority to Chinese Patent Application No. 202210239685.X filed in China on March 11, 2022, Chinese Patent Application No. 202210349454.4 filed in China on April 1, 2022, and Chinese Patent Application No. 202210483960.2 filed in China on May 5, 2022, which are incorporated herein by reference in their entireties.

### TECHNICAL FIELD

The disclosure belongs to the technical field of communication, and particularly relates to a method and apparatus for processing a service, a communication device, and a readable storage medium.

### BACKGROUND

In a related network, multi-modal service data require approximate time scheduling in coordination with a quality of service (Quality of Service, QoS) policy for a media service including extended reality (Extended Reality, XR), etc. In this case, it is a pressing issue to support coordination among multiple data flows (for example, data flows of a multi-modal service).

### SUMMARY

A method and apparatus for processing a service, a communication device, and a readable storage medium are provided in embodiments of the disclosure, so as to solve a problem of how to support coordination of multiple data flows (for example, data flows of a multi-modal service).

In a first aspect, a method for processing a service is provided. The method includes:
acquiring, by a first communication device, coordination configuration information, where the coordination configuration information includes at least one of the following: coordination configuration information of a first channel, coordination configuration information of a second channel, and coordination configuration information of a first channel group; and
executing, by the first communication device, a first operation according to the coordination configuration information, where
the first operation includes at least one of the following:
   rejecting or releasing the first channel in a case that the second channel fails or is released;
   executing, in a case that establishment or resource allocation of the second channel fails, at least one of the following: rejecting establishment of the first channel, rejecting or releasing the first channel, releasing a resource allocated to the first channel, and rejecting allocation of a resource to the first channel;
   executing, in a case that handover of the second channel fails, at least one of the following: releasing a resource allocated to the first channel, rejecting allocation of a resource to the first channel, rejecting or releasing the first channel, and not handing over the first channel or rejecting to hand over the first channel;
   executing, in a case that a resource of the second channel is preempted or released, at least one of the following: releasing a resource allocated to the first channel, rejecting allocation of a resource to the first channel, and releasing the first channel;
   processing all channels in the first channel group as a whole;
   rejecting or releasing, in a case that any channel in the first channel group fails or is released, other channels or all the channels in the first channel group;
   executing, in a case that establishment or resource allocation of any channel in the first channel group fails, at least one of the following: rejecting establishment of other channels in the first channel group, rejecting allocation of resources to other channels in the first channel group, releasing resources allocated to other channels in the first channel group, and releasing other channels or all the channels in the first channel group;
   executing, in a case that handover of any channel in the first channel group fails, at least one of the following: releasing resources allocated to other channels in the first channel group, releasing other channels or all the channels in the first channel group, and rejecting to hand over any channel in the first channel group;
   executing, in a case that any channel in the first channel group is preempted, at least one of the following: releasing resources allocated to other channels in the first channel group, and releasing all the channels or other channels in the first channel group;
   preferentially allocating a resource to a primary channel; and
   preempting a resource of a secondary channel in a case that resources are insufficient;
   the coordination configuration information of a first channel includes at least one of the following: an identifier of the first channel, information of a terminal to which the first channel belongs, information of a superior channel to which the first channel belongs, an importance parameter of the first channel, and information of the second channel;
   the coordination configuration information of a second channel includes at least one of the following: an identifier of the second channel, information of a terminal to which the second channel belongs, information of a superior channel to which the second channel belongs, an importance parameter of the second channel, and information of the first channel; and
   the coordination configuration information of a first channel group includes at least one of the following:
      identifier information of the first channel group or a list formed by identification information of each channel encompassed in the first channel group;
      first indication information, where the first indication information is configured to indicate at least one of the following: all the channels in the first channel group are interdependent, and all the channels in the first channel group are required to be processed as a whole; and
      a list formed by information of a third channel, where
      the second channel is a channel on which the first channel is dependent; and
      the third channel is a channel encompassed in the first channel group.

In a second aspect, a method for processing a service is provided. The method includes:
acquiring, by a second communication device, first information; and
executing, by the second communication device, a second operation according to the first information; where
the first information includes at least one of the following:
   a first request message, where the first request message is configured for at least one of the following: making a QoS request for a session, making a QoS request for a data flow, requesting coordination processing for a data flow, requesting coordination processing for data flows in the same data flow group, and performing policy authorization; and
   first request information, where the first request information includes at least one of the following: coordination requirement information of a first data flow, coordination requirement information of a second data flow, coordination requirement information of a first data flow group, coordination requirement information of a first QoS request, coordination requirement information of a second QoS request, and coordination requirement information of a first QoS request group;
   the second operation includes at least one of the following:
      executing, in a case that a QoS request of the second data flow fails or is rejected, at least one of the following: rejecting a QoS request of the first data flow, revoking, releasing, or deleting a QoS policy mapped for a QoS request of the first data flow, notifying failure of a QoS request of the first data flow, deactivating the first data flow, and notifying deactivation of the first data flow;
      executing, in a case that a QoS request of any data flow in the first data flow group fails or is rejected, at least one of the following: rejecting QoS requests of other data flows or all data flows in the first data flow group, revoking, releasing, or deleting QoS policies mapped for QoS requests of other data flows in the first data flow group, notifying failure of QoS requests of other data flows or all data flows in the first data flow group, deactivating other data flows or all data flows in the first data flow group, and notifying deactivation of other data flows or all data flows in the first data flow group;
      executing, in a case that the second QoS request fails or is rejected, at least one of the following: rejecting the first QoS request, revoking, releasing, or deleting a QoS policy mapped for the first QoS request, and notifying failure of the first QoS request;
      executing, in a case that any QoS request in the first QoS request group fails or is rejected, at least one of the following: rejecting other QoS requests or all QoS requests in the first QoS request group, revoking, releasing, or deleting QoS policies mapped for other QoS requests in the first QoS request group, and notifying failure of other QoS requests or all QoS requests in the first QoS request group;
      determining a quality of service (QoS) policy for the data flow and/or the QoS request;
      executing a seventh operation according to a processing result of the QoS policy;
      determining dependency information of the QoS policy; and
      transmitting second information, where the second information includes at least one of the following: a first QoS policy, a second QoS policy, and a first QoS policy group;
      the first QoS policy includes at least one of the following: an identifier of the first QoS policy, an importance parameter of the first QoS policy, related information of the second QoS policy, and information of the second data flow;
      the second QoS policy includes at least one of the following: an identifier of the second QoS policy, an importance parameter of the second QoS policy, related information of the first QoS policy, and information of the first data flow;
      information of the first QoS policy group includes at least one of the following:
         identifier information of the first QoS policy group or a list formed by identification information of each QoS policy encompassed in the first QoS policy group;
         second indication information, where the second indication information is configured to indicate at least one of the following: all QoS policies in the first QoS policy group are interdependent, all QoS policies in the first QoS policy group are required to be processed as a whole, all data flows in the first QoS policy group are interdependent, and all data flows in the first QoS policy group are required to be processed as a whole; and
         a list formed by a third QoS policy, where
         the third QoS policy includes at least one of the following: an identifier of the third QoS policy, information of a terminal to which the third QoS policy belongs, information of a PDU session to which the third QoS policy belongs, and an importance parameter of the third QoS policy;
         the second QoS policy is a QoS policy on which the first QoS policy is dependent;
         the third QoS policy is a QoS policy encompassed in the first QoS policy group; and
         the second data flow is a data flow on which the first data flow is dependent; and
         the seventh operation includes at least one of the following:
            executing, in a case that the second QoS policy fails or is released, at least one of the following: rejecting, releasing, revoking, or deleting the first QoS policy, rejecting, releasing, or deleting a third QoS request, notifying failure of a third QoS request, deactivating the first data flow, and notifying deactivation of the first data flow, where the third QoS request is one of the following: the QoS request of the first data flow, the first QoS request, and the QoS request mapping the first QoS policy; and
            executing, in a case that any QoS policy in the first QoS policy group fails or is released, at least one of the following: rejecting, releasing, revoking, or deleting other QoS policies or all QoS policies in the first QoS policy group, rejecting, releasing, or deleting a fourth QoS request, notifying failure of a fourth QoS request, deactivating the other data flows or all the data flows in the first data flow group, and notifying deactivation of the other data flows or all the data flows in the first data flow group, where the fourth QoS request is one of the following: a QoS request mapping a QoS policy in the first QoS policy group, a QoS request of the first data flow group, and a QoS request of the first QoS request group.

In a third aspect, a method for processing a service is provided. The method includes:
acquiring, by a third communication device, first information and/or second information; and
executing, by the third communication device, a fourth operation according to the first information and/or the second information; where
the first information includes at least one of the following:
   a first request message, where the first request message is configured for at least one of the following: making a QoS request for a session, making a QoS request for a data flow, requesting coordination processing for a data flow, requesting coordination processing for data flows in the same data flow group, and performing policy authorization; and
   first request information, where the first request information includes at least one of the following: coordination requirement information of a first data flow, coordination requirement information of a second data flow, coordination requirement information of a first data flow group, coordination requirement information of a first QoS request, coordination requirement information of a second QoS request, and coordination requirement information of a first QoS request group;
   the second information includes at least one of the following: a first QoS policy, a second QoS policy, and a first QoS policy group;
   the fourth operation includes at least one of the following:
      executing, in a case that the second QoS policy fails or is rejected, at least one of the following: rejecting the first QoS policy, releasing or revoking a channel mapped for the first QoS policy, notifying failure of the first QoS policy, and notifying failure of the second QoS policy;
      executing, in a case that any QoS policy in the first QoS policy group is rejected or fails, at least one of the following: rejecting other QoS policies or all QoS policies in the first QoS policy group, releasing or revoking channels mapped for other QoS policies in the first QoS policy group, and notifying failure of other QoS policies or all QoS policies in the first QoS policy group;
      determining a channel for the data flow;
      determining a channel for the QoS policy;
      executing an eighth operation according to a processing result of the channel;
      determining dependency information of the channel; and
      transmitting coordination configuration information, where the coordination configuration information includes at least one of the following: coordination configuration information of a first channel, coordination configuration information of a second channel, and coordination configuration information of a first channel group;
      the coordination configuration information of a first channel includes at least one of the following: an identifier of the first channel, information of a terminal to which the first channel belongs, information of a superior channel to which the first channel belongs, an importance parameter of the first channel, and information of the second channel;
      the coordination configuration information of a second channel includes at least one of the following: an identifier of the second channel, information of a terminal to which the second channel belongs, information of a superior channel to which the second channel belongs, an importance parameter of the second channel, and information of the first channel;
      the coordination configuration information of a first channel group includes at least one of the following:
         identifier information of the first channel group or a list formed by identification information of each channel encompassed in the first channel group;
         first indication information, where the first indication information is configured to indicate at least one of the following: all channels in the first channel group are interdependent, and all channels in the first channel group are required to be processed as a whole; and
         a list formed by information of a third channel, where
         the second channel is a channel on which the first channel is dependent; and
         the third channel is a channel encompassed in the first channel group; and
         the eighth operation includes at least one of the following:
            executing, in a case of satisfying at least one of conditions that the second channel fails, the second channel is released, and a resource of the second channel is preempted, at least one of the following: rejecting, releasing, revoking, or not handing over the first channel, rejecting or releasing a QoS policy mapping the first channel, rejecting or releasing the first QoS policy, notifying failure of a QoS policy mapping the first channel, and notifying failure of the first QoS policy; and
            executing, in a case of satisfying at least one of conditions that any channel in the first channel group fails, any channel is released, and a resource of any channel is preempted, at least one of the following: rejecting, releasing, revoking, or not handing over other channels or all the channels in the first channel group, rejecting or releasing a QoS policy mapping a channel in the first channel group, rejecting or releasing the first QoS policy group, notifying failure of a QoS policy mapping a channel in the first channel group, and notifying failure of the other QoS policies or all the QoS policies in the first QoS policy group.

In a fourth aspect, a method for processing a service is provided. The method includes:
transmitting, by a fourth communication device, first information; where
the first information includes at least one of the following:
   a first request message, where the first request message is configured for at least one of the following: making a QoS request for a session, making a QoS request for a data flow, requesting coordination processing for a data flow, requesting coordination processing for data flows in the same data flow group, and performing policy authorization; and
   first request information, where the first request information includes at least one of the following: coordination requirement information of a first data flow, coordination requirement information of a second data flow, coordination requirement information of a first data flow group, coordination requirement information of a first QoS request, coordination requirement information of a second QoS request, and coordination requirement information of a first QoS request group;
   the coordination requirement information of a first data flow includes at least one of the following: description information of the first data flow, an importance parameter of the first data flow, information of a terminal to which the first data flow belongs, and information of the second data flow;
   the coordination requirement information of a second data flow includes at least one of the following: description information of the second data flow, an importance parameter of the second data flow, information of a terminal to which the second data flow belongs, and information of the first data flow;
   the coordination requirement information of a first data flow group includes at least one of the following:
      identifier information of the first data flow group or a list formed by identification information of each data flow in the first data flow group;
      third indication information, where the third indication information is configured to indicate at least one of the following: all data flows in the first data flow group are interdependent, data flows in the first data flow group are interdependent, and all data flows in the first data flow group are required to be processed as a whole; and
      a list formed by information of a third data flow, where
      the second data flow is a data flow on which the first data flow is dependent; and
      the third data flow is a data flow encompassed in the first data flow group;
      the coordination requirement information of a first QoS request includes at least one of the following: the first QoS request, an importance parameter of the first QoS request, information of a terminal to which the first QoS request belongs, and the second QoS request;
      the coordination requirement information of a second QoS request includes at least one of the following: the second QoS request, an importance parameter of the second QoS request, information of a terminal to which the second QoS request belongs, and the first QoS request; and
      the coordination requirement information of a first QoS request group includes at least one of the following:
         identifier information of the first QoS request group,
         a list formed by all QoS requests in the first QoS request group,
         third indication information, where the third indication information is configured to indicate at least one of the following: all the QoS requests in the first QoS request group are interdependent, the QoS requests in the first QoS request group are interdependent, and all the QoS requests in the first QoS request group are required to be processed as a whole, where
         the second QoS request is a QoS request on which the first QoS request is dependent.

In a fifth aspect, an apparatus for processing a service. The apparatus is applied to a first communication device and includes:
a first acquisition module, where the first acquisition module is configured to acquire coordination configuration information, and the coordination configuration information includes at least one of the following: coordination configuration information of a first channel, coordination configuration information of a second channel, and coordination configuration information of a first channel group; and
a first execution module, where the first execution module is configured to execute a first operation according to the coordination configuration information; where
the first operation includes at least one of the following:
   rejecting or releasing the first channel in a case that the second channel fails or is released;
   executing, in a case that establishment or resource allocation of the second channel fails, at least one of the following: rejecting establishment of the first channel, rejecting or releasing the first channel, releasing a resource allocated to the first channel, and rejecting allocation of a resource to the first channel;
   executing, in a case that handover of the second channel fails, at least one of the following: releasing a resource allocated to the first channel, rejecting allocation of a resource to the first channel, rejecting or releasing the first channel, and not handing over the first channel or rejecting to hand over the first channel;
   executing, in a case that a resource of the second channel is preempted or released, at least one of the following: releasing a resource allocated to the first channel, rejecting allocation of a resource to the first channel, and releasing the first channel;
   processing all channels in the first channel group as a whole;
   rejecting or releasing, in a case that any channel in the first channel group fails or is released, other channels or all the channels in the first channel group;
   executing, in a case that establishment or resource allocation of any channel in the first channel group fails, at least one of the following: rejecting establishment of other channels in the first channel group, rejecting allocation of resources to other channels in the first channel group, releasing resources allocated to other channels in the first channel group, and releasing other channels or all the channels in the first channel group;
   executing, in a case that handover of any channel in the first channel group fails, at least one of the following: releasing resources allocated to other channels in the first channel group, releasing other channels or all the channels in the first channel group, and rejecting to hand over any channel in the first channel group;
   executing, in a case that any channel in the first channel group is preempted, at least one of the following: releasing resources allocated to other channels in the first channel group, and releasing all the channels or other channels in the first channel group;
   preferentially allocating a resource to a primary channel; and
   preempting a resource of a secondary channel in a case that resources are insufficient;
   the coordination configuration information of a first channel includes at least one of the following: an identifier of the first channel, information of a terminal to which the first channel belongs, information of a superior channel to which the first channel belongs, an importance parameter of the first channel, and information of the second channel;
   the coordination configuration information of a second channel includes at least one of the following: an identifier of the second channel, information of a terminal to which the second channel belongs, information of a superior channel to which the second channel belongs, an importance parameter of the second channel, and information of the first channel; and
   the coordination configuration information of a first channel group includes at least one of the following:
      identifier information of the first channel group or a list formed by identification information of each channel encompassed in the first channel group;
      first indication information, where the first indication information is configured to indicate at least one of the following: all the channels in the first channel group are interdependent, and all the channels in the first channel group are required to be processed as a whole; and
      a list formed by information of a third channel, where
      the second channel is a channel on which the first channel is dependent; and
      the third channel is a channel encompassed in the first channel group.
      In a sixth aspect, an apparatus for processing a service is provided. The apparatus is applied to a second communication device and includes:
         a second acquisition module, where the second acquisition module is configured to acquire first information; and
         a second execution module, where the second execution module is configured to execute a second operation according to the first information; where
         the first information includes at least one of the following:
            a first request message, where the first request message is configured for at least one of the following: making a QoS request for a session, making a QoS request for a data flow, requesting coordination processing for a data flow, requesting coordination processing for data flows in the same data flow group, and performing policy authorization; and
            first request information, where the first request information includes at least one of the following: coordination requirement information of a first data flow, coordination requirement information of a second data flow, coordination requirement information of a first data flow group, coordination requirement information of a first QoS request, coordination requirement information of a second QoS request, and coordination requirement information of a first QoS request group;
            the second operation includes at least one of the following:
               executing, in a case that a QoS request of the second data flow fails or is rejected, at least one of the following: rejecting a QoS request of the first data flow, revoking, releasing, or deleting a QoS policy mapped for a QoS request of the first data flow, notifying failure of a QoS request of the first data flow, deactivating the first data flow, and notifying deactivation of the first data flow;
               executing, in a case that a QoS request of any data flow in the first data flow group fails or is rejected, at least one of the following: rejecting QoS requests of other data flows or all data flows in the first data flow group, revoking, releasing, or deleting QoS policies mapped for QoS requests of other data flows in the first data flow group, notifying failure of QoS requests of other data flows or all data flows in the first data flow group, deactivating other data flows or all data flows in the first data flow group, and notifying deactivation of other data flows or all data flows in the first data flow group;
               executing, in a case that the second QoS request fails or is rejected, at least one of the following: rejecting the first QoS request, revoking, releasing, or deleting a QoS policy mapped for the first QoS request, and notifying failure of the first QoS request;
               executing, in a case that any QoS request in the first QoS request group fails or is rejected, at least one of the following: rejecting other QoS requests or all QoS requests in the first QoS request group, revoking, releasing, or deleting QoS policies mapped for other QoS requests in the first QoS request group, and notifying failure of other QoS requests or all QoS requests in the first QoS request group;
               determining a quality of service (QoS) policy for the data flow and/or the QoS request;
               executing a seventh operation according to a processing result of the QoS policy;
               determining dependency information of the QoS policy; and
               transmitting second information, where the second information includes at least one of the following: a first QoS policy, a second QoS policy, and a first QoS policy group;
               the first QoS policy includes at least one of the following: an identifier of the first QoS policy, an importance parameter of the first QoS policy, related information of the second QoS policy, and information of the second data flow;
               the second QoS policy includes at least one of the following: an identifier of the second QoS policy, an importance parameter of the second QoS policy, related information of the first QoS policy, and information of the first data flow;
               information of the first QoS policy group includes at least one of the following:
               identifier information of the first QoS policy group or a list formed by identification information of each QoS policy encompassed in the first QoS policy group;
               second indication information, where the second indication information is configured to indicate at least one of the following: all QoS policies in the first QoS policy group are interdependent, all QoS policies in the first QoS policy group are required to be processed as a whole, all data flows in the first QoS policy group are interdependent, and all data flows in the first QoS policy group are required to be processed as a whole; and
               a list formed by a third QoS policy, where
               the third QoS policy includes at least one of the following: an identifier of the third QoS policy, information of a terminal to which the third QoS policy belongs, information of a PDU session to which the third QoS policy belongs, and an importance parameter of the third QoS policy;
               the second QoS policy is a QoS policy on which the first QoS policy is dependent;
               the third QoS policy is a QoS policy encompassed in the first QoS policy group; and
               the second data flow is a data flow on which the first data flow is dependent; and
               the seventh operation includes at least one of the following:
                  executing, in a case that the second QoS policy fails or is released, at least one of the following: rejecting, releasing, revoking, or deleting the first QoS policy, rejecting, releasing, or deleting a third QoS request, notifying failure of a third QoS request, deactivating the first data flow, and notifying deactivation of the first data flow, where the third QoS request is one of the following: the QoS request of the first data flow, the first QoS request, and the QoS request mapping the first QoS policy; and
                  executing, in a case that any QoS policy in the first QoS policy group fails or is released, at least one of the following: rejecting, releasing, revoking, or deleting other QoS policies or all QoS policies in the first QoS policy group, rejecting, releasing, or deleting a fourth QoS request, notifying failure of a fourth QoS request, deactivating the other data flows or all the data flows in the first data flow group, and notifying deactivation of the other data flows or all the data flows in the first data flow group, where the fourth QoS request is one of the following: a QoS request mapping a QoS policy in the first QoS policy group, a QoS request of the first data flow group, and a QoS request of the first QoS request group.

In a seventh aspect, an apparatus for processing a service is provided. The apparatus is applied to a third communication device and includes:
a third acquisition module, where the third acquisition module is configured to acquire first information and/or second information; and
a third execution module, where the third execution module is configured to execute a fourth operation according to the first information and/or the second information; where
the first information includes at least one of the following:
   a first request message, where the first request message is configured for at least one of the following: making a QoS request for a session, making a QoS request for a data flow, requesting coordination processing for a data flow, requesting coordination processing for data flows in the same data flow group, and performing policy authorization; and
   first request information, where the first request information includes at least one of the following: coordination requirement information of a first data flow, coordination requirement information of a second data flow, coordination requirement information of a first data flow group, coordination requirement information of a first QoS request, coordination requirement information of a second QoS request, and coordination requirement information of a first QoS request group;
   the second information includes at least one of the following: a first QoS policy, a second QoS policy, and a first QoS policy group;
   the fourth operation includes at least one of the following:
      executing, in a case that the second QoS policy fails or is rejected, at least one of the following: rejecting the first QoS policy, releasing or revoking a channel mapped for the first QoS policy, notifying failure of the first QoS policy, and notifying failure of the second QoS policy;
      executing, in a case that any QoS policy in the first QoS policy group is rejected or fails, at least one of the following: rejecting other QoS policies or all QoS policies in the first QoS policy group, releasing or revoking channels mapped for other QoS policies in the first QoS policy group, and notifying failure of other QoS policies or all QoS policies in the first QoS policy group;
      determining a channel for the data flow;
      determining a channel for the QoS policy;
      executing an eighth operation according to a processing result of the channel;
      determining dependency information of the channel; and
      transmitting coordination configuration information, where the coordination configuration information includes at least one of the following: coordination configuration information of a first channel, coordination configuration information of a second channel, and coordination configuration information of a first channel group;
      the coordination configuration information of a first channel includes at least one of the following: an identifier of the first channel, information of a terminal to which the first channel belongs, information of a superior channel to which the first channel belongs, an importance parameter of the first channel, and information of the second channel;
      the coordination configuration information of a second channel includes at least one of the following: an identifier of the second channel, information of a terminal to which the second channel belongs, information of a superior channel to which the second channel belongs, an importance parameter of the second channel, and information of the first channel; and
      the coordination configuration information of a first channel group includes at least one of the following:
         identifier information of the first channel group or a list formed by identification information of each channel encompassed in the first channel group;
         first indication information, where the first indication information is configured to indicate at least one of the following: all the channels in the first channel group are interdependent, and all the channels in the first channel group are required to be processed as a whole; and
         a list formed by information of a third channel, where
         the second channel is a channel on which the first channel is dependent; and
         the third channel is a channel encompassed in the first channel group; and
         the eighth operation includes at least one of the following:
            executing, in a case of satisfying at least one of conditions that the second channel fails, the second channel is released, and a resource of the second channel is preempted, at least one of the following: rejecting, releasing, revoking, or not handing over the first channel, rejecting or releasing a QoS policy mapping the first channel, rejecting or releasing the first QoS policy, notifying failure of a QoS policy mapping the first channel, and notifying failure of the first QoS policy; and
            executing, in a case of satisfying at least one of conditions that any channel in the first channel group fails, any channel is released, and a resource of any channel is preempted, at least one of the following: rejecting, releasing, revoking, or not handing over other channels or all the channels in the first channel group, rejecting or releasing a QoS policy mapping a channel in the first channel group, rejecting or releasing the first QoS policy group, notifying failure of a QoS policy mapping a channel in the first channel group, and notifying failure of the other QoS policies or all the QoS policies in the first QoS policy group.

In an eighth aspect, an apparatus for processing a service is provided. The apparatus is applied to a fourth communication device and includes:
a transmission module, where the transmission module is configured to transmit first information; where
the first information includes at least one of the following:
   a first request message, where the first request message is configured for at least one of the following: making a QoS request for a session, making a QoS request for a data flow, requesting coordination processing for a data flow, requesting coordination processing for data flows in the same data flow group, and performing policy authorization; and
   first request information, where the first request information includes at least one of the following: coordination requirement information of a first data flow, coordination requirement information of a second data flow, coordination requirement information of a first data flow group, coordination requirement information of a first QoS request, coordination requirement information of a second QoS request, and coordination requirement information of a first QoS request group;
   the coordination requirement information of a first data flow includes at least one of the following: description information of the first data flow, an importance parameter of the first data flow, information of a terminal to which the first data flow belongs, and information of the second data flow;
   the coordination requirement information of a second data flow includes at least one of the following: description information of the second data flow, an importance parameter of the second data flow, information of a terminal to which the second data flow belongs, and information of the first data flow;
   the coordination requirement information of a first data flow group includes at least one of the following:
      identifier information of the first data flow group or a list formed by identification information of each data flow in the first data flow group;
      third indication information, where the third indication information is configured to indicate at least one of the following: all the data flows in the first data flow group are interdependent, the data flows in the first data flow group are interdependent, and all the data flows in the first data flow group are required to be processed as a whole; and
      a list formed by information of a third data flow, where
      the second data flow is a data flow on which the first data flow is dependent; and
      the third data flow is a data flow encompassed in the first data flow group;
      the coordination requirement information of a first QoS request includes at least one of the following: the first QoS request, an importance parameter of the first QoS request, information of a terminal to which the first QoS request belongs, and the second QoS request;
      the coordination requirement information of a second QoS request includes at least one of the following: the second QoS request, an importance parameter of the second QoS request, information of a terminal to which the second QoS request belongs, and the first QoS request; and
      the coordination requirement information of a first QoS request group includes at least one of the following:
         identifier information of the first QoS request group,
         a list formed by all QoS requests in the first QoS request group,
         third indication information, where the third indication information is configured to indicate at least one of the following: all the QoS requests in the first QoS request group are interdependent, the QoS requests in the first QoS request group are interdependent, and all the QoS requests in the first QoS request group are required to be processed as a whole, where
         the second QoS request is a QoS request on which the first QoS request is dependent.

In a ninth aspect, a communication device is provided. The communication device includes a processor and a memory, where a program or instruction runnable on the processor is stored on the memory, and when executed by the processor, the program or instruction implements steps of the method in the first aspect, steps of the method in the second aspect, steps of the method in the third aspect, or steps of the method in the fourth aspect.

In a tenth aspect, a readable storage medium is provided. The readable storage medium stores a program or instruction, where when executed by a processor, the program or instruction implements steps of the method in the first aspect, steps of the method in the second aspect, steps of the method in the third aspect, or steps of the method in the fourth aspect.

In an eleventh aspect, a chip is provided. The chip includes a processor and a communication interface, where the communication interface is coupled to the processor, and the processor is configured to run a program or instruction, so as to implement steps of the method in the first aspect, steps of the method in the second aspect, steps of the method in the third aspect, or steps of the method in the fourth aspect.

In a twelfth aspect, a computer program/program product is provided. The computer program/program product is stored in a storage medium, where the computer program/program product is executed by at least one processor, so as to implement steps of the method in the first aspect, steps of the method in the second aspect, steps of the method in the third aspect, or steps of the method in the fourth aspect.

In the embodiments of the disclosure, coordination of multiple data flows (for example, data flows of a multi-modal service) may be supported, and simultaneous establishment and simultaneous release of multiple data flows (for example, data flows of a multi-modal service) may be further supported.

### BRIEF DESCRIPTION OF THE DRAWINGS

Fig. 1 is a block diagram of a radio communication system applicable to an embodiment of the disclosure;
Fig. 2 is a flowchart of a method for processing a service according to an embodiment of the disclosure;
Fig. 3 is a flowchart of another method for processing a service according to an embodiment of the disclosure;
Fig. 4 is a flowchart of yet another method for processing a service according to an embodiment of the disclosure;
Fig. 5 is a flowchart of still another method for processing a service according to an embodiment of the disclosure;
Fig. 6A is a flowchart of a service processing procedure in an application scenario 1 according to an embodiment of the disclosure;
Fig. 6B is a flowchart of a service processing procedure in an application scenario 1 according to an embodiment of the disclosure;
Fig. 6C is a flowchart of a service processing procedure in an application scenario 1 according to an embodiment of the disclosure;
Fig. 6D is a flowchart of a service processing procedure in an application scenario 1 according to an embodiment of the disclosure;
Fig. 7 is a schematic structural diagram of an apparatus for processing a service according to an embodiment of the disclosure;
Fig. 8 is a schematic structural diagram of another apparatus for processing a service according to an embodiment of the disclosure;
Fig. 9 is a schematic structural diagram of yet another apparatus for processing a service according to an embodiment of the disclosure;
Fig. 10 is a schematic structural diagram of still another apparatus for processing a service according to an embodiment of the disclosure; and
Fig. 11 is a schematic structural diagram of a communication device according to an embodiment of the disclosure.

### DETAILED DESCRIPTION

The technical solutions in embodiments of the disclosure are clearly described below with reference to the accompanying drawings in the embodiments of the disclosure. Apparently, the embodiments described are merely some embodiments rather than all embodiments of the disclosure. All other embodiments derived by those of ordinary skill in the art based on the embodiments of the disclosure fall within the scope of protection of the disclosure.

The terms "first", "second", etc. in the description and claims of the disclosure are used to distinguish between similar objects, instead of describing a specific sequence or successive order. It should be understood that the terms used in this way are interchangeable where appropriate, so that the embodiments of the disclosure can be implemented in an order different from those shown or described herein. Moreover, the objects distinguished by "first" and "second" are usually of one type, and a number of the objects is not limited. For example, a first object can indicate one or more objects. In addition, "and/or" in the description and claims indicates at least one of objects connected. The character "/" generally indicates that objects associated are in an "or" relationship.

It should be noted that the technologies described in the embodiments of the disclosure are not limited to a long term evolution (Long Term Evolution, LTE)/LTE-advanced (LTE-advanced, LTE-A) system, and can also be used for other radio communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), and single-carrier frequency division multiple access (Single-carrier Frequency Division Multiple Access, SC-FDMA). The terms "system" and "network" in the embodiments of the disclosure are often used interchangeably. The technologies described can be applied to the systems and radio technologies mentioned above, and can also be applied to other systems and radio technologies. The following descriptions illustratively describe a new radio (New Radio, NR) system, and the NR terms are used in most of the following descriptions. However, these technologies can also be applied to applications except for an application in the NR system, such as a 6th generation (6th Generation, 6G) communication system.

To facilitate better understanding of the embodiments of the disclosure, the following technical points are first described below.

A multi-modal service scenario may include at least:
multiple flows of single user equipment (User Equipment, UE), which are flows of the same protocol data unit (Protocol Data Unit, PDU) session or flows of different PDU sessions. Different policy control functions (Policy Control Functions, PCFs) and different session management functions (Session Management Functions, SMFs) may exist in a multi-PDU session.

In an embodiment of the disclosure, a multi-modal service or multi-modal data may be interpreted as follows: data coming from different source ends and/or transmitted to different destination ends, and used for the same task or the same application. The different destination ends may be located in one or more terminals. The different source ends may be located in one or more terminals. The multi-modal data include two or more single-modal data. All the single modes are correlated.

An example of the multi-modal service scenario is as follows: Eight modes of data include two video data, five audio data, and one tactile data. A user may be provided with a surround sound, four-dimensional (four-dimensional, 4D) televised experience. It is not difficult to understand that if transmission of an audio data flow fails, the user views a silent file. Therefore, the video data and tactile sensations continue to be transmitted with little meaning and can be released. If transmission of a video data flow fails, the user can only hear sounds. Therefore, the audio data are also transmitted with little meaning and can be released.
To support coordination among multiple data flows (such as data flows of a multi-modal service), the following problems are to be solved:
Problem 1: QoS coordination (common establishment and common release) of different service flows of the same multi-modal service:
   1 How to map multiple QoS flows for different service flows of the same multi-modal service.
   2 How to implement common establishment and common release of multiple QoS flows. During establishment of multiple QoS flows on an RAN, UE, and/or UPF side, the multiple QoS flows are required to undergo common establishment. When establishment of a QoS flow 1 fails, other QoS flows dependent on the QoS flow 1 also fail. If a target node rejects the QoS flow 1 in a handover process, all the QoS flows associated are also rejected.

One solution is to introduce importance and correlation. The importance and correction are independent of importance and correlation configured for packet loss in a PDU set (Set), but are configured for establishment and release of the QoS flows. The importance lies in that: important flows are established first between different multi-modal services. Therefore, the importance can also be mapped into an allocation/retention priority (Allocation/Retention Priority, ARP) that is an ARP at a QoS flow group level. The dependency lies in that: multiple QoS flows of the same multi-modal service are required to undergo common establishment or common failure, according to quality of experience (Quality of Experience, QoE). For example, when establishment of an audio flow fails, since a silent picture will be generated, it is not required to establish a video flow.

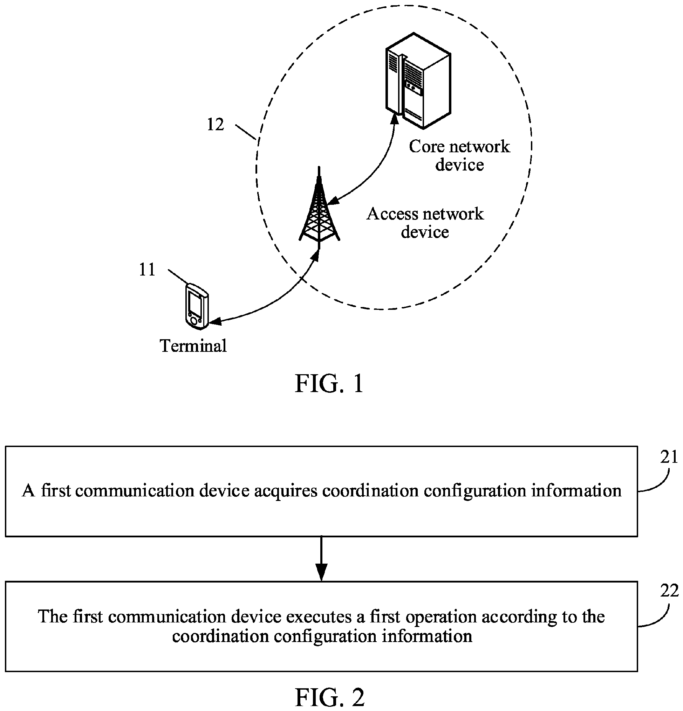

Fig. 1 is a block diagram of a radio communication system applicable to an embodiment of the disclosure. The radio communication system includes a terminal 11 and a network side device 12. The terminal 11 can be a mobile phone, a tablet personal computer (Tablet Personal Computer), a laptop computer (Laptop Computer, also referred to as a notebook computer), a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a radio communication function, such as a refrigerator, a television, a washing machine, and furniture), a game console, a personal computer (personal computer, PC), a teller machine, a self-service machine, etc. The wearable device includes: a smart watch, a smart band, a smart headphone, smart glasses, smart jewelry (a smart wristlet, a smart hand chain, a smart ring, a smart necklace, a smart anklet, a smart ankle chain, etc.), a smart wristband, smart clothing, etc. It should be noted that a specific type of the terminal 11 is not limited in the embodiment of the disclosure. The network side device 12 can include an access network device or a core network device. The access network device can also be referred to as a radio access network device, a radio access network (Radio Access Network, RAN), a radio access network function, or a radio access network unit. The access network device can include a base station, a wireless local area network (Wireless Local Area Network, WLAN) access point, a WiFi node, etc. The base station can be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmitting receiving point (Transmitting Receiving Point, TRP), or some other appropriate terms in the art. The base station is not limited to a specific technical vocabulary, as long as the same technical effect is realized. It should be noted that in the embodiment of the disclosure, only the base station in the NR system is described illustratively, but a specific type of the base station is not limited.

Optionally, acquiring can be interpreted as acquiring or receiving from a configuration, receiving after a request, acquiring through self-learning, acquiring through deriving according to unreceived information, or acquiring after processing according to received information, which can be specifically determined as required in practice and will not be limited in the embodiment of the disclosure. For example, when no certain capacity indication information transmitted by the device is received, it can be derived that the device does not support the capacity.

Optionally, transmitting can include broadcasting, broadcasting in a system message, and returning in response to a request.

In an optional embodiment of the disclosure, the communication device may include at least one of the following: a communication network element and a terminal.

In an embodiment of the disclosure, the communication network element may include at least one of the following: a core network network element and a radio access network network element.

In the embodiment of the disclosure, the core network network element (CN network element) may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), a time sensitive communication and time synchronization function (Time Sensitive Communication and Time Synchronization function, TSCTSF), etc.

In the embodiment of the disclosure, the RAN network element may include, but is not limited to, at least one of the following: a radio access network device, a radio access network node, a radio access network function, a radio access network unit, a 3GPP radio access network, a non-3GPP radio access network, a centralized unit (Centralized Unit, CU), a distributed unit (Distributed Unit, DU), a base station, an evolved node B (eNB), a next generation node B (gNB), a radio network controller (Radio Network Controller, RNC), a node B (Node B), a non-3GPP inter working function (Non-3GPP Inter Working Function, N3IWF), an access controller (Access Controller, AC) node, an access point (Access Point, AP) device, a wireless local area network (Wireless Local Area Network, WLAN) node, and an N3IWF.

The base station may be a base transceiver station (Base Transceiver Station, BTS) in a global system for mobile communication (Global System for Mobile Communication, GSM) or a code division multiple access (Code Division Multiple Access, CDMA), a node B (Node B) in wide code division multiple access (Wide CDMA, WCDMA), or an evolutional node B (evolutional Node B, eNB or e-NodeB), or a next generation node B (gNB) in LTE, which will not be limited in the embodiment of the disclosure.

In an optional embodiment of the disclosure, the UE may include one of the following: a terminal device, a terminal device and a card, and a card.

In an optional embodiment of the disclosure, the card may include one of the following: a SIM card, a USIM card, and an eSIM.

In an optional embodiment of the disclosure, the terminal may include a relay supporting a terminal function and/or a terminal supporting a relay function. The terminal may also be referred to as a terminal device or user equipment (User Equipment, UE). The terminal may be a mobile phone, a tablet personal computer (Tablet Personal Computer), a laptop computer (Laptop Computer), a personal digital assistant (Personal Digital Assistant, PDA), a mobile Internet device (Mobile Internet Device, MID), a wearable device (Wearable Device), vehicle user equipment, etc. It should be noted that a specific type of the terminal is not limited in the embodiment of the disclosure.

In an embodiment of the disclosure, the data flow includes a service data flow (for example, a service data flow). The data flow may be referred to as a flow or a data flow.

In an embodiment of the disclosure, processing as a whole includes at least one of the following: entire success (for example, establishment success, handover success, and resource allocation success), entire failure, and entire release.

In an embodiment of the disclosure, the failure includes at least one of the following: establishment failure, handover failure, resource allocation failure, authorization failure, establishment rejection, resource allocation rejection, and authorization rejection.

In an embodiment of the disclosure, rejection includes at least one of the following: establishment rejection, handover rejection, resource allocation rejection, and authorization rejection.

In an implementation, the establishment failure includes at least one of the following: establishment rejection, and resource allocation rejection. In an implementation, the handover failure includes at least one of the following: handover rejection, and resource allocation rejection.

In an embodiment of the disclosure, the release includes at least one of the following: resource release, context release, and deletion. The release includes at least one of the following: allocated resource release, context release, deletion, and deactivation.

In an embodiment of the disclosure, revocation includes at least one of the following: deletion, withdrawal, and deactivation.

In an embodiment of the disclosure, rejection includes at least one of the following: establishment rejection, and resource allocation rejection.

For example, rejection or release of the first channel in a case of failure or release of the second channel may be interpreted as follows:
1) Failure of the second channel may indicate at least one of the following: Establishment of the second channel fails, handover of the second channel fails, resource allocation of the second channel fails, establishment of the second channel is rejected, and resource allocation of the second channel is rejected.
2) Release of the second channel may indicate at least one of the following: A resource that has been allocated to the second channel is released, and a context of the second channel is released.
3) Release of the first channel may indicate at least one of the following: A resource that has been allocated to the first channel is released, and a context of the first channel is released.
4) Rejection of the first channel may indicate at least one of the following: Establishment of the first channel is rejected, and allocation of a resource to the first channel is rejected.

In an embodiment of the disclosure, the success includes at least one of the following: establishment success, handover success, and resource allocation success (for example, radio bearer mapping success). In an embodiment of the disclosure, information of a terminal may be configured to identify the terminal. The information of a terminal may include at least one of the following: an identifier of the terminal, an Internet protocol (Internet Protocol, IP) address of the terminal, a medium access control (Medium Access Control, MAC) address of the terminal, etc.

In an embodiment of the disclosure, a channel is a sub-channel of a superior channel. The superior channel may be a PDU session, for example. The channel may be a QoS flow, for example.

In an embodiment of the disclosure, a QoS policy is a sub-policy of a superior QoS policy. The superior QoS policy is a PCC rule, for example. The QoS policy is a QoS rule (rule), for example.

In another embodiment of the disclosure, the QoS policy includes a primary component carrier (Primary Component Carrier, PCC) rule.

In an implementation, an importance parameter of a channel includes an ARP, a priority.

In an implementation, the importance parameter includes an importance class or indication information configured to indicate an importance class. In an embodiment of the disclosure, description information of a data flow is configured to identify that the data flow belongs to at least one of the following: a service, an application, and a task.

In an embodiment of the disclosure, description information of a data flow includes at least one of the following: service type information, a fully qualified domain name (Fully Qualified Domain Name, FQDN), a source IP address, a target IP address, a source port, a target end, a protocol number, a source media access control (Media Access Control, MAC) address, a target MAC address, a service application (Application) identifier, an operating system (operating system, OS) identifier, a packet detection rule (packet detection rule, PDR), and a data network name (Data Network Name, DNN).

In an embodiment of the disclosure, a session includes one of the following: an AF session (for example, an AF session (Session) corresponding to a PDU session), a session management policy association (for example, an SM policy association (Policy Association) corresponding to a PDU session), and a session association among a PDU Session, an SMF, and a PCF (for example, a session management policy control (SM Policy Control) association).

One session corresponds to one or more terminal addresses (an MAC address and an IP address). One session generally corresponds to one IP address only.

Generally, one network function (Network Function, NF) may establish a session association through the terminal address, and perform a QoS request through signaling of the session association. One PDU session may correspond to one or more session associations. In an implementation, one network function consumer (NF Consumer, such as an AF) may request only one session association for one PDU session or one terminal address. Since the terminal address has a correspondence relationship with the session, the session association also has a correspondence relationship with the session.

The session association is, for example, one of the following: a session management policy association (SM Policy Association), a session management policy control (SM Policy Control) association, and an AF session.

In an embodiment of the disclosure, a QoS request of a data flow is a QoS requirement of the data flow, and may also be referred to as a QoS request associated with the data flow.

In an implementation, a QoS request of a first data flow is a QoS requirement of the first data flow, and may also be referred to as a QoS request associated with the first data flow.

In an implementation, a QoS request of a second data flow is a QoS requirement of the second data flow, and may also be referred to as a QoS request associated with the second data flow.

In an embodiment of the disclosure, the QoS requirement or the QoS request may be represented through one of the following: a QoS parameter, or indication information (for example, a QoS reference (reference)) configured to index a QoS parameter.

In an embodiment of the disclosure, the step that a quality of service (QoS) policy is determined for a data flow includes a quality of service (QoS) policy is determined for a QoS request of the data flow.

In an implementation, the step that a QoS parameter of the QoS policy is mapped according to a QoS parameter requirement of the QoS request includes: the QoS parameter requirement of the QoS request is mapped into the QoS parameter of the QoS policy.

In an implementation, the step that a QoS parameter of the QoS policy is mapped according to a QoS parameter requirement of the data flow includes: the QoS parameter requirement of the data flow is mapped into the QoS parameter of the QoS policy.

In an embodiment of the disclosure, QoS information includes at least one of the following: a QoS class indication (for example, a QoS class identifier (QoS Class Identifier (QCI) or 5QI)), a QoS rule, description information of a QoS flow, context information of a QoS, and information of a QoS parameter. The description information of a QoS flow may include the information of a QoS parameter, and the context information of a QoS may encompass the information of a QoS parameter.

In an embodiment of the disclosure, data packet filtering information is encompassed in the QoS rule.

In an embodiment of the disclosure, the QoS parameter, the QoS parameter requirement, or the information of a QoS parameter may include at least one of the following: QoS class indication information, priority information, a packet delay budget, a packet error rate, a maximum data burst, presence or absence of a guaranteed bit rate (Guaranteed Bit Rate, GBR), presence or absence of a default averaging window requirement, a default averaging window, and information of a QoS parameter related to the GBR.

In an optional embodiment of the disclosure, QoS parameter of a data flow request includes: a QoS parameter requested for the data flow.

In an optional embodiment of the disclosure, the QoS identifier (for example, 5QI, and QCI) is configured to map values of a set of QoS parameters (for example, a packet delay budget (Packet Delay Budget), a packet error rate (Packet Error Rate), a maximum data burst (Maximum Data Burst), an averaging window (Averaging window), a transmission rate, etc.). The QoS identifier may also be referred to as the QoS class indication information.

In an embodiment of the disclosure, the QoS requested and/or the QoS parameter may include at least one of the following: priority information, a packet delay budget, a packet error rate, a maximum data burst, presence or absence of a guaranteed bit rate, presence or absence of a default averaging window requirement, a default averaging window, and information of a QoS parameter related to the GBR.

In an embodiment of the disclosure, the channel is of a GBR type, which indicates that the QoS information of the channel includes the QoS parameter related to the GBR.

In an embodiment of the disclosure, the information of a QoS parameter related to the GBR may include at least one of the following: an uplink and/or downlink guaranteed flow bit rate (Guaranteed Flow Bit Rate, GFBR), an uplink and/or downlink maximum flow bit rate (Maximum Flow Bit Rate, MFBR), an uplink and/or downlink GBR, and an uplink and/or downlink maximum bit rate (MBR).

In an embodiment of the disclosure, a QoS information requirement may be one of the following: QoS information and a QoS parameter requirement; and the QoS information may be one of the following: a QoS information requirement and a QoS parameter requirement.

In an embodiment of the disclosure, the QoS class indication may be referred to as the 5QI, the QCI (QoS type indicator), etc., which will not be limited in the disclosure. The 5QI may be used as a QoS flow ID (QoS Flow ID, QFI).

In an embodiment of the disclosure, packet filter information may be configured to map data into a channel of a network. The packet filter information may also be referred to as a TFT, an SDF, etc., which will not be specifically limited in the disclosure.

In an embodiment of the disclosure, the data packet filtering information, the packet filter information, and a packet filter may indicate the same meaning and may be used interchangeably. The information of a QoS parameter and the QoS parameter may indicate the same meaning and may be used interchangeably. The QoS class indication information and the QoS class indication may indicate the same meaning and may be used interchangeably. The description information of a QoS flow and the description of a QoS flow may indicate the same meaning and may be used interchangeably. The priority information, the information of a QoS priority, and the priority may indicate the same meaning and may be used interchangeably.

In an optional embodiment of the disclosure, the channel may include at least one of the following: a PDU session, a quality of service (Quality of Service, QoS) flow, an evolved packet system (Evolved Packet System, EPS) bearer, a PDP context, a DRB, an SRB, and an Internet protocol security (Internet Protocol Security, IPsec) association.

In an embodiment of the disclosure, an IPsec channel may be an IPsec security association (SA). A first IPsec channel may be referred to as one of the following: a signaling IPsec SA, a primary IPsec SA, and an IPsec SA configured to transmit control signaling; or a different name, which is not specifically limited in the disclosure. A data IPsec channel may be referred to as one of the following: a data IPsec SA, an IPsec sub-SA, an IPsec SA configured to transmit user plane data, and an IPsec SA configured to transmit QoS flow data; or a different name, which is not specifically limited in the disclosure.

In an embodiment of the disclosure, a non-public net is short for a non-public network. The non-public network may be referred to as one of the following: a non-public communication network. The non-public net may include at least one of the following deployment manners: a physical non-public net, a virtual non-public net, and a non-public net implemented on a public net. In an implementation, the non-public net is a closed access group (Closed Access Group, CAG). One CAG may consist of a group of terminals.

In an embodiment of the disclosure, a non-public net service is short for a non-public network service. The non-public network service may also be referred to as one of the following: a non-public network network service, a non-public communication service, a non-public network communication service, a non-public net network service, etc. It should be noted that a naming method will not be specifically limited in the embodiment of the disclosure. In an implementation, when the non-public net is the closed access group, the non-public net service is a network service of the closed access group.

In an embodiment of the disclosure, the non-public net may encompass or be referred to as a private network. The private network may be referred to as one of the following: a private communication network, a private net, a local area network (LAN), a private virtual network (PVN), an isolated communication network, a dedicated communication network, etc. It should be noted that a naming method will not be specifically limited in the embodiment of the disclosure.

In an embodiment of the disclosure, the non-public network service may encompass or be referred to as a private network service. The private network service may be referred to as one of the following: a private network network service, a private communication service, a private network service, a private net service, a local area network (LAN) service, a private virtual network (PVN) service, an isolated communication network service, a dedicated communication network service, a dedicated network service, etc. It should be noted that a naming method will not be specifically limited in the embodiment of the disclosure.

In an embodiment of the disclosure, the public net is short for a public network. The public network may be referred to as one of the following: a public communication network, etc. It should be noted that a naming method will not be specifically limited in the embodiment of the disclosure.

In an embodiment of the disclosure, a public net service is short for a public network service. The public network service may also be referred to as one of the following: a public network network service, a public communication service, a public network communication service, a public net network service, etc. It should be noted that a naming method will not be specifically limited in the embodiment of the disclosure.

In an embodiment of the disclosure, an NG interface may also be referred to as an S 1 interface or an N2 interface, a name of which will not be limited.

In an embodiment of the disclosure, the communication network element may include at least one of the following: a core network network element and a radio access network network element.

A method and apparatus for processing a service, a communication device, and a readable storage medium according to the embodiments of the disclosure are described in detail below with reference to the accompanying drawings, and some embodiments and their application scenarios.

With reference to Fig. 2, a method for processing a service is provided in an embodiment of the disclosure. The method is applied to a first communication device. The first communication device includes, but is not limited to, a RAN network element or a CN network element (including, but not limited to, an SMF, a PCF, a UPF, etc.), UE, etc. When being the CN network element, the first communication device may be referred to as a first CN network element. The method includes:
Step 21: The first communication device acquires coordination configuration information.

In the embodiment, the coordination configuration information includes at least one of the following: coordination configuration information of a first channel, coordination configuration information of a second channel, and coordination configuration information of a first channel group.

Optionally, the coordination configuration information of a first channel may include at least one of the following: an identifier of the first channel, information of a terminal to which the first channel belongs, information of a superior channel to which the first channel belongs, an importance parameter of the first channel, and information of the second channel.

Optionally, the coordination configuration information of a second channel may include at least one of the following: an identifier of the second channel, information of a terminal to which the second channel belongs, information of a superior channel to which the second channel belongs, an importance parameter of the second channel, and information of the first channel.

Optionally, the coordination configuration information of a first channel group may include at least one of the following:
identifier information of the first channel group or a list formed by identification information of each channel encompassed in the first channel group;
first indication information, where the first indication information is configured to indicate at least one of the following: all channels in the first channel group are interdependent, and all channels in the first channel group are required to be processed as a whole; and
a list formed by information of a third channel.

Optionally, the second channel is a channel on which the first channel is dependent.

Optionally, the third channel is a channel encompassed in the first channel group.

In an implementation, the list formed by information of a third channel may be interpreted as a list formed by information of each channel in the first channel group.

In an implementation, the first channel in the coordination configuration information of a second channel indicates a channel dependent on the second channel.

In an implementation, processing as a whole includes at least one of the following: entire success (for example, establishment success, handover success, and resource allocation success), entire failure, and entire release.

In an implementation, the first channel succeeds (establishment succeeds, handover succeeds, and/or resource allocation succeeds (for example, mapping of a radio bearer succeeds)). Therefore, it is not difficult to understand that in a case of failure of the second channel (establishment failure, handover failure, release, and/or resource allocation failure), it is required to release the first channel (for example, a context of the first channel) or a resource of the first channel.

In an implementation, other channels in the first channel group succeed (establishment succeeds, handover succeeds, and/or resource allocation succeeds (for example, mapping of a radio bearer succeeds)). Therefore, it is not difficult to understand that in a case of failure of any channel in the first channel group (establishment failure, handover failure, release, and/or resource allocation failure), it is required to release the other channels or all the channels (for example, a context of the first channel) in the first channel group or resources of the other channels in the first channel group.

Step 22: The first communication device executes a first operation according to the coordination configuration information.

Optionally, the first operation includes at least one of the following:
the first channel is rejected or released in a case that the second channel fails or is released;
in a case that establishment or resource allocation of the second channel fails, at least one of the following is executed: establishment of the first channel is rejected, the first channel is rejected or released, a resource allocated to the first channel is released, and allocation of a resource to the first channel is rejected;
in a case that handover of the second channel fails, at least one of the following is executed: a resource allocated to the first channel is released, allocation of a resource to the first channel is rejected, the first channel is rejected or released, and the first channel is not handed over or the first channel is rejected to be handed over;
in a case that a resource of the second channel is preempted or released, at least one of the following is executed: a resource allocated to the first channel is released, allocation of a resource to the first channel is rejected, and the first channel is released;
all channels in the first channel group are processed as a whole;
in a case that any channel in the first channel group fails or is released, other channels or all the channels in the first channel group are rejected or released;
in a case that establishment or resource allocation of any channel in the first channel group fails, at least one of the following is executed: establishment of other channels in the first channel group is rejected, allocation of resources to other channels in the first channel group is rejected, resources allocated to other channels in the first channel group are released, and other channels or all the channels in the first channel group are released;
in a case that handover of any channel in the first channel group fails, at least one of the following is executed: resources allocated to other channels in the first channel group are released, other channels or all the channels in the first channel group are released, and any channel in the first channel group is rejected to be handed over;
in a case that any channel in the first channel group is preempted, at least one of the following is executed: resources allocated to other channels in the first channel group are released, and all the channels or other channels in the first channel group are released;
a resource is preferentially allocated to a primary channel, where for example, if an Xth channel is more important than a Yth channel, a resource is preferentially allocated to a more important Xth channel; and
a resource of a secondary channel is preempted in a case that resources are insufficient, where for example, if an Xth channel is more important than a Yth channel, a resource of a less important Yth channel is preempted in a case that resources are insufficient.

It is not difficult to understand that by means of the first operation above, common establishment/release of dependent channels may be implemented. In addition, when the resources are insufficient (for example, resources of the RAN are insufficient or a number of DRBs of the UE are insufficient) between different multi-modal services, the resource may be preferentially allocated to a more important channel or the resource of a less important channel may be preempted. Therefore, the service is performed efficiently.

In an implementation, the first communication device may receive the coordination configuration information from a first source end. The first source end includes at least one of the following: a third communication device, a third CN network element (for example, the SMF), etc.

In an implementation, in a case that the first communication device is the SMF, the coordination configuration information acquired by the first communication device is coordination configuration information determined/generated by the first communication device.

In an implementation, in a case that the first channel and/or the second channel are/is QoS flows/ a QoS flow, superior channels/a superior channel of the first channel and/or the second channel are/is PDU sessions/a PDU session.

In an implementation, the importance parameter of the channel includes an allocation/retention priority (Allocation/Retention Priority, ARP).

In an implementation, in a case that the channel X and the channel Y are interdependent, when the first channel is the channel X, the second channel is the channel Y; and alternatively, when the first channel is the channel Y, the second channel is the channel X. The first communication device may acquire the coordination configuration information of the channel X and/or the channel Y.

In another implementation, in a case that the channel X and the channel Y are interdependent, the first channel group includes the channel X and the channel Y. It is not difficult to understand that in such an implementation, information of a third channel (such as the channel X) is not required to encompass information of a channel on which the third channel is dependent, and vice versa.

Optionally, the information of the first channel includes at least one of the following: the identifier of the first channel, the information of a terminal to which the first channel belongs, the information of a superior channel to which the first channel belongs, and the importance parameter of the first channel; and/or
the information of the second channel includes at least one of the following: the identifier of the second channel, the information of a terminal to which the second channel belongs, the information of a superior channel to which the second channel belongs, and the importance parameter of the second channel; and/or
the information of a third channel includes at least one of the following: an identifier of the third channel, information of a terminal to which the third channel belongs, information of a superior channel to which the third channel belongs, and an importance parameter of the third channel; and/or
the identification information of a channel includes at least one of the following: an identifier of the channel, information of a terminal to which the channel belongs, and information of a superior channel to which the channel belongs. The identification information of a channel may be interpreted as identification information of each channel in the first channel group.

It should be noted that the above identifier of the channel may be unique within the superior channel of the terminal or within the terminal only, instead of being globally unique.

In an implementation, in a case that the channels belong to the same superior channel, the channel may be identified when the identification information of a channel includes the identifier of the channel.

In an implementation, in a case that the channels belong to different superior channels of the same terminal, the channel may be uniquely identified only when the identification information of a channel includes the identifier of the channel and the information of a superior channel to which the channel belongs.

In an implementation, in a case that the channels (such as the QoS flows) belong to different terminals, the channel may be uniquely identified only when the identification information of a channel includes the identifier of the channel, the information of a terminal to which the channel belongs, and the information of a superior channel (such as the PDU session) to which the channel belongs. In another implementation, in a case that the channels (for example, the PDU sessions) belong to different terminals, the channel may be uniquely identified only when the identification information of a channel includes the identifier of the channel and the information of a terminal to which the channel belongs.

In an implementation, the identification information of a channel is identification information/per channel (per channel).

Optionally, the first channel and the second channel satisfy one of the following: the first channel and the second channel are channels in the same superior channel, the first channel and the second channel are channels in different superior channels of the same terminal, and the terminal to which the first channel belongs and the terminal to which the second channel belongs are different; and/or
any two or more channels in the first channel group satisfy one of the following: any two or more channels in the first channel group are channels in the same superior channel, any two or more channels in the first channel group are channels in different superior channels of the same terminal, and any two or more channels in the first channel group are channels of different terminals.

Optionally, when the coordination configuration information of a first channel and/or the coordination configuration information of a second channel are/is acquired, the first communication device may acquire coordination information of a second channel group. The coordination information of a second channel group includes at least one of the following: coordination configuration information of a first channel, coordination configuration information of a second channel, and identifier information of the second channel group. In other words, the coordination configuration information of a first channel and/or the coordination configuration information of the second channel are/is encompassed in coordination information of one channel group for acquisition.

In an implementation, the first channel and/or the second channel belong/belongs to the second channel group.

Optionally, the method for processing a service in the embodiment may further include:
the first communication device acquires a processing result of the channel, where the processing result of the channel includes at least one of the following: establishment success, establishment failure, resource preemption or release, handover failure, and handover success; and
the first communication device executes a first operation according to the coordination configuration information and the processing result of the channel.

In an implementation, when being the SMF, the first communication device may acquire the processing result of the channel from at least one of the following: the RAN network element, the UE, the UPF, and another SMF.

If the first channel is dependent on the second channel,
in an implementation, if establishment of the first channel on an RANI succeeds, and establishment of the second channel on an RAN2 fails, the SMF may request to release the resource of the first channel from the RANI after learning processing results of the first channel and the second channel.

If establishment of the first channel under control of an SMF1 succeeds, and establishment of the second channel under control of an SMF2 fails, 1) in an implementation, the SMF1 may request to release the resource of the first channel from the SMF2 after learning processing results of the first channel and the second channel; and 2) in another implementation, the PCF may request to release a first QoS policy from the SMF2 through the SMF1 after learning processing results of the first channel and the second channel.

It is not difficult to understand that through the embodiment of the disclosure, coordination of multiple data flows (for example, data flows of a multi-modal service) may be supported, and simultaneous establishment and simultaneous release of multiple data flows (for example, data flows of a multi-modal service) may be further supported.

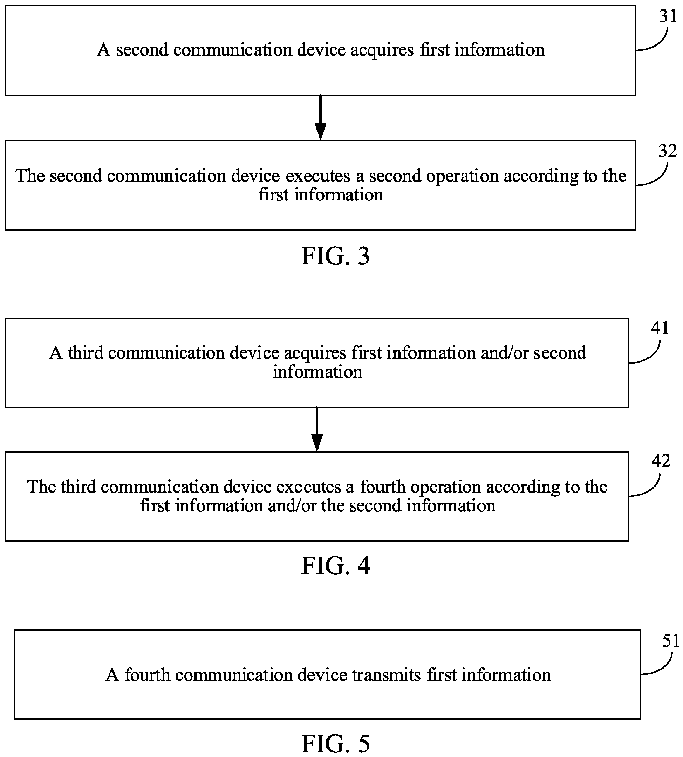

With reference to Fig. 3, a method for processing a service is provided in an embodiment of the disclosure. The method is applied to a second communication device. The second communication device includes, but is not limited to, a CN network element (for example, including, but not limited to the PCF, the SMF, the NEF, etc.). When being the CN network element, the second communication device may be referred to as a second CN network element. The method includes:
Step 31: The second communication device acquires first information.
Step 31: The second communication device executes a second operation according to the first information.

Optionally, the first information includes at least one of the following:
a first request message, where the first request message is configured for at least one of the following: making a QoS request for a session, making a QoS request for a data flow, requesting coordination processing for a data flow, requesting coordination processing for data flows in the same data flow group, and performing policy authorization; and
first request information, where the first request information includes at least one of the following: coordination requirement information of a first data flow, coordination requirement information of a second data flow, coordination requirement information of a first data flow group, coordination requirement information of a first QoS request, coordination requirement information of a second QoS request, and coordination requirement information of a first QoS request group.

Optionally, the second operation may include at least one of the following:
in a case that a QoS request of the second data flow fails or is rejected, at least one of the following is executed: a QoS request of the first data flow is rejected, a QoS policy mapped for a QoS request of the first data flow is revoked, released, or deleted, failure of a QoS request of the first data flow is notified, the first data flow is deactivated, and deactivation of the first data flow is notified;
in a case that a QoS request of any data flow in the first data flow group fails or is rejected, at least one of the following is executed: QoS requests of other data flows or all data flows in the first data flow group are rejected, QoS policies mapped for QoS requests of other data flows in the first data flow group are revoked, released, or deleted, failure of QoS requests of other data flows or all data flows in the first data flow group is notified, other data flows or all data flows in the first data flow group are deactivated, and deactivation of other data flows or all data flows in the first data flow group is notified;
in a case that the second QoS request fails or is rejected, at least one of the following is executed: the first QoS request is rejected, a QoS policy mapped for the first QoS request is revoked, released, or deleted, and failure of the first QoS request is notified;
in a case that any QoS request in the first QoS request group fails or is rejected, at least one of the following is executed: other QoS requests or all QoS requests in the first QoS request group are rejected, QoS policies mapped for other QoS requests in the first QoS request group are revoked, released, or deleted, and failure of other QoS requests or all QoS requests in the first QoS request group is notified;
a quality of service (QoS) policy is determined for the data flow and/or the QoS request;
a seventh operation is executed according to a processing result of the QoS policy;
dependency information of the QoS policy is determined; and

second information is transmitted, where the second information includes at least one of the following: a first QoS policy, a second QoS policy, and a first QoS policy group.

Optionally, the first QoS policy includes at least one of the following: an identifier of the first QoS policy, an importance parameter of the first QoS policy, related information of the second QoS policy, and information of the second data flow.

Optionally, the second QoS policy includes at least one of the following: an identifier of the second QoS policy, an importance parameter of the second QoS policy, related information of the first QoS policy, and information of the first data flow.

Optionally, information of the first QoS policy group includes at least one of the following:
identifier information of the first QoS policy group or a list formed by identification information of each QoS policy encompassed in the first QoS policy group;
second indication information, where the second indication information is configured to indicate at least one of the following: all QoS policies in the first QoS policy group are interdependent, all QoS policies in the first QoS policy group are required to be processed as a whole, all data flows in the first QoS policy group are interdependent, and all data flows in the first QoS policy group are required to be processed as a whole; and
a list formed by a third QoS policy, where
the third QoS policy includes at least one of the following: an identifier of the third QoS policy, information of a terminal to which the third QoS policy belongs, information of a PDU session to which the third QoS policy belongs, and an importance parameter of the third QoS policy;
the second QoS policy is a QoS policy on which the first QoS policy is dependent;
the third QoS policy is a QoS policy encompassed in the first QoS policy group; and
the second data flow is a data flow on which the first data flow is dependent; and
the seventh operation includes at least one of the following:
   in a case that the second QoS policy fails or is released, at least one of the following is executed: the first QoS policy is rejected, released, revoked, or deleted, a third QoS request is rejected, released, or deleted, failure of a third QoS request is notified, the first data flow is deactivated, and deactivation of the first data flow is notified, where the third QoS request is one of the following: the QoS request of the first data flow, the first QoS request, and the QoS request mapping the first QoS policy; and
   in a case that any QoS policy in the first QoS policy group fails or is released, at least one of the following is executed: other QoS policies or all QoS policies in the first QoS policy group are rejected, released, revoked, or deleted, a fourth QoS request is rejected, released, or deleted, failure of a fourth QoS request is notified, other data flows or all data flows in the first data flow group are deactivated, and deactivation of other data flows or all data flows in the first data flow group is notified, where the fourth QoS request is one of the following: a QoS request mapping a QoS policy in the first QoS policy group, a QoS request of the first data flow group, and a QoS request of the first QoS request group.

The first QoS policy group is one of the following: one or more QoS policies corresponding to the data flows in the first data flow group, and one or more QoS policies corresponding to the QoS requests in the first QoS request group.

In an implementation, after the step that a quality of service (QoS) policy is determined for the data flow and/or the QoS request, the step that seventh operation is executed according to a processing result of the QoS policy is executed.

In an implementation, the second source end is notified of at least one of the following: the third QoS request fails, the fourth QoS request fails, the first data flow is deactivated, and the other data flows or all the data flows in the first data flow group are deactivated.

The second source end acquires the first information, where the second source end includes at least one of the following: a fourth communication device, a fourth CN network element (for example, one of the following: the AF and the NEF), etc.

Optionally, the step that a quality of service (QoS) policy is determined for the data flow and/or the QoS request includes at least one of the following:
in a case that authorization of the QoS requests of all the data flows in the first data flow group succeeds, QoS policies are determined for the QoS requests of the data flows in the first data flow group; and
in a case that the QoS request of the first data flow succeeds (for example, the QoS policy corresponding to the QoS request succeeds, and alternatively, authorization of the QoS request succeeds), and authorization of the QoS request of the second data flow succeeds, a QoS policy is determined for the QoS request of the first data flow.

In an implementation, a step that the first QoS policy is transmitted includes: the second QoS policy and the first QoS policy are transmitted. For example, it is meaningful to transmit the first QoS policy on the premise of transmitting the second QoS policy.

In an implementation, a step that the first QoS policy group is transmitted includes: the first QoS policy group is transmitted in a case that authorization of the QoS requests of all the data flows in the first data flow group succeeds. In this case, the first QoS policy group may be one of the following: one or more QoS policies corresponding to the data flows in the first data flow group, and one or more QoS policies corresponding to the QoS requests in the first QoS request group.

In an implementation, the first QoS policy is one of the following: the QoS policy corresponding to the first data flow, and the QoS policy corresponding to the QoS request of the first data flow.

In an implementation, the second QoS policy is one of the following: the QoS policy corresponding to the second data flow, and the QoS policy corresponding to the QoS request of the second data flow.

In an implementation, the coordination requirement information of a first data flow, the coordination requirement information of a second data flow, and the coordination requirement information of a first data flow group are as described in the embodiment of the fourth communication device in Fig. 3, which will not be repeated herein.

In an implementation, the second communication device acquires the first information from the second source end. The second source end includes at least one of the following: the fourth communication device, the fourth CN network element (for example, one of the following: the AF and the NEF), etc.

In an implementation, the second communication device transmits the second information to a first target end. The first target end includes at least one of the following: the third communication device, the third CN network element (for example, the SMF), etc.

In an implementation, the step that a quality of service (QoS) policy is determined for the data flow includes a quality of service (QoS) policy is determined for the QoS request of the data flow.

In an implementation, the data flows in the first data flow group are interdependent, and alternatively, all the data flows in the first data flow group are required to be processed as a whole.

Optionally, the first QoS request and the second QoS request may be QoS requests in the same AF session or different AF sessions.

Optionally, the first QoS request and/or the second QoS request are/is: QoS requirements/a QoS requirement in the AF session.

In an implementation, the second QoS request is a QoS request on which the first QoS request is dependent. For example, the second QoS request takes a role only if the first QoS request succeeds.

In an implementation, a first QoS requirement is dependent on a second QoS requirement.

Optionally, the first QoS request group includes one of the following: a list formed by two or more QoS requests. The QoS requirements in the first QoS request group may belong to the same AF session or different AF sessions.

In an implementation, the QoS requests in the first QoS request group are interdependent, and alternatively, all the QoS requests in the QoS request group are required to be processed as a whole.

In an implementation, the QoS request includes one of the following: the first QoS request, the second QoS request, and the first QoS request group.

Optionally, the related information of the first QoS policy includes at least one of the following: the identifier of the first QoS policy, information of a terminal to which the first QoS policy belongs, information of a superior QoS policy to which the first QoS policy belongs, and the importance parameter of the first QoS policy; and/or
the related information of the second QoS policy includes at least one of the following: the identifier of the second QoS policy, information of a terminal to which the second QoS policy belongs, information of a superior QoS policy to which the second QoS policy belongs, and the importance parameter of the second QoS policy; and/or
the identification information of a QoS policy includes at least one of the following: an identifier of the QoS policy, information of a terminal to which the QoS policy belongs, and information of a superior QoS policy to which the QoS policy belongs. The identification information of a QoS policy may be interpreted as identification information of each QoS policy.

In an implementation, the superior QoS policy includes the PCC rule.

Optionally, the step that a QoS policy is determined for the data flow includes at least one of the following:
the same QoS policy is mapped for the first data flow and the second data flow;
the same QoS policy is mapped for data flows having a dependency relationship;
dependency information of the QoS policy is determined;
an importance class requirement of the data flow is mapped into the importance parameter of the QoS policy;
a QoS parameter of the QoS policy is mapped according to a QoS parameter requirement of the data flow;
a QoS parameter of the QoS policy is mapped according to a QoS parameter requirement of the data flow;
the same QoS policy is mapped for the first QoS request and the second QoS request;
the same QoS policy is mapped for QoS requests having a dependency relationship,
an importance class requirement of the QoS request is mapped into the importance parameter of the QoS policy; and
a QoS parameter of the QoS policy is mapped according to a QoS parameter requirement of the QoS request.
In an implementation, the importance parameter of the QoS policy includes the ARP.

Optionally, the step that the same QoS policy is mapped for the first data flow and the second data flow, and/or the step that a QoS parameter of the QoS policy is mapped according to a QoS parameter requirement of the data flow include/includes: in a case that QoS identifiers mapped to the QoS parameter requirements of the first data flow and the second data flow are different, and alternatively, the QoS parameter requirements of the first data flow and the second data flow are different, the QoS parameter of the QoS policy is mapped according to a stricter QoS parameter requirement of the first data flow and the second data flow.

Optionally, the step that the same QoS policy is mapped for data flows having a dependency relationship, and/or the step that a QoS parameter of the QoS policy is mapped according to a QoS parameter requirement of the data flow include/includes: in a case that QoS identifiers mapped to the QoS parameter requirements of the data flows having a dependency relationship are different, and alternatively, the QoS parameter requirements of the data flows having a dependency relationship are different, the QoS policy is mapped according to a strictest QoS parameter requirement among all QoS parameter requirements; and/or
the step that the same QoS policy is mapped for the first QoS request and the second QoS request, and/or the step that a QoS parameter of the QoS policy is mapped according to a QoS parameter requirement of the QoS request include/includes: in a case that QoS identifiers mapped to QoS parameter requirements of the first QoS request and the second QoS request are different, and alternatively, QoS parameter requirements of the first QoS request and the second QoS request are different, the QoS parameter of the QoS policy is mapped according to a stricter QoS parameter requirement of the first QoS request and the second QoS request; and/or
the step that the same QoS policy is mapped for QoS requests having a dependency relationship, and/or the step that a QoS parameter of the QoS policy is mapped according to a QoS parameter requirement of the QoS request include/includes: in a case that QoS identifiers mapped to QoS parameter requirements of the QoS requests having a dependency relationship are different, and alternatively, QoS parameter requirements of the QoS requests having a dependency relationship are different, the QoS policy is mapped according to a strictest QoS parameter requirement among all QoS parameter requirements.

In an implementation, in a case that multiple QoS parameter requirements are provided, a stricter or strictest QoS parameter requirement may come from QoS parameter requirements of different data flows. For example, the data flow A has a lower requirement on a delay, and the data flow B has a higher requirement on a transmission rate.

Optionally, the step that dependency information of the QoS policy is determined includes at least one of the following:
in a case that the data flow A is dependent on the data flow B, at least one of the following is determined: the first QoS policy includes a QoS policy mapped to the data flow A, the second QoS policy includes a QoS policy mapped to the data flow B, the second data flow in the first QoS policy includes the data flow A, and the first data flow in the second QoS policy includes the data flow B;
in a case that the first data flow is the data flow A, the data flow A is dependent on the data flow B, and the data flow B is dependent on a data flow C, at least one of the following is determined: the second QoS policy includes a QoS policy mapped to the data flow B and a QoS policy mapped to the data flow C, and the second data flow in the first QoS policy includes the data flow B and the data flow C;
in a case that the second data flow is a data flow C, the data flow A is dependent on the data flow B, and the data flow B is dependent on the data flow C, at least one of the following is determined: the first QoS policy includes a QoS policy mapped to the data flow A and a QoS policy mapped to the data flow B, and the first data flow in the second QoS policy includes the data flow A and the data flow B;
in a case that a data flow D and a data flow E are interdependent, the first data flow is the data flow D, and the first QoS policy is a QoS policy mapped to the data flow D, at least one of the following is determined: the second QoS policy includes a QoS policy mapped to the data flow E, and the second data flow in the first QoS policy includes the data flow E;
in a case that a data flow D and a data flow E are interdependent, the first data flow is the data flow E, and the first QoS policy is a QoS policy mapped to the data flow E, at least one of the following is determined: the second QoS policy includes a QoS policy mapped to the data flow D, and the second data flow in the first QoS policy includes the data flow D;
the first QoS policy group is generated in a case that a data flow D and a data flow E are interdependent, where the first QoS policy group includes a QoS policy mapped to the data flow D and a QoS policy mapped to the data flow E; and
the first QoS policy group is mapped for the first data flow group; and
in a case that a QoS request A is dependent on a QoS request B, at least one of the following is determined: the first QoS policy includes a QoS policy mapped to the QoS request A, the second QoS policy includes a QoS policy mapped to the QoS request B, the second QoS request in the first QoS policy includes the QoS request A, and the first QoS request in the second QoS policy includes the QoS request B;
in a case that the first QoS request is a QoS request A, the QoS request A is dependent on a QoS request B, and the QoS request B is dependent on a QoS request C, at least one of the following is determined: the second QoS policy includes a QoS policy mapped to the QoS request B and a QoS policy mapped to the QoS request C, and the second QoS request in the first QoS policy includes the QoS request B and the QoS request C;
in a case that the second QoS request is a QoS request C, a QoS request A is dependent on a QoS request B, and the QoS request B is dependent on the QoS request C, at least one of the following is determined: the first QoS policy includes a QoS policy mapped to the QoS request A and a QoS policy mapped to the QoS request B, and the first QoS request in the second QoS policy includes the QoS request A and the QoS request B;
in a case that a QoS request D and a QoS request E are interdependent, the first QoS request is the QoS request D, and the first QoS policy is a QoS policy mapped to the QoS request D, at least one of the following is determined: the second QoS policy includes a QoS policy mapped to the QoS request E, and the second QoS request in the first QoS policy includes the QoS request E;
in a case that a QoS request D and a QoS request E are interdependent, the first QoS request is the QoS request E, and the first QoS policy is a QoS policy mapped to the QoS request E, at least one of the following is determined: the second QoS policy includes a QoS policy mapped to the QoS request D, and the second QoS request in the first QoS policy includes the QoS request D;
the first QoS policy group is generated in a case that a QoS request D and a QoS request E are interdependent, where the first QoS policy group includes a QoS policy mapped to the QoS request D and a QoS policy mapped to the QoS request E; and
the first QoS policy group is mapped for the first QoS request group.

The first QoS policy is a QoS policy mapped for the first data flow and/or the first QoS request; and the second QoS policy is a QoS policy mapped for the second data flow and/or the second QoS request.

In an implementation, the QoS policies in the first QoS policy group are interdependent, and alternatively, all the QoS policies in the first QoS policy group are required to be processed as a whole.

In an implementation, the second QoS request is a QoS request on which the first QoS request is dependent. For example, the second QoS request takes a role only if the first QoS request succeeds.

Optionally, the operation that the first QoS policy group is mapped for the first data flow group includes: the first QoS policy group includes the third QoS policy; where the third QoS policy is a QoS policy mapped for a third data flow; and the third data flow is a data flow in the first data flow group.

Optionally, after the above step that second information is transmitted, the method for processing a service in the embodiment further includes:
the second communication device acquires a processing result of the QoS policy, where the processing result of the QoS policy includes at least one of the following: success, failure, and release; and
the second communication device executes a third operation according to the second information and/or the processing result of the QoS policy.

The third operation includes at least one of the following:
in a case that the second QoS policy fails or is released, at least one of the following is executed: the first QoS policy is rejected, released, revoked, or deleted, the QoS request of the first data flow is rejected, released, or deleted, the first QoS request is rejected, released, or deleted, a QoS request mapping the first QoS policy is rejected, released, or deleted, and failure of a third QoS request is notified, where the third QoS request is one of the following: the QoS request of the first data flow, the first QoS request, and the QoS request mapping the first QoS policy; and
in a case that any QoS policy in the first QoS policy group fails or is released, at least one of the following is executed: other QoS policies or all QoS policies in the first QoS policy group are rejected, released, revoked, or deleted, a QoS request mapping a QoS policy in the first QoS policy group is rejected, released, or deleted, a QoS request of the first data flow group is rejected, released, or deleted, a QoS request of the first QoS request group is rejected, released, or deleted, and failure of a fourth QoS request is notified, where the fourth QoS request is one of the following: the QoS request mapping a QoS policy in the first QoS policy group, the QoS request of the first data flow group, and the QoS request of the first QoS request group.

In an implementation, the second communication device (for example, the PCF) may acquire the processing result of the QoS policy from a third source end. The third source end includes at least one of the following: the third communication device, the third CN network element (for example, the SMF), a fifth CN network element (for example, another PCF), etc.

In an implementation, when the first QoS policy and the second QoS policy are generated by the PCF1 and the PCF2 respectively, the PCF1 may order a processing result of the second QoS policy from the PCF2, so as to acquire the processing result of the second QoS policy. The PCF1 may acquire a processing result of the first QoS policy from the SMF1. If processing of the first QoS policy succeeds, and processing of the second QoS policy fails, the PCF1 may release the first QoS policy to the SMF1.

In an implementation, the first QoS policy succeeds (for example, establishment succeeds, handover succeeds, and/or resource allocation succeeds (for example, mapping of a radio bearer succeeds)). Therefore, it is not difficult to understand that in a case of failure of the second QoS policy (establishment failure, handover failure, release, and/or resource allocation failure), it is required to release the first QoS policy (for example, a context of the first QoS policy) or a resource of the first QoS policy.

In an implementation, the other QoS policies in the first QoS policy group succeed (for example, establishment succeeds, handover succeeds, and/or resource allocation succeeds (for example, mapping of a radio bearer succeeds)). Therefore, it is not difficult to understand that in a case of failure of any QoS policy (establishment failure, handover failure, release, and/or resource allocation failure) in the first QoS policy group, it is required to release the other QoS policies or all the QoS policies (for example, a context of the first QoS policy) in the first QoS policy group or resources of the other QoS policies in the first QoS policy group.

Optionally, the method for processing a service in the embodiment further includes at least one of the following:
the second communication device determines a processing result of the QoS request; and
the second communication device transmits the processing result of the QoS request, where the processing result of the QoS request is configured to indicate any one of the following: the QoS request succeeds, the QoS request fails, and the QoS request is released.

In an implementation, the second communication device transmits the processing result of the QoS request to the second target end. The second target end includes at least one of the following: the fourth communication device, the fourth CN network element (for example, one of the following: the AF and the NEF), etc.

In an implementation, the step of determining a processing result of the QoS request includes the processing result of the QoS request is determined according to the processing result of the QoS policy. For example, if the QoS policy mapped to the QoS request fails, it is deemed that the QoS request fails. For example, if the QoS policy mapped to the QoS request is released, it is deemed that the QoS request is released or fails.

It is not difficult to understand that through the embodiment of the disclosure, coordination of multiple data flows (for example, data flows of a multi-modal service) may be supported, and simultaneous establishment and simultaneous release of multiple data flows (for example, data flows of a multi-modal service) may be further supported.

With reference to Fig. 4, a method for processing a service is provided in an embodiment of the disclosure. The method is applied to the third communication device. The third communication device includes, but is not limited to, a CN network element (for example, including, but not limited to, the SMF). When being the CN network element, the third communication device may be referred to as the third CN network element. The method includes:
Step 41: The third communication device acquires first information and/or second information.
Step 42: The third communication device executes a fourth operation according to the first information and/or the second information.

Optionally, the first information may include at least one of the following:
a first request message, where the first request message is configured for at least one of the following: making a QoS request for a session, making a QoS request for a data flow, requesting coordination processing for a data flow, requesting coordination processing for data flows in the same data flow group, and performing policy authorization; and
first request information, where the first request information includes at least one of the following: coordination requirement information of a first data flow, coordination requirement information of a second data flow, coordination requirement information of a first data flow group, coordination requirement information of a first QoS request, coordination requirement information of a second QoS request, and coordination requirement information of a first QoS request group.

In an implementation, the first request information may be encompassed in the first request message.

Optionally, the second information includes at least one of the following: a first QoS policy, a second QoS policy, and a first QoS policy group.

Optionally, the fourth operation may include at least one of the following:
in a case that the second QoS policy fails or is rejected, at least one of the following is executed: the first QoS policy is rejected, a channel mapped for the first QoS policy is released or revoked, failure of the first QoS policy is notified, and failure of the second QoS policy is notified;
in a case that any QoS policy in the first QoS policy group is rejected or fails, at least one of the following is executed: other QoS policies or all QoS policies in the first QoS policy group are rejected, channels mapped for other QoS policies in the first QoS policy group are released or revoked, and failure of other QoS policies or all QoS policies in the first QoS policy group is notified;
a channel is determined for the data flow;
a channel is determined for the QoS policy;
an eighth operation is executed according to a processing result of the channel;
dependency information of the channel is determined; and
coordination configuration information is transmitted, where the coordination configuration information includes at least one of the following: coordination configuration information of a first channel, coordination configuration information of a second channel, and coordination configuration information of a first channel group.

Optionally, the coordination configuration information of a first channel includes at least one of the following: an identifier of the first channel, information of a terminal to which the first channel belongs, information of a superior channel to which the first channel belongs, an importance parameter of the first channel, and information of the second channel.

Optionally, the coordination configuration information of a second channel includes at least one of the following: an identifier of the second channel, information of a terminal to which the second channel belongs, information of a superior channel to which the second channel belongs, an importance parameter of the second channel, and information of the first channel.

Optionally, the coordination configuration information of a first channel group includes at least one of the following:
identifier information of the first channel group or a list formed by identification information of each channel encompassed in the first channel group;
first indication information, where the first indication information is configured to indicate at least one of the following: all channels in the first channel group are interdependent, and all channels in the first channel group are required to be processed as a whole; and
a list formed by information of a third channel.

Optionally, the second channel is a channel on which the first channel is dependent; and the third channel is a channel encompassed in the first channel group; and
the eighth operation includes at least one of the following:
in a case of satisfying at least one of conditions that the second channel fails, the second channel is released, and a resource of the second channel is preempted, at least one of the following is executed: the first channel is rejected, released, revoked, or is not handed over, a QoS policy mapping the first channel is rejected or released, the first QoS policy is rejected or released, failure of a QoS policy mapping the first channel is notified, and failure of the first QoS policy is notified; and
in a case of satisfying at least one of conditions that any channel in the first channel group fails, any channel is released, and a resource of any channel is preempted, at least one of the following is executed: other channels or all the channels in the first channel group are rejected, released, revoked, or are not handed over, a QoS policy mapping a channel in the first channel group is rejected or released, the first QoS policy group is rejected or released, failure of a QoS policy mapping a channel in the first channel group is notified, and failure of the other QoS policies or all the QoS policies in the first QoS policy group is notified.
the first channel group is one of the following: one or more channels corresponding to the QoS policies in the first QoS policy group, and one or more data flows corresponding to the data flows in the first data flow group.

In an implementation, after the step that a channel is determined for the QoS policy, the step that an eighth operation is executed according to a processing result of the channel is executed.

In an implementation, a fourth source end is notified of at least one of the following: the QoS policy mapping the first channel fails, the first QoS policy fails, the second QoS policy fails, the QoS policy mapping a channel in the first channel group fails, and the first QoS policy group fails.

In an implementation, a fourth source end includes at least one of the following: the second communication device, the second CN network element (for example, one of the following: the PCF and the NEF), etc.

Optionally, the step that a channel is determined for the QoS policy includes at least one of the following:
in a case that authorization of all the QoS policies in the first QoS policy group succeeds, channels are determined for the QoS policies in the first QoS policy group; and
in a case that the first QoS policy succeeds (for example, establishment or authorization of a corresponding channel succeeds), and authorization of the second QoS policy succeeds, a channel is determined for the first QoS policy.

Optionally, the step that a channel is determined for the data flow includes at least one of the following:
in a case that authorization of all the data flows in the first data flow group succeeds, channels are determined for the data flows in the first data flow group; and
in a case that the first data flow succeeds (for example, establishment or authorization of a corresponding channel succeeds), and authorization of the second data flow succeeds, a channel is determined for the first data flow.

In an implementation, a step that the coordination configuration information of a first channel is transmitted includes: the coordination configuration information of a first channel and the coordination configuration information of a second channel are transmitted. For example, it is meaningful to transmit the coordination configuration information of a first channel on the premise of transmitting the coordination configuration information of a second channel.

In an implementation, a step that the coordination configuration information of a first channel group is transmitted includes: the coordination configuration information of a first channel group is transmitted in a case that authorization of all the data flows in the first data flow group succeeds, and/or authorization of all the QoS policies in the first QoS policy group succeeds. In this case, one or more channels correspond to the QoS policies in the first QoS policy group, and one or more data flows correspond to the data flows in the first data flow group.

In an implementation, the first channel and the second channel satisfy one of the following: the first channel and the second channel are channels in the same superior channel, the first channel and the second channel are channels in different superior channels of the same terminal, and the terminal to which the first channel belongs and the terminal to which the second channel belongs are different; and/or
any two or more channels in the first channel group satisfy one of the following: any two or more channels in the first channel group are channels in the same superior channel, any two or more channels in the first channel group are channels in different superior channels of the same terminal, and any two or more channels in the first channel group are channels of different terminals.

In an implementation, the information of the first channel, the information of the second channel, and the information of the third channel are as described in the embodiment of the first communication device in Fig. 2.

In an implementation, the third communication device acquires the first information from the third source end. The third source end includes at least one of the following: the fourth communication device, the fourth CN network element (for example, one of the following: the AF and the NEF), etc.

In an implementation, the third communication device acquires the second information from the fourth source end. The fourth source end includes at least one of the following: the second communication device, the second CN network element (for example, one of the following: the PCF and the NEF), etc.

In an implementation, the third communication device transmits the coordination configuration information to a third target end. The third target end includes at least one of the following: the first communication device, the first CN network element (for example, one of the following: the UE, the SMF, the PCF, the UPF), etc.

In an implementation, the QoS policies in the first QoS policy group are interdependent, and alternatively, all the QoS policies in the first QoS policy group are required to be processed as a whole.

In an implementation, the second QoS request is a QoS request on which the first QoS request is dependent. For example, the second QoS request takes a role only if the first QoS request succeeds.

Optionally, the above step that a channel is determined for the data flow includes at least one of the following:
the same channel is mapped for the first data flow and the second data flow, and alternatively, individual channels are mapped for the first data flow and the second data flow respectively;
no channels/channel mapped to the first data flow and/or the second data flow are/is configured for other data flows except for the first data flow and/or the second data flow;
the same channel is mapped for data flows having a dependency relationship; and
dependency information of the channel is determined.

In an implementation, the step that the same channel is mapped for the first data flow and the second data flow includes in a case that QoS parameters of the first data flow and the second data flow are different, the channel is mapped according to a stricter QoS parameter of the first data flow and the second data flow.

In an implementation, the step that the same channel is mapped for data flows having a dependency relationship includes: in a case that QoS parameters of the data flows having a dependency relationship are different, the channel is mapped according to a strictest QoS parameter among all QoS parameter requirements.

In an implementation, the strictest QoS parameter may be a QoS parameter from different data flows. For example, the data flow A has a lower requirement on a delay, and the data flow B has a higher requirement on a transmission rate.

Optionally, the operation that dependency information of the channel is determined includes at least one of the following:
in a case that a QoS policy A is dependent on a QoS policy B, at least one of the following is determined: the first channel includes a channel mapped to the QoS policy A, and the second channel includes a channel mapped to the QoS policy B;
in a case that the first QoS policy is a QoS policy A, the QoS policy A is dependent on a QoS policy B, and the QoS policy B is dependent on a QoS policy C, at least one of the following is determined: the second channel includes a channel mapped to the QoS policy B and a channel mapped to the QoS policy C;
in a case that the second QoS policy is a QoS policy C, a QoS policy A is dependent on a QoS policy B, and the QoS policy B is dependent on the QoS policy C, at least one of the following is determined: the first channel includes a channel mapped to the QoS policy A and a channel mapped to the QoS policy B;
in a case that a QoS policy D and a QoS policy E are interdependent, the first QoS policy is the QoS policy D, and the first channel is a channel mapped to the QoS policy D, at least one of the following is determined: the second channel includes a channel mapped to the QoS policy E;
in a case that a QoS policy D and a QoS policy E are interdependent, the first QoS policy is the QoS policy E, and the first channel is a channel mapped to the QoS policy E, at least one of the following is determined: the second channel includes a channel mapped to the QoS policy D;
the first channel group is generated in a case that a QoS policy D and a QoS policy E are interdependent, where the first channel group includes a channel mapped to the QoS policy D and a channel mapped to the QoS policy E; and
the first channel group is mapped for the first QoS policy group, where
the first channel is a channel mapped to the first QoS policy; and the second channel is a channel mapped to the second QoS policy.

Optionally, the operation that a channel is determined for the QoS policy includes at least one of the following:
the same channel is mapped for the first QoS policy and the second QoS policy, and alternatively, individual channels are mapped for the first QoS policy and the second QoS policy respectively;
no channels/channel mapped to the first QoS policy and/or the second QoS policy are/is configured for other QoS policies except for the first QoS policy and/or the second QoS policy;
the same channel is mapped for QoS policies having a dependency relationship; and
the dependency information of the channel is determined.

Optionally, the step that the same channel is mapped for the first QoS policy and the second QoS policy includes: in a case that QoS parameters of the first QoS policy and the second QoS policy are different, the channel is mapped according to a stricter QoS parameter of the first QoS policy and the second QoS policy; and/or
the step that the same channel is mapped for QoS policies having a dependency relationship includes: in a case that QoS parameters of the QoS policies having a dependency relationship are different, the channel is mapped according to a strictest QoS parameter among all QoS parameter requirements.

In an implementation, the strictest QoS parameter may be a QoS parameter value from different QoS policies. For example, the QoS policy A has a lower requirement on a delay, and the QoS policy B has a higher requirement on a transmission rate.

Optionally, the step that dependency information of the channel is determined may include at least one of the following:
in a case that a data flow A is dependent on a data flow B, at least one of the following is determined: the first channel includes a channel mapped to the data flow A, and the second channel includes a channel mapped to the data flow B;
in a case that the first data flow is a data flow A, the data flow A is dependent on a data flow B, and the data flow B is dependent on a data flow C, at least one of the following is determined: the second channel includes a channel mapped to the data flow B and a channel mapped to the data flow C;
in a case that the second data flow is a data flow C, a data flow A is dependent on a data flow B, and the data flow B is dependent on the data flow C, at least one of the following is determined: the first channel includes a channel mapped to the data flow A and a channel mapped to the data flow B;
in a case that a data flow D and a data flow E are interdependent, the first data flow is the data flow D, and the first channel is a channel mapped to the data flow D, at least one of the following is determined: the second channel includes a channel mapped to the data flow E;
in a case that a data flow D and a data flow E are interdependent, the first data flow is the data flow E, and the first channel is a channel mapped to the data flow E, at least one of the following is determined: the second channel includes a channel mapped to the data flow E;
the first channel group is generated in a case that a data flow D and a data flow E are interdependent, where the first channel group includes a channel mapped to the data flow D and a channel mapped to the data flow E; and
the first channel group is mapped for the first data flow group, where
the first channel is a channel mapped to the first data flow; and the second channel is a channel mapped to the second data flow.

Optionally, the operation that the first channel group is mapped for the first data flow group may include: the first channel group includes a third channel; and/or the operation that the first channel group is mapped for the first QoS policy group includes: the first channel group includes a third channel, where the third channel is one of the following: a channel mapped to a third data flow, and a channel mapped to a third QoS policy; the third data flow is any data flow encompassed in the first data flow group; and the third QoS policy is any QoS policy encompassed in the first QoS policy group.

Optionally, after the above step that coordination configuration information is transmitted, the method for processing a service in the embodiment may further include:
the third communication device acquires the processing result of the channel, where the processing result of the channel includes at least one of the following: establishment success, establishment failure, resource preemption or release, handover failure, and handover success; and
the third communication device executes a fifth operation according to the coordination configuration information and the processing result of the channel.

The fifth operation may include at least one of the following:
in a case that the second channel fails or is released, at least one of the following is executed: the first channel is rejected or released, the QoS policy mapping the first channel is rejected or released, and the first QoS policy is rejected or released;
in a case that establishment of the second channel fails, at least one of the following is executed: the first channel is rejected or released, the QoS policy mapping the first channel is rejected, released, or deleted, the first QoS policy is rejected, released, or deleted, failure of the QoS policy mapping the first channel is notified, and failure of the first QoS policy is notified;
in a case that handover of the second channel fails, at least one of the following is executed: the first channel is rejected or released, the first channel is not handed over or is rejected to be handed over, the QoS policy mapping the first channel is rejected, released, or deleted, the first QoS policy is rejected, released, or deleted, failure of the QoS policy mapping the first channel is notified, and failure of the first QoS policy is notified;
in a case that a resource of the second channel is preempted or released, at least one of the following is executed: the first channel is rejected or released, the QoS policy mapping the first channel is rejected, released, or deleted, the first QoS policy is rejected, released, or deleted, failure of the QoS policy mapping the first channel is notified, and failure of the first QoS policy is notified;
in a case that establishment of any channel in the first channel group fails or any channel in the first channel group is released, at least one of the following is executed: other channels or all channels in the first channel group are rejected or released, the QoS policy mapping a channel in the first channel group is rejected, released, or deleted, the first QoS policy group is rejected, released, or deleted, failure of the QoS policy mapping a channel in the first channel group is notified, and failure of other QoS policies or all QoS policies in the first QoS policy group is notified;
in a case that establishment of any channel in the first channel group fails, at least one of the following is executed: other channels or all channels in the first channel group are rejected or released, a QoS policy mapping the first channel group is rejected, released, or deleted, and the first QoS policy group is rejected, released, or deleted;
in a case that handover of any channel in the first channel group fails, at least one of the following is executed: other channels or all channels in the first channel group are rejected or released, any channel in the first channel group is rejected to be handed over, the QoS policy mapping a channel in the first channel group is rejected, released, or deleted, the first QoS policy group is rejected, released, or deleted, failure of the QoS policy mapping a channel in the first channel group is notified, and failure of other QoS policies or all QoS policies in the first QoS policy group is notified; and
in a case that a resource of any channel in the first channel group is preempted or released, at least one of the following is executed: the other channels or all the channels in the first channel group are rejected or released, failure of the QoS policy mapping a channel in the first channel group is notified, and failure of the other QoS policies or all the QoS policies in the first QoS policy group is notified.

It is not difficult to understand that by means of the above fifth operation, common establishment and release of the channel associated/dependent may be ensured.

In an implementation, the third communication device (for example, the SMF) may acquire the processing result of the channel from a fifth source end. The fifth source end includes at least one of the following: the RAN network element, a sixth CN network element (for example, another SMF), etc.

In an implementation, the first channel succeeds (establishment succeeds, handover succeeds, and/or resource allocation succeeds (for example, mapping of a radio bearer succeeds)). Therefore, it is not difficult to understand that in a case of failure of the second channel (establishment failure, handover failure, release, and/or resource allocation failure), it is required to release the first channel (for example, a context of the first channel) or a resource of the first channel.

In an implementation, other channels in the first channel group succeed (establishment succeeds, handover succeeds, and/or resource allocation succeeds (for example, mapping of a radio bearer succeeds)). Therefore, it is not difficult to understand that in a case of failure of any channel in the first channel group (establishment failure, handover failure, release, and/or resource allocation failure), it is required to release the other channels or all the channels (for example, a context of the first channel) in the first channel group or resources of the other channels in the first channel group.

In an implementation, when the first channel and the second channel are generated by the SMF1 and the SMF2 respectively, the SMF1 may order a processing result of the second channel from the SMF2, so as to acquire the processing result of the second channel. The SMF 1 may acquire a processing result of the first channel from the SMF1. If processing of the first channel succeeds, and processing of the second channel fails, the SMF1 may release the first channel to the SMF 1.

Optionally, the method for processing a service in the embodiment may further include at least one of the following:
the third communication device determines a processing result of the QoS policy; and
the third communication device transmits the processing result of the QoS policy, where the processing result of the QoS policy is configured to indicate any one of the following: the QoS policy succeeds, the QoS policy fails, and the QoS policy is released.

In an implementation, the third communication device transmits the processing result of the QoS policy to a fourth target end. The fourth target end includes at least one of the following: the second communication device, the second CN network element (for example, the PCF), etc.

In an implementation, the step of determining a processing result of the QoS policy includes the processing result of the QoS policy is determined according to the processing result of the channel. For example, if the channel mapped to the QoS policy fails, it is deemed that the QoS policy fails. For example, if the channel mapped to the QoS policy is released, it is deemed that the QoS policy is released or fails.

It is not difficult to understand that through the embodiment of the disclosure, coordination of multiple data flows (for example, data flows of a multi-modal service) may be supported, and simultaneous establishment and simultaneous release of multiple data flows (for example, data flows of a multi-modal service) may be further supported.

With reference to Fig. 5, a method for processing a service is provided in an embodiment of the disclosure. The method is applied to the fourth communication device. The fourth communication device includes, but is not limited to, a CN network element (for example, including, but not limited to, the AF, the NEF, the time sensitive communication and time synchronization function (Time Sensitive Communication and Time Synchronization function, TSCTSF), a core network network element configured for centralized processing across multiple terminals or across multiple sessions, etc.). When being the CN network element, the fourth communication device may be referred to as a fourth CN network element. The method includes:
Step 51: The fourth communication device transmits first information.

In the embodiment, the first information includes at least one of the following:
a first request message, where the first request message is configured for at least one of the following: making a QoS requirement for a session, making a QoS request for a data flow, requesting coordination processing for a data flow, and requesting coordination processing for data flows in the same data flow group; and
first request information, where the first request information includes at least one of the following: coordination requirement information of a first data flow, coordination requirement information of a second data flow, coordination requirement information of a first data flow group, coordination requirement information of a first QoS request, coordination requirement information of a second QoS request, and coordination requirement information of a first QoS request group.

Optionally, the coordination requirement information of a first data flow includes at least one of the following: description information of the first data flow, an importance parameter of the first data flow, information of a terminal to which the first data flow belongs, and information of the second data flow.

Optionally, the coordination requirement information of a second data flow includes at least one of the following: description information of the second data flow, an importance parameter of the second data flow, information of a terminal to which the second data flow belongs, and information of the first data flow.

Optionally, the coordination requirement information of a first data flow group includes at least one of the following:
identifier information of the first data flow group or a list formed by identification information of each data flow in the first data flow group;
third indication information, where the third indication information is configured to indicate at least one of the following: all data flows in the first data flow group are interdependent, data flows in the first data flow group are interdependent, and all data flows in the first data flow group are required to be processed as a whole; and
information of a third data flow; where
the second data flow is a data flow on which the first data flow is dependent; and the third data flow is a data flow encompassed in the first data flow group.

The coordination requirement information of a first QoS request includes at least one of the following: the first QoS request, an importance parameter of the first QoS request, information of a terminal to which the first QoS request belongs, and the second QoS request.

The coordination requirement information of a second QoS request includes at least one of the following: the second QoS request, an importance parameter of the second QoS request, information of a terminal to which the second QoS request belongs, and the first QoS request.

The coordination requirement information of a first QoS request group includes at least one of the following:
identifier information of the first QoS request group,
a list formed by all QoS requests in the first QoS request group,
third indication information, where the third indication information is configured to indicate at least one of the following: all the QoS requests in the first QoS request group are interdependent, the QoS requests in the first QoS request group are interdependent, and all the QoS requests in the first QoS request group are required to be processed as a whole, where
the second QoS request is a QoS request on which the first QoS request is dependent.

In an implementation, the data flows in the first data flow group are interdependent, and alternatively, all the data flows in the first data flow group are required to be processed as a whole.

In an implementation, the first communication device may transmit the first information to a fifth target end. The fifth target end includes at least one of the following: the second communication device, the second CN network element (for example, the PCF), the third communication device, the third CN network element (for example, the SMF), etc.

In an implementation, the first request information may be transmitted in the QoS request.

In another implementation, the coordination requirement information of a first data flow may be transmitted in a QoS request of the first data flow (which may be referred to as the first QoS request for short).

In yet another implementation, the coordination requirement information of a second data flow may be transmitted in a QoS request of the second data flow (which may be referred to as the second QoS request for short).

In still another implementation, the coordination requirement information of a first data flow group may be transmitted in a QoS request of the first data flow group.

Optionally, the information of the first data flow includes at least one of the following: description information of the information of the first data flow, the information of a terminal to which the first data flow belongs, and the importance parameter of the first data flow; and/or
the information of the second data flow includes at least one of the following: description information of the information of the second data flow, the information of a terminal to which the second data flow belongs, and the importance parameter of the second data flow; and/or
the information of a third data flow includes at least one of the following: description information of the third data flow, information of a terminal to which the third data flow belongs, and an importance parameter of the third data flow; and/or
the identification information of a data flow includes at least one of the following: description information of the data flow, and information of a terminal to which the data flow belongs.

It is not difficult to understand that since the target end of different multi-modal data flows may be one terminal (for example, a speaker of an audio terminal plays audio on one track, and another speaker plays audio on another track) or multiple terminals (for example, an audio terminal plays sound, and a video terminal plays a video), when multiple data flows of the same target terminal are required to be coordinated, it is required to encompass sufficient description information of the data flows in the identifier information of the data flows. However, if multiple data flows of multiple terminals are required to be coordinated, for identification, the identifier information of the data flows includes at least one of the following: description information of the data flows, and information of terminals to which the data flows belong.

Optionally, the first request information is encompassed in the first request message.

Optionally, the first data flow and the second data flow satisfy one of the following: data flows of the same terminal, data flows of different terminals, data flows of the same application server, and data flows of different application servers.

Optionally, any two or more data flows in the first data flow group satisfy one of the following: data flows of the same terminal, data flows of different terminals, data flows of the same application server, and data flows of different application servers.

It is not difficult to understand that the first request information may embody a dependency relationship and importance class information between different data flows.

Optionally, after the step of transmitting the first information, the method for processing a service in the embodiment further includes:
the fourth communication device acquires at least one of the following: a processing result of the first request message, a processing result of the first request information, an operation result of the session, a processing result of the QoS request, and/or a processing result of a QoS request of the data flow; and
the fourth communication device executes a sixth operation according to at least one of the processing result of the first request message, the processing result of the first request information, the operation result of the session, the processing result of the QoS request, and the processing result of a QoS request of the data flow.

The processing result of the first request message includes at least one of the following: success and rejection;
the processing result of the first request information includes at least one of the following: success and rejection;
the operation result of the session includes at least one of the following: success, failure, and release;
the processing result of the QoS request includes at least one of the following: success, failure, and release; and
the processing result of a QoS request of the data flow includes at least one of the following: success, failure, and release;

The sixth operation includes at least one of the following:
in a case of satisfying at least one of conditions that a QoS request of the second data flow fails or is released, the first request message carrying a QoS request of the second data flow is rejected, the first request information encompassing a QoS request of the second data flow is rejected, and a session transmitting a QoS request of the second data flow is released, at least one of the following is executed: a QoS request of the first data flow is released, revoked, or deleted;
in a case of satisfying at least one of conditions that a QoS request of any data flow in the first data flow group fails or is released, the first request message carrying a QoS request of any data flow in the first data flow group is rejected, the first request information encompassing a QoS request of any data flow in the first data flow group is rejected, and a session transmitting a QoS request of any data flow in the first data flow group is released, at least one of the following is executed: QoS requests of other data flows or all data flows in the first data flow group are released, revoked, or deleted, and a QoS request of the first data flow group is released, revoked, or deleted;
in a case of satisfying at least one of conditions that the second QoS request fails or is released, the first request message carrying the second QoS request is rejected, the first request information encompassing the second QoS request is rejected, and a session transmitting the second QoS request is released, at least one of the following is executed: the first QoS request is released, revoked, or deleted; and
in a case of satisfying at least one of conditions that any QoS request in the first QoS request group fails or is released, the first request message carrying any QoS request in the QoS request group is rejected, the first request information encompassing any QoS request in the QoS request group is rejected, and a session transmitting any QoS request in the first QoS request group is released, at least one of the following is executed: other QoS requests or all QoS requests in the first QoS request group are released, revoked, or deleted.

In an implementation, the session is one of the following: the AF session (for example, the AF session corresponding to the PDU session), or the PDU session.

In an implementation, the failure includes being rejected.

Optionally, a terminal address corresponding to the first QoS request and a terminal address corresponding to the second QoS request are different. In an implementation, the first QoS request is carried by one first request message, encompassed in one piece of first request information, and/or transmitted through signaling corresponding to one session. The second QoS request is carried by another first request message, encompassed in another first request message, and/or transmitted through signaling corresponding to another session.

Optionally, a terminal address corresponding to a QoS request A in the first QoS request group and a terminal address corresponding to a QoS request B in the first QoS request group are different. In an implementation, the QoS request A in the first QoS request group is carried by one first request message, encompassed in one piece of first request information, and/or transmitted through signaling corresponding to one session. The QoS request B in the first QoS request group is carried by another first request message, encompassed in another first request message, and/or transmitted through signaling corresponding to another session.

Optionally, a terminal address corresponding to the QoS request of the first data flow and a terminal address corresponding to the QoS request of the second data flow are different. In an implementation, the QoS request of the first data flow is carried by one first request message, encompassed in one piece of first request information, and/or transmitted through signaling corresponding to one session. The QoS request of the second data flow is carried by another first request message, encompassed in another first request message, and/or transmitted through signaling corresponding to another session.

Optionally, a terminal address corresponding to a QoS request of a data flow A in the first data flow group and a terminal address corresponding to a QoS request of a data flow B in the first data flow group are different. In an implementation, the QoS request of a data flow A in the first data flow group is carried by one first request message, encompassed in one piece of first request information, and/or transmitted through signaling corresponding to one session. The QoS request of a data flow B in the first data flow group is carried by another first request message, encompassed in another first request message, and/or transmitted through signaling corresponding to another session.

In an implementation, the QoS request of the first data flow succeeds. Therefore, it is not difficult to understand that in a case that the QoS request of the second data flow fails or is released, it is required to release, revoke, or delete the QoS request of the first data flow.

In an implementation, the other data flows in the first data flow group succeed. Therefore, it is not difficult to understand that in a case that a QoS request of any data flow in the first data flow group fails or is released, it is required to release, revoke, or delete the QoS request of the first data flow.

In an implementation, the fourth communication device (for example, the NEF or the AF) may acquire the processing result of the QoS request from a sixth source end. The sixth source end includes at least one of the following: the second communication device, the second CN network element (for example, one of the following: the PCF and the NEF), etc.

In an implementation, when the coordination requirement information of a first data flow and the coordination requirement information of a second data flow are transmitted to the PCF1 (or the NEF1) and the PCF2 (or the NEF2) respectively, the fourth communication device may acquire a processing result of the QoS request of the first data flow and a processing result of the QoS request of the second data flow from the PCF1 (or the NEF1) and the PCF2 (or the NEF2) respectively. If the processing result of the QoS request of the first data flow indicates success, and the processing result of the QoS request of the second data flow indicates failure, the fourth communication device may execute one of the following on the PCF1 (or the NEF1): the QoS request of the first data flow is released, and the QoS request of the first data flow is revoked or deleted.

Optionally, the first data flow and the second data flow satisfy at least one of the following: data flows of the same task, data flows of the same service, and data flows of the same application.

Optionally, the data flows in the first data flow group satisfy at least one of the following: data flows of the same task, data flows of the same service, and data flows of the same application.

Through the embodiment of the disclosure, coordination of multiple data flows (for example, data flows of a multi-modal service) may be supported, and simultaneous establishment and simultaneous release of multiple data flows (for example, data flows of a multi-modal service) may be further supported.

### Application scenario 1:

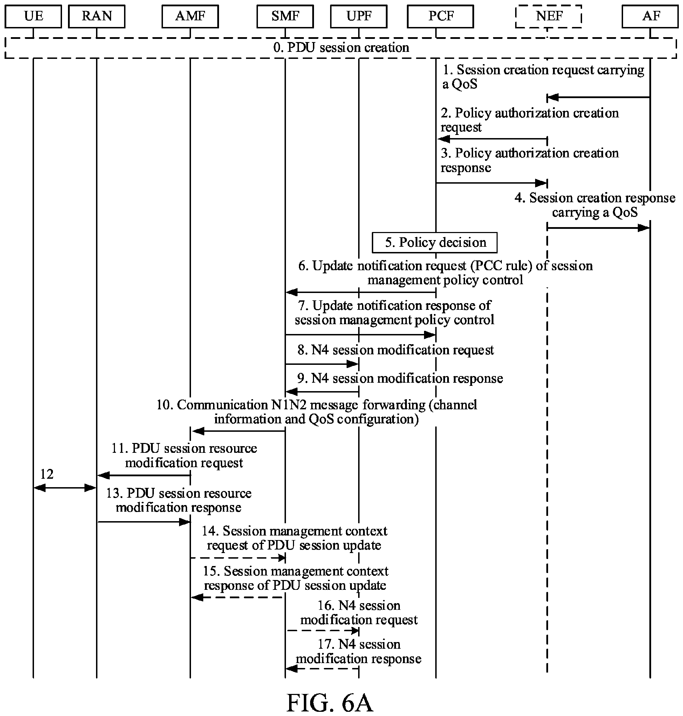

An application scenario 1 in the embodiment of the disclosure primarily describes a multi-flow common establishment and release procedure. As shown in Fig. 6A, the procedure includes:
Step 1: The AF transmits a session creation request carrying a QoS and configured for at least one of the following to the NEF: making a QoS request for a session, making a QoS request for a data flow, requesting coordination processing for a data flow, requesting coordination processing for data flows in the same data flow group, and performing policy authorization. A message of the session creation request may encompass first request information, where the first request information includes at least one of the following: coordination requirement information of a first data flow, coordination requirement information of a second data flow, coordination requirement information of a first data flow group, coordination requirement information of a first QoS request, coordination requirement information of a second QoS request, and coordination requirement information of a first QoS request group.
Step 2: The NEF transmits a policy authorization creation request configured for at least one of the following to the PCF: making a QoS request for a data flow, requesting coordination processing for a data flow, and requesting coordination processing for data flows in the same data flow group. A message of the session creation request may encompass first request information, where the first request information includes at least one of the following: coordination requirement information of a first data flow, coordination requirement information of a second data flow, coordination requirement information of a first data flow group, coordination requirement information of a first QoS request, coordination requirement information of a second QoS request, and coordination requirement information of a first QoS request group.
Step 3: The PCF returns a policy authorization creation response to the NEF.
Step 4: The NEF returns a session creation response carrying a QoS to the AF.
Step 5: The PCF executes a second operation according to the policy authorization creation request and/or the first request information; where the second operation includes at least one of the following:
   a QoS policy is determined for the data flow;
   dependency information of the QoS policy is determined; and
   second information is transmitted, where the second information includes at least one of the following: a first QoS policy, a second QoS policy, and a first QoS policy group.
Step 6: The PCF transmits an update notification request of session management policy control to the SMF, where the update notification request may include first information and/or second information, and the second information includes at least one of the following: a first QoS policy, a second QoS policy, and a first QoS policy group. Reference may be made to the above embodiment for the first QoS policy, the second QoS policy, and/or the first QoS policy group, which will not be repeated herein.
Step 7: The SMF returns an update notification response of session management policy control to the PCF.
Step 8: The SMF executes a fourth operation according to the first information and/or the second information acquired; where the fourth operation may include at least one of the following:
   in a case that the second QoS policy fails or is rejected, at least one of the following is executed: the first QoS policy is rejected, a channel mapped for the first QoS policy is released or revoked, failure of the first QoS policy is notified, and failure of the second QoS policy is notified;
   in a case that any QoS policy in the first QoS policy group is rejected or fails, at least one of the following is executed: other QoS policies or all QoS policies in the first QoS policy group are rejected, channels mapped for other QoS policies in the first QoS policy group are released or revoked, and failure of other QoS policies or all QoS policies in the first QoS policy group is notified;
   a channel is determined for the data flow;
   a channel is determined for the QoS policy;
   an eighth operation is executed according to a processing result of the channel;
   dependency information of the channel is determined; and
   coordination configuration information is transmitted, where the coordination configuration information includes at least one of the following: coordination configuration information of a first channel, coordination configuration information of a second channel, and coordination configuration information of a first channel group.

In an implementation, the SMF transmits the coordination configuration information to the UPF through an N4 session modification request.

Step 9: The UPF returns an N4 session modification response to the SMF.

Step 10: The SMF forwards a communication NIN2 message to the AMF, where the N1N2 message includes coordination configuration information, and the coordination configuration information includes at least one of the following: coordination configuration information of the first channel, coordination configuration information of the second channel, and coordination configuration information of the first channel group. Reference may be made to the above embodiment for specific contents of the coordination configuration information of the first channel, the coordination configuration information of the second channel, and/or the coordination configuration information of the first channel group, which will not be repeated herein.

Step 11: The AMF transmits a PDU session resource modification request to the RAN network element, where the PDU session resource modification request includes coordination configuration information, and the coordination configuration information includes at least one of the following: coordination configuration information of the first channel, coordination configuration information of the second channel, and coordination configuration information of the first channel group.

Step 12: The RAN network element executes a first operation according to the coordination configuration information; where the first operation may include at least one of the following:
the first channel is rejected, released, or deleted in a case that the second channel fails or is released;
in a case that establishment or resource allocation of the second channel fails, at least one of the following is executed: establishment of the first channel is rejected, the first channel is rejected, released, or deleted, a resource allocated to the first channel is released, and allocation of a resource to the first channel is rejected;
in a case that handover of the second channel fails, at least one of the following is executed: a resource allocated to the first channel is released, allocation of a resource to the first channel is rejected, the first channel is rejected or released, and the first channel is not handed over or the first channel is rejected to be handed over;
in a case that a resource of the second channel is preempted or released, at least one of the following is executed: a resource allocated to the first channel is released, allocation of a resource to the first channel is rejected, and the first channel is released;
all channels in the first channel group are processed as a whole;
in a case that any channel in the first channel group fails or is released, other channels or all the channels in the first channel group are rejected or released;
in a case that establishment or resource allocation of any channel in the first channel group fails, at least one of the following is executed: establishment of other channels in the first channel group is rejected, allocation of resources to other channels in the first channel group is rejected, resources allocated to other channels in the first channel group are released, and other channels or all the channels in the first channel group are released;
in a case that handover of any channel in the first channel group fails, at least one of the following is executed: resources allocated to other channels in the first channel group are released, other channels or all the channels in the first channel group are released, and any channel in the first channel group is rejected to be handed over;
in a case that any channel in the first channel group is preempted, at least one of the following is executed: resources allocated to other channels in the first channel group are released, and all the channels or other channels in the first channel group are released;
a resource is preferentially allocated to a primary channel; and
a resource of a secondary channel is preempted in a case that resources are insufficient.
Step 13: The RAN network element transmits a PDU session resource modification response to the AMF.
Step 14: Optionally, the AMF transmits a session management context request of PDU session update to the SMF.
Step 15: Optionally, the SMF returns a session management context response of PDU session update to the AMF.
Step 16: Optionally, the SMF transmits an N4 session modification request to the UPF.
Step 17: Optionally, the UPF returns an N4 session modification response to the SMF.

### Application scenario 2:

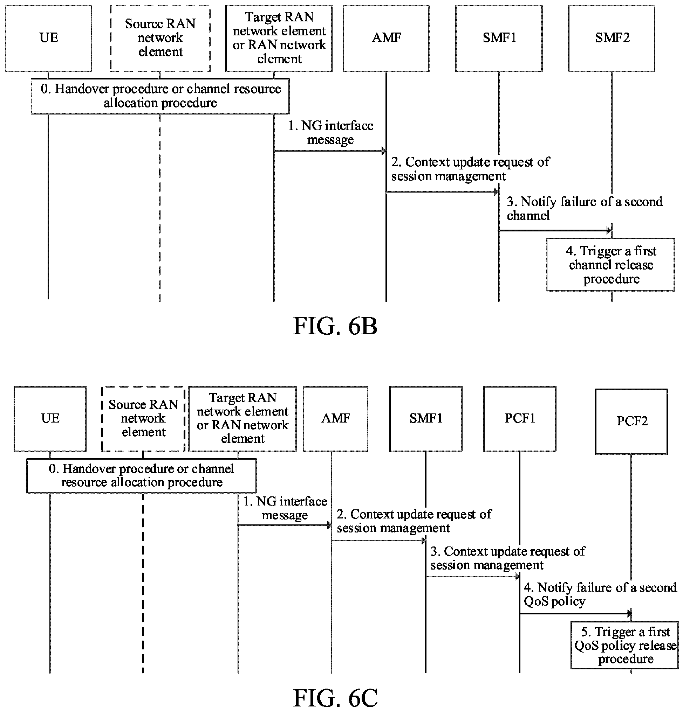

An application scenario 2 in the embodiment of the disclosure primarily describes a channel release procedure. As shown in Fig. 6B, the procedure includes:
Step 0: A target RAN network element and a source RAN network element execute a handover procedure on a channel of the UE, and alternatively, the RAN network element executes a resource allocation procedure on a channel.
Step 1: The target RAN network element or the RAN network element transmits an NG interface message to the AMF. The NG interface message includes a processing result of the channel, where the processing result of the channel includes at least one of the following: establishment of the second channel fails, a resource of the second channel is preempted, the second channel is released, and handover of the second channel fails.
Step 2: The AMF transmits a context update request of session update to the SMF1. The context update request includes a processing result of the channel, and the processing result of the channel includes at least one of the following: establishment of the second channel fails, a resource of the second channel is preempted, the second channel is released, and handover of the second channel fails.
Step 3: The second channel is a channel on which the first channel is dependent. The SMF2 serves as the SMF of the first channel. The SMF1 transmits the processing result of the channel to the SMF2, where the processing result of the channel includes at least one of the following: establishment of the second channel fails, a resource of the second channel is preempted, the second channel is released, and handover of the second channel fails. Before the step, the SMF2 may order the processing result of the second channel from the SMF1.
Step 4: The SMF2 triggers a first channel release procedure according to the coordination configuration information acquired and the processing result of the channel. Reference may be made to the description in the embodiment in Fig. 2 for the coordination configuration information, which will not be repeated herein. Before the step, establishment of the first channel succeeds.

### Application scenario 3:

An application scenario 3 in the embodiment of the disclosure primarily describes a QoS policy release procedure. As shown in Fig. 6C, the procedure includes:
Steps 0-2, which are consistent with steps 0-2 in the application scenario 2 and will not be repeated herein.
Step 3: The SMF 1 transmits a context update request of session update to the PCF1. The context update request includes a processing result of the QoS policy, where the processing result of the QoS policy includes at least one of the following: the second QoS policy fails, and the second QoS policy is released.

The step that the SMF1 determines the processing result of the QoS policy according to the processing result of the channel is as described in the embodiment in Fig. 4, which will not be repeated herein.

Step 4: The second QoS policy is a QoS policy on which the first QoS policy is dependent. The PCF2 serves as the PCF of the first QoS policy. The PCF1 transmits the processing result of the QoS policy to the PCF2, where the processing result of the QoS policy includes at least one of the following: the second QoS policy fails, and the second QoS policy is released. Before the step, the SMF2 may order a processing result of the second QoS policy from the SMF 1.

Step 5: The PCF2 triggers a first QoS policy release procedure according to the second information and the processing result of the QoS policy. Reference may be made to the description in the embodiment in Fig. 3 for the second information, which will not be repeated herein. Before the step, establishment of the first QoS policy succeeds.

### Application scenario 4:

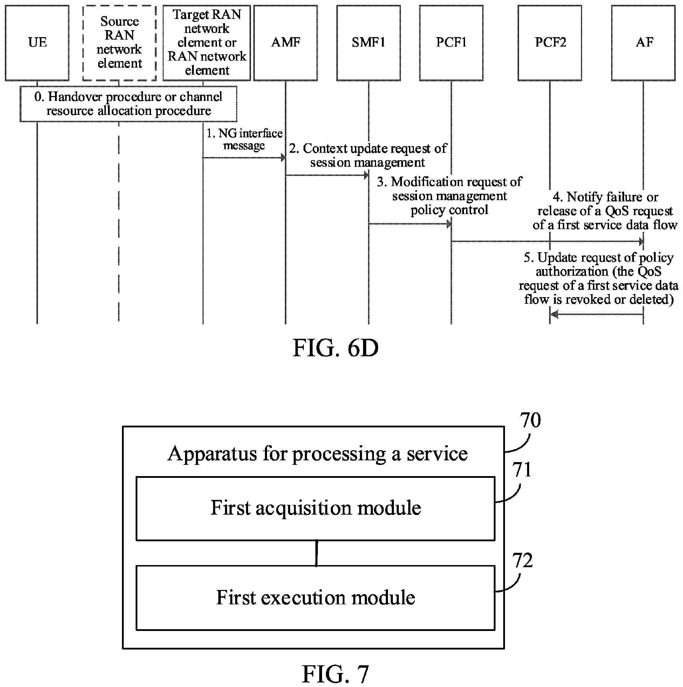

An application scenario 4 in the embodiment of the disclosure primarily describes a data flow release procedure. As shown in Fig. 6D, the procedure includes:
Steps 0-2, which are consistent with steps 0-2 in the application scenario 2 and will not be repeated herein. Step 3: The SMF1 transmits a modification request of session management policy control to the PCF1, where the modification request includes a processing result of the QoS request, and the processing result of the QoS request includes a case that the QoS request of the first data flow fails or is released.

The step that the SMF1 determines the processing result of the QoS policy according to the processing result of the channel is as described in the embodiment in Fig. 4, which will not be repeated herein.

Step 4: The PCF1 transmits the processing result of the QoS request to the AF, so as to notify the case that the QoS request of the first data flow fails or is released. The processing result of the QoS request includes the case that the QoS request of the first data flow fails or is released.

The step that the PCF1 determines the processing result of the QoS request according to the processing result of the QoS policy is as described in the embodiment in Fig. 3, which will not be repeated herein.

Step 5: The AF transmits an update request of policy authorization to the PCF2, where the update request includes the processing result of the QoS request, so that the PCF2 revokes or deletes the QoS request of the first data flow. Before the step, the AF transmits the QoS request of the first data flow to the PCF2 and acquires a successful response.

In the method for processing a service according to the embodiment of the disclosure, an execution entity may be an apparatus for processing a service. In the embodiment of the disclosure, the apparatus for processing a service according to the embodiment of the disclosure is described with the apparatus for processing a service executing the method for processing a service as an example.

With reference to Fig. 7, a schematic structural diagram of an apparatus for processing a service according to an embodiment of the disclosure is shown. The apparatus is applied to the first communication device. As shown in Fig. 7, the apparatus 70 for processing a service includes:
a first acquisition module 71, where the first acquisition module is configured to acquire coordination configuration information, and the coordination configuration information includes at least one of the following: coordination configuration information of a first channel, coordination configuration information of a second channel, and coordination configuration information of a first channel group; and
a first execution module 72, where the first execution module is configured to execute a first operation according to the coordination configuration information; where
the first operation includes at least one of the following:
   the first channel is rejected or released in a case that the second channel fails or is released;
   in a case that establishment or resource allocation of the second channel fails, at least one of the following is executed: establishment of the first channel is rejected, the first channel is rejected or released, a resource allocated to the first channel is released, and allocation of a resource to the first channel is rejected;
   in a case that handover of the second channel fails, at least one of the following is executed: a resource allocated to the first channel is released, allocation of a resource to the first channel is rejected, the first channel is rejected or released, and the first channel is not handed over or the first channel is rejected to be handed over;
   in a case that a resource of the second channel is preempted or released, at least one of the following is executed: a resource allocated to the first channel is released, allocation of a resource to the first channel is rejected, and the first channel is released;
   all channels in the first channel group are processed as a whole;
   in a case that any channel in the first channel group fails or is released, other channels or all the channels in the first channel group are rejected or released;
   in a case that establishment or resource allocation of any channel in the first channel group fails, at least one of the following is executed: establishment of other channels in the first channel group is rejected, allocation of resources to other channels in the first channel group is rejected, resources allocated to other channels in the first channel group are released, and other channels or all the channels in the first channel group are released;
   in a case that handover of any channel in the first channel group fails, at least one of the following is executed: resources allocated to other channels in the first channel group are released, other channels or all the channels in the first channel group are released, and any channel in the first channel group is rejected to be handed over;
   in a case that any channel in the first channel group is preempted, at least one of the following is executed: resources allocated to other channels in the first channel group are released, and all the channels or other channels in the first channel group are released;
   a resource is preferentially allocated to a primary channel; and
   a resource of a secondary channel is preempted in a case that resources are insufficient; where
   the coordination configuration information of a first channel includes at least one of the following: an identifier of the first channel, information of a terminal to which the first channel belongs, information of a superior channel to which the first channel belongs, an importance parameter of the first channel, and information of the second channel;
   the coordination configuration information of a second channel includes at least one of the following: an identifier of the second channel, information of a terminal to which the second channel belongs, information of a superior channel to which the second channel belongs, an importance parameter of the second channel, and information of the first channel; and
   the coordination configuration information of a first channel group includes at least one of the following:
      identifier information of the first channel group or a list formed by identification information of each channel encompassed in the first channel group;
      first indication information, where the first indication information is configured to indicate at least one of the following: all the channels in the first channel group are interdependent, and all the channels in the first channel group are required to be processed as a whole; and
      a list formed by information of a third channel, where
      the second channel is a channel on which the first channel is dependent; and
      the third channel is a channel encompassed in the first channel group.

Optionally, the information of the first channel includes at least one of the following: the identifier of the first channel, the information of a terminal to which the first channel belongs, the information of a superior channel to which the first channel belongs, and the importance parameter of the first channel; and/or
the information of the second channel includes at least one of the following: the identifier of the second channel, the information of a terminal to which the second channel belongs, the information of a superior channel to which the second channel belongs, and the importance parameter of the second channel; and/or
the information of a third channel includes at least one of the following: an identifier of the third channel, information of a terminal to which the third channel belongs, information of a superior channel to which the third channel belongs, and an importance parameter of the third channel; and/or
the identification information of a channel includes at least one of the following: an identifier of the channel, information of a terminal to which the channel belongs, and information of a superior channel to which the channel belongs.

Optionally, the first channel and the second channel satisfy one of the following: the first channel and the second channel are channels in the same superior channel, the first channel and the second channel are channels in different superior channels of the same terminal, and the terminal to which the first channel belongs and the terminal to which the second channel belongs are different; and/or
any two or more channels in the first channel group satisfy one of the following: any two or more channels in the first channel group are channels in the same superior channel, any two or more channels in the first channel group are channels in different superior channels of the same terminal, and any two or more channels in the first channel group are channels of different terminals.

Optionally, the first acquisition module 71 is specifically configured to: acquire coordination information of a second channel group, where the coordination information of a second channel group includes at least one of the following: coordination configuration information of a first channel, coordination configuration information of a second channel, and identifier information of the second channel group.

Optionally, the first acquisition module 71 is further configured to: acquire a processing result of the channel, where the processing result of the channel includes at least one of the following: establishment success, establishment failure, resource preemption or release, handover failure, and handover success; and
the first execution module 72 is specifically configured to: execute the first operation according to the coordination configuration information and the processing result of the channel.

The apparatus 70 for processing a service according to the embodiment of the disclosure may implement each procedure implemented in the method embodiment in Fig. 2, and realize the same technical effect, which will not be repeated herein, so as to avoid repetition.

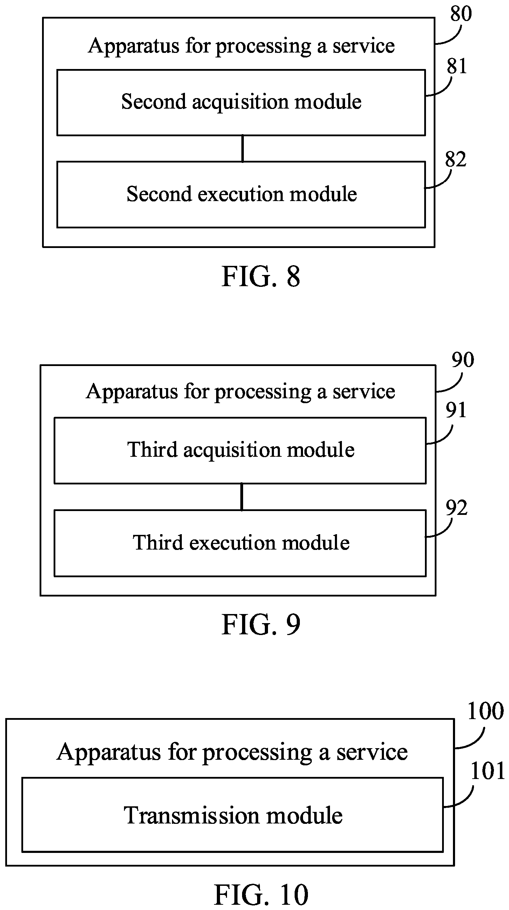

With reference to Fig. 8, a schematic structural diagram of an apparatus for processing a service according to an embodiment of the disclosure is shown. The apparatus is applied to the second communication device. As shown in Fig. 8, the apparatus 80 for processing a service includes:
a second acquisition module 81, where the second acquisition module is configured to acquire first information; and
a second execution module 82, where the second execution module is configured to execute a second operation according to the first information; where
the first information includes at least one of the following:
   a first request message, where the first request message is configured for at least one of the following: making a QoS request for a session, making a QoS request for a data flow, requesting coordination processing for a data flow, requesting coordination processing for data flows in the same data flow group, and performing policy authorization; and
   first request information, where the first request information includes at least one of the following: coordination requirement information of a first data flow, coordination requirement information of a second data flow, coordination requirement information of a first data flow group, coordination requirement information of a first QoS request, coordination requirement information of a second QoS request, and coordination requirement information of a first QoS request group;
   the second operation includes at least one of the following:
      in a case that a QoS request of the second data flow fails or is rejected, at least one of the following is executed: a QoS request of the first data flow is rejected, a QoS policy mapped for a QoS request of the first data flow is revoked, released, or deleted, failure of a QoS request of the first data flow is notified, the first data flow is deactivated, and deactivation of the first data flow is notified;
      in a case that a QoS request of any data flow in the first data flow group fails or is rejected, at least one of the following is executed: QoS requests of other data flows or all data flows in the first data flow group are rejected, QoS policies mapped for QoS requests of other data flows in the first data flow group are revoked, released, or deleted, failure of QoS requests of other data flows or all data flows in the first data flow group is notified, other data flows or all data flows in the first data flow group are deactivated, and deactivation of other data flows or all data flows in the first data flow group is notified;
      in a case that the second QoS request fails or is rejected, at least one of the following is executed: the first QoS request is rejected, a QoS policy mapped for the first QoS request is revoked, released, or deleted, and failure of the first QoS request is notified;
      in a case that any QoS request in the first QoS request group fails or is rejected, at least one of the following is executed: other QoS requests or all QoS requests in the first QoS request group are rejected, QoS policies mapped for other QoS requests in the first QoS request group are revoked, released, or deleted, and failure of other QoS requests or all QoS requests in the first QoS request group is notified;
      a quality of service (QoS) policy is determined for the data flow and/or the QoS request;
      a seventh operation is executed according to a processing result of the QoS policy;
      dependency information of the QoS policy is determined; and
      second information is transmitted, where the second information includes at least one of the following: a first QoS policy, a second QoS policy, and a first QoS policy group;
      the first QoS policy includes at least one of the following: an identifier of the first QoS policy, an importance parameter of the first QoS policy, related information of the second QoS policy, and information of the second data flow;
      the second QoS policy includes at least one of the following: an identifier of the second QoS policy, an importance parameter of the second QoS policy, related information of the first QoS policy, and information of the first data flow;
      information of the first QoS policy group includes at least one of the following:
      identifier information of the first QoS policy group or a list formed by identification information of each QoS policy encompassed in the first QoS policy group;
      second indication information, where the second indication information is configured to indicate at least one of the following: all QoS policies in the first QoS policy group are interdependent, all QoS policies in the first QoS policy group are required to be processed as a whole, all data flows in the first QoS policy group are interdependent, and all data flows in the first QoS policy group are required to be processed as a whole; and
      a list formed by a third QoS policy, where
      the third QoS policy includes at least one of the following: an identifier of the third QoS policy, information of a terminal to which the third QoS policy belongs, information of a PDU session to which the third QoS policy belongs, and an importance parameter of the third QoS policy;
      the second QoS policy is a QoS policy on which the first QoS policy is dependent;
      the third QoS policy is a QoS policy encompassed in the first QoS policy group; and
      the second data flow is a data flow on which the first data flow is dependent; and
      the seventh operation includes at least one of the following:
         in a case that the second QoS policy fails or is released, at least one of the following is executed: the first QoS policy is rejected, released, revoked, or deleted, a third QoS request is rejected, released, or deleted, failure of a third QoS request is notified, the first data flow is deactivated, and deactivation of the first data flow is notified, where the third QoS request is one of the following: the QoS request of the first data flow, the first QoS request, and a QoS request mapping the first QoS policy; and
         in a case that any QoS policy in the first QoS policy group fails or is released, at least one of the following is executed: other QoS policies or all QoS policies in the first QoS policy group are rejected, released, revoked, or deleted, a fourth QoS request is rejected, released, or deleted, failure of a fourth QoS request is notified, other data flows or all data flows in the first data flow group are deactivated, and deactivation of other data flows or all data flows in the first data flow group is notified, where the fourth QoS request is one of the following: a QoS request mapping a QoS policy in the first QoS policy group, a QoS request of the first data flow group, and a QoS request of the first QoS request group.

The first QoS policy group is one of the following: one or more QoS policies corresponding to the data flows in the first data flow group, and one or more QoS policies corresponding to the QoS requests in the first QoS request group.

In an implementation, after the step that a quality of service (QoS) policy is determined for the data flow and/or the QoS request, the step that seventh operation is executed according to a processing result of the QoS policy is executed.

In an implementation, the second source end is notified of at least one of the following: the third QoS request fails, the fourth QoS request fails, the first data flow is deactivated, and the other data flows or all the data flows in the first data flow group are deactivated.

The second source end acquires the first information, where the second source end includes at least one of the following: the fourth communication device, the fourth CN network element (for example, one of the following: the AF and the NEF), etc.

Optionally, the step that a quality of service (QoS) policy is determined for the data flow and/or the QoS request includes at least one of the following:
in a case that authorization of the QoS requests of all the data flows in the first data flow group succeeds, QoS policies are determined for the QoS requests of the data flows in the first data flow group; and
in a case that the QoS request of the first data flow succeeds (for example, the QoS policy corresponding to the QoS request succeeds, and alternatively, authorization of the QoS request succeeds), and authorization of the QoS request of the second data flow succeeds, a QoS policy is determined for the QoS request of the first data flow.

In an implementation, a step that the first QoS policy is transmitted includes: the second QoS policy and the first QoS policy are transmitted. For example, it is meaningful to transmit the first QoS policy on the premise of transmitting the second QoS policy.

In an implementation, a step that the first QoS policy group is transmitted includes: the first QoS policy group is transmitted in a case that authorization of the QoS requests of all the data flows in the first data flow group succeeds. In this case, the first QoS policy group may be one of the following: one or more QoS policies corresponding to the data flows in the first data flow group, and one or more QoS policies corresponding to the QoS requests in the first QoS request group.

In an implementation, the first QoS policy is one of the following: the QoS policy corresponding to the first data flow, and the QoS policy corresponding to the QoS request of the first data flow.

In an implementation, the second QoS policy is one of the following: the QoS policy corresponding to the second data flow, and the QoS policy corresponding to the QoS request of the second data flow.

In an implementation, the step that a quality of service (QoS) policy is determined for the data flow includes a quality of service (QoS) policy is determined for the QoS request of the data flow.

In an implementation, the data flows in the first data flow group are interdependent, and alternatively, all the data flows in the first data flow group are required to be processed as a whole.

Optionally, the first QoS request and the second QoS request may be QoS requests in the same AF session or different AF sessions.

Optionally, the first QoS request and/or the second QoS request are/is: QoS requirements/a QoS requirement in the AF session.

In an implementation, the second QoS request is a QoS request on which the first QoS request is dependent. For example, the second QoS request takes a role only if the first QoS request succeeds.

In an implementation, a first QoS requirement is dependent on a second QoS requirement.

Optionally, the first QoS request group includes one of the following: a list formed by two or more QoS requests. The QoS requirements in the first QoS request group may belong to the same AF session or different AF sessions.

In an implementation, the QoS requests in the first QoS request group are interdependent, and alternatively, all the QoS requests in the QoS request group are required to be processed as a whole.

In an implementation, the QoS request includes one of the following: the first QoS request, the second QoS request, and the first QoS request group.

Optionally, the related information of the first QoS policy includes at least one of the following: the identifier of the first QoS policy, information of a terminal to which the first QoS policy belongs, information of a superior QoS policy to which the first QoS policy belongs, and the importance parameter of the first QoS policy; and/or
the related information of the second QoS policy includes at least one of the following: the identifier of the second QoS policy, information of a terminal to which the second QoS policy belongs, information of a superior QoS policy to which the second QoS policy belongs, and the importance parameter of the second QoS policy; and/or
the identification information of a QoS policy includes at least one of the following: an identifier of the QoS policy, information of a terminal to which the QoS policy belongs, and information of a superior QoS policy to which the QoS policy belongs.

Optionally, the step that a QoS policy is determined for the data flow includes at least one of the following:
the same QoS policy is mapped for the first data flow and the second data flow;
the same QoS policy is mapped for data flows having a dependency relationship;
dependency information of the QoS policy is determined;
an importance class requirement of the data flow is mapped into the importance parameter of the QoS policy;
a QoS parameter of the QoS policy is mapped according to a QoS parameter requirement of the data flow;
the same QoS policy is mapped for the first QoS request and the second QoS request;
the same QoS policy is mapped for QoS requests having a dependency relationship,
an importance class requirement of the QoS request is mapped into the importance parameter of the QoS policy; and
a QoS parameter of the QoS policy is mapped according to a QoS parameter requirement of the QoS request.

Optionally, the step that the same QoS policy is mapped for the first data flow and the second data flow, and/or the step that a QoS parameter of the QoS policy is mapped according to a QoS parameter requirement of the data flow include/includes: in a case that QoS identifiers mapped to QoS parameter requirements of the first data flow and the second data flow are different, and alternatively, QoS parameter requirements of the first data flow and the second data flow are different, the QoS parameter of the QoS policy is mapped according to a stricter QoS parameter requirement of the first data flow and the second data flow; and/or
the step that the same QoS policy is mapped for data flows having a dependency relationship, and/or the step that a QoS parameter of the QoS policy is mapped according to a QoS parameter requirement of the data flow include/includes: in a case that QoS identifiers mapped to the QoS parameter requirements of the data flows having a dependency relationship are different, and alternatively, the QoS parameter requirements of the data flows having a dependency relationship are different, the QoS policy is mapped according to a strictest QoS parameter requirement among all QoS parameter requirements; and/or
the step that the same QoS policy is mapped for the first QoS request and the second QoS request, and/or the step that a QoS parameter of the QoS policy is mapped according to a QoS parameter requirement of the QoS request include/includes: in a case that QoS identifiers mapped to QoS parameter requirements of the first QoS request and the second QoS request are different, and alternatively, QoS parameter requirements of the first QoS request and the second QoS request are different, the QoS parameter of the QoS policy is mapped according to a stricter QoS parameter requirement of the first QoS request and the second QoS request; and/or
the step that the same QoS policy is mapped for QoS requests having a dependency relationship, and/or the step that a QoS parameter of the QoS policy is mapped according to a QoS parameter requirement of the QoS request include/includes: in a case that QoS identifiers mapped to QoS parameter requirements of the QoS requests having a dependency relationship are different, and alternatively, QoS parameter requirements of the QoS requests having a dependency relationship are different, the QoS policy is mapped according to a strictest QoS parameter requirement among all QoS parameter requirements.

Optionally, the step that dependency information of the QoS policy is determined includes at least one of the following:
in a case that a data flow A is dependent on a data flow B, at least one of the following is determined: the first QoS policy includes a QoS policy mapped to the data flow A, the second QoS policy includes a QoS policy mapped to the data flow B, the second data flow in the first QoS policy includes the data flow A, and the first data flow in the second QoS policy includes the data flow B;
in a case that the first data flow is a data flow A, the data flow A is dependent on a data flow B, and the data flow B is dependent on a data flow C, at least one of the following is determined: the second QoS policy includes a QoS policy mapped to the data flow B and a QoS policy mapped to the data flow C, and the second data flow in the first QoS policy includes the data flow B and the data flow C;
in a case that the second data flow is a data flow C, a data flow A is dependent on a data flow B, and the data flow B is dependent on the data flow C, at least one of the following is determined: the first QoS policy includes a QoS policy mapped to the data flow A and a QoS policy mapped to the data flow B, and the first data flow in the second QoS policy includes the data flow A and the data flow B;
in a case that a data flow D and a data flow E are interdependent, the first data flow is the data flow D, and the first QoS policy is a QoS policy mapped to the data flow D, at least one of the following is determined: the second QoS policy includes a QoS policy mapped to the data flow E, and the second data flow in the first QoS policy includes the data flow E;
in a case that a data flow D and a data flow E are interdependent, the first data flow is the data flow E, and the first QoS policy is a QoS policy mapped to the data flow E, at least one of the following is determined: the second QoS policy includes a QoS policy mapped to the data flow D, and the second data flow in the first QoS policy includes the data flow D;
the first QoS policy group is generated in a case that a data flow D and a data flow E are interdependent, where the first QoS policy group includes a QoS policy mapped to the data flow D and a QoS policy mapped to the data flow E; and
the first QoS policy group is mapped for the first data flow group; and
in a case that a QoS request A is dependent on a QoS request B, at least one of the following is determined: the first QoS policy includes a QoS policy mapped to the QoS request A, the second QoS policy includes a QoS policy mapped to the QoS request B, the second QoS request in the first QoS policy includes the QoS request A, and the first QoS request in the second QoS policy includes the QoS request B;
in a case that the first QoS request is a QoS request A, the QoS request A is dependent on a QoS request B, and the QoS request B is dependent on a QoS request C, at least one of the following is determined: the second QoS policy includes a QoS policy mapped to the QoS request B and a QoS policy mapped to the QoS request C, and the second QoS request in the first QoS policy includes the QoS request B and the QoS request C;
in a case that the second QoS request is a QoS request C, a QoS request A is dependent on a QoS request B, and the QoS request B is dependent on the QoS request C, at least one of the following is determined: the first QoS policy includes a QoS policy mapped to the QoS request A and a QoS policy mapped to the QoS request B, and the first QoS request in the second QoS policy includes the QoS request A and the QoS request B;
in a case that a QoS request D and a QoS request E are interdependent, the first QoS request is the QoS request D, and the first QoS policy is a QoS policy mapped to the QoS request D, at least one of the following is determined: the second QoS policy includes a QoS policy mapped to the QoS request E, and the second QoS request in the first QoS policy includes the QoS request E;
in a case that a QoS request D and a QoS request E are interdependent, the first QoS request is the QoS request E, and the first QoS policy is a QoS policy mapped to the QoS request E, at least one of the following is determined: the second QoS policy includes a QoS policy mapped to the QoS request D, and the second QoS request in the first QoS policy includes the QoS request D;
the first QoS policy group is generated in a case that a QoS request D and a QoS request E are interdependent, where the first QoS policy group includes a QoS policy mapped to the QoS request D and a QoS policy mapped to the QoS request E; and
the first QoS policy group is mapped for the first QoS request group.

The first QoS policy is a QoS policy mapped for the first data flow and/or the first QoS request; and
the second QoS policy is a QoS policy mapped for the second data flow and/or the second QoS request.

In an implementation, the QoS policies in the first QoS policy group are interdependent, and alternatively, all the QoS policies in the first QoS policy group are required to be processed as a whole.

In an implementation, the second QoS request is a QoS request on which the first QoS request is dependent. For example, the second QoS request takes a role only if the first QoS request succeeds.

Optionally, the operation that the first QoS policy group is mapped for the first data flow group includes: the first QoS policy group includes the third QoS policy; where
the third QoS policy is a QoS policy mapped for a third data flow; and
the third data flow is a data flow in the first data flow group.

Optionally, the second acquisition module 81 is further configured to: acquire a processing result of the QoS policy, where the processing result of the QoS policy includes at least one of the following: success, failure, and release.

The second execution module 82 is further configured to: execute a third operation according to the second information and/or the processing result of the QoS policy.

The third operation includes at least one of the following:
in a case that the second QoS policy fails or is released, at least one of the following is executed: the first QoS policy is rejected, released, revoked, or deleted, the QoS request of the first data flow is rejected, released, or deleted, the first QoS request is rejected, released, or deleted, a QoS request mapping the first QoS policy is rejected, released, or deleted, and failure of a third QoS request is notified, where the third QoS request is one of the following: the QoS request of the first data flow, the first QoS request, and the QoS request mapping the first QoS policy; and
in a case that any QoS policy in the first QoS policy group fails or is released, at least one of the following is executed: other QoS policies or all QoS policies in the first QoS policy group are rejected, released, revoked, or deleted, a QoS request mapping a QoS policy in the first QoS policy group is rejected, released, or deleted, a QoS request of the first data flow group is rejected, released, or deleted, a QoS request of the first QoS request group is rejected, released, or deleted, and failure of a fourth QoS request is notified, where the fourth QoS request is one of the following: the QoS request mapping a QoS policy in the first QoS policy group, the QoS request of the first data flow group, and the QoS request of the first QoS request group.

Optionally, the second execution module 82 is further configured for at least one of the following:
determining a processing result of the QoS request; and
transmitting the processing result of the QoS request, where the processing result of the QoS request is configured to indicate any one of the following: the QoS request succeeds, the QoS request fails, and the QoS request is released.

The apparatus 80 for processing a service according to the embodiment of the disclosure may implement each procedure implemented in the method embodiment in Fig. 3, and realize the same technical effect, which will not be repeated herein, so as to avoid repetition.

With reference to Fig. 9, a schematic structural diagram of an apparatus for processing a service according to an embodiment of the disclosure is shown. The apparatus is applied to the third communication device. As shown in Fig. 9, the apparatus 90 for processing a service includes:
a third acquisition module 91, where the third acquisition module is configured to acquire first information and/or second information; and
a third execution module 92, where the third execution module is configured to execute a fourth operation according to the first information and/or the second information; where
the first information includes at least one of the following:
   a first request message, where the first request message is configured for at least one of the following: making a QoS request for a session, making a QoS requirement for a data flow, requesting coordination processing for a data flow, requesting coordination processing for data flows in the same data flow group, and performing policy authorization; and
   first request information, where the first request information includes at least one of the following: coordination requirement information of a first data flow, coordination requirement information of a second data flow, coordination requirement information of a first data flow group, coordination requirement information of a first QoS request, coordination requirement information of a second QoS request, and coordination requirement information of a first QoS request group;
   the second information includes at least one of the following: a first QoS policy, a second QoS policy, and a first QoS policy group;
   the fourth operation includes at least one of the following:
      in a case that the second QoS policy fails or is rejected, at least one of the following is executed: the first QoS policy is rejected, a channel mapped for the first QoS policy is released or revoked, failure of the first QoS policy is notified, and failure of the second QoS policy is notified;
      in a case that any QoS policy in the first QoS policy group is rejected or fails, at least one of the following is executed: other QoS policies or all QoS policies in the first QoS policy group are rejected, channels mapped for other QoS policies in the first QoS policy group are released or revoked, and failure of other QoS policies or all QoS policies in the first QoS policy group is notified;
      a channel is determined for the data flow;
      a channel is determined for the QoS policy;
      an eighth operation is executed according to a processing result of the channel;
      dependency information of the channel is determined; and
      coordination configuration information is transmitted, where the coordination configuration information includes at least one of the following: coordination configuration information of a first channel, coordination configuration information of a second channel, and coordination configuration information of a first channel group;
      the coordination configuration information of a first channel includes at least one of the following: an identifier of the first channel, information of a terminal to which the first channel belongs, information of a superior channel to which the first channel belongs, an importance parameter of the first channel, and information of the second channel;
      the coordination configuration information of a second channel includes at least one of the following: an identifier of the second channel, information of a terminal to which the second channel belongs, information of a superior channel to which the second channel belongs, an importance parameter of the second channel, and information of the first channel; and
      the coordination configuration information of a first channel group includes at least one of the following:
         identifier information of the first channel group or a list formed by identification information of each channel encompassed in the first channel group;
         first indication information, where the first indication information is configured to indicate at least one of the following: all channels in the first channel group are interdependent, and all channels in the first channel group are required to be processed as a whole; and
         a list formed by information of a third channel, where
         the second channel is a channel on which the first channel is dependent; and
         the third channel is a channel encompassed in the first channel group; and
         the eighth operation includes at least one of the following:
            in a case of satisfying at least one of conditions that the second channel fails, the second channel is released, and a resource of the second channel is preempted, at least one of the following is executed: the first channel is rejected, released, revoked, or is not handed over, a QoS policy mapping the first channel is rejected or released, the first QoS policy is rejected or released, failure of a QoS policy mapping the first channel is notified, and failure of the first QoS policy is notified; and
            in a case of satisfying at least one of conditions that any channel in the first channel group fails, any channel is released, and a resource of any channel is preempted, at least one of the following is executed: other channels or all the channels in the first channel group are rejected, released, revoked, or are not handed over, a QoS policy mapping a channel in the first channel group is rejected or released, the first QoS policy group is rejected or released, failure of a QoS policy mapping a channel in the first channel group is notified, and failure of the other QoS policies or all the QoS policies in the first QoS policy group is notified.

The first channel group is one of the following: one or more channels corresponding to the QoS policies in the first QoS policy group, and one or more data flows corresponding to the data flows in the first data flow group.

In an implementation, after the step that a channel is determined for the QoS policy, the step that an eighth operation is executed according to a processing result of the channel is executed.

In an implementation, the fourth source end is notified of at least one of the following: the QoS policy mapping the first channel fails, the first QoS policy fails, the second QoS policy fails, the QoS policy mapping a channel in the first channel group fails, and the first QoS policy group fails.

In an implementation, the fourth source end includes at least one of the following: the second communication device, the second CN network element (for example, one of the following: the PCF and the NEF), etc.

In an implementation, the third communication device acquires the second information from the fourth source end. The fourth source end includes at least one of the following: the second communication device, the second CN network element (for example, one of the following: the PCF and the NEF), etc.

Optionally, the step that a channel is determined for the QoS policy includes at least one of the following:
in a case that authorization of all the QoS policies in the first QoS policy group succeeds, channels are determined for the QoS policies in the first QoS policy group; and
in a case that the first QoS policy succeeds (for example, establishment or authorization of a corresponding channel succeeds), and authorization of the second QoS policy succeeds, a channel is determined for the first QoS policy.

Optionally, the step that a channel is determined for the data flow includes at least one of the following:
in a case that authorization of all the data flows in the first data flow group succeeds, channels are determined for the data flows in the first data flow group; and
in a case that the first data flow succeeds (for example, establishment or authorization of a corresponding channel succeeds), and authorization of the second data flow succeeds, a channel is determined for the first data flow.

In an implementation, a step that the coordination configuration information of a first channel is transmitted includes: the coordination configuration information of a first channel and the coordination configuration information of a second channel are transmitted. For example, it is meaningful to transmit the coordination configuration information of a first channel on the premise of transmitting the coordination configuration information of a second channel.

In an implementation, a step that the coordination configuration information of a first channel group is transmitted includes: the coordination configuration information of a first channel group is transmitted in a case that authorization of all the data flows in the first data flow group succeeds, and/or authorization of all the QoS policies in the first QoS policy group succeeds. In this case, one or more channels correspond to the QoS policies in the first QoS policy group, and one or more data flows correspond to the data flows in the first data flow group.

In an implementation, the QoS policies in the first QoS policy group are interdependent, and alternatively, all the QoS policies in the first QoS policy group are required to be processed as a whole.

In an implementation, the second QoS request is a QoS request on which the first QoS request is dependent. For example, the second QoS request takes a role only if the first QoS request succeeds.

Optionally, the step that a channel is determined for the data flow includes at least one of the following:
the same channel is mapped for the first data flow and the second data flow, and alternatively, individual channels are mapped for the first data flow and the second data flow respectively;
no channels/channel mapped to the first data flow and/or the second data flow are/is configured for other data flows except for the first data flow and/or the second data flow;
the same channel is mapped for data flows having a dependency relationship; and
the dependency information of the channel is determined.

Optionally, the operation that dependency information of the channel is determined includes at least one of the following:
in a case that a QoS policy A is dependent on a QoS policy B, at least one of the following is determined: the first channel includes a channel mapped to the QoS policy A, and the second channel includes a channel mapped to the QoS policy B;
in a case that the first QoS policy is a QoS policy A, the QoS policy A is dependent on a QoS policy B, and the QoS policy B is dependent on a QoS policy C, at least one of the following is determined: the second channel includes a channel mapped to the QoS policy B and a channel mapped to the QoS policy C;
in a case that the second QoS policy is a QoS policy C, a QoS policy A is dependent on a QoS policy B, and the QoS policy B is dependent on the QoS policy C, at least one of the following is determined: the first channel includes a channel mapped to the QoS policy A and a channel mapped to the QoS policy B;
in a case that a QoS policy D and a QoS policy E are interdependent, the first QoS policy is the QoS policy D, and the first channel is a channel mapped to the QoS policy D, at least one of the following is determined: the second channel includes a channel mapped to the QoS policy E;
in a case that a QoS policy D and a QoS policy E are interdependent, the first QoS policy is the QoS policy E, and the first channel is a channel mapped to the QoS policy E, at least one of the following is determined: the second channel includes a channel mapped to the QoS policy D;
the first channel group is generated in a case that a QoS policy D and a QoS policy E are interdependent, where the first channel group includes a channel mapped to the QoS policy D and a channel mapped to the QoS policy E; and
the first channel group is mapped for the first QoS policy group, where
the first channel is a channel mapped to the first QoS policy; and
the second channel is a channel mapped to the second QoS policy.

Optionally, the step that a channel is determined for the QoS policy includes at least one of the following:
the same channel is mapped for the first QoS policy and the second QoS policy, and alternatively, individual channels are mapped for the first QoS policy and the second QoS policy respectively;
no channels/channel mapped to the first QoS policy and/or the second QoS policy are/is configured for other QoS policies except for the first QoS policy and/or the second QoS policy;
the same channel is mapped for QoS policies having a dependency relationship; and
the dependency information of the channel is determined.

Optionally, the step that the same channel is mapped for the first QoS policy and the second QoS policy includes: in a case that QoS parameters of the first QoS policy and the second QoS policy are different, the channel is mapped according to a stricter QoS parameter of the first QoS policy and the second QoS policy; and/or
the step that the same channel is mapped for QoS policies having a dependency relationship includes: in a case that QoS parameters of the QoS policies having a dependency relationship are different, the channel is mapped according to a strictest QoS parameter among all QoS parameter requirements.

Optionally, the step that dependency information of a channel is determined includes at least one of the following:
in a case that a data flow A is dependent on a data flow B, at least one of the following is determined: the first channel includes a channel mapped to the data flow A, and the second channel includes a channel mapped to the data flow B;
in a case that the first data flow is a data flow A, the data flow A is dependent on a data flow B, and the data flow B is dependent on a data flow C, at least one of the following is determined: the second channel includes a channel mapped to the data flow B and a channel mapped to the data flow C;
in a case that the second data flow is a data flow C, a data flow A is dependent on a data flow B, and the data flow B is dependent on the data flow C, at least one of the following is determined: the first channel includes a channel mapped to the data flow A and a channel mapped to the data flow B;
in a case that a data flow D and a data flow E are interdependent, the first data flow is the data flow D, and the first channel is a channel mapped to the data flow D, at least one of the following is determined: the second channel includes a channel mapped to the data flow E;
in a case that a data flow D and a data flow E are interdependent, the first data flow is the data flow E, and the first channel is a channel mapped to the data flow E, at least one of the following is determined: the second channel includes a channel mapped to the data flow E;
the first channel group is generated in a case that a data flow D and a data flow E are interdependent, where the first channel group includes a channel mapped to the data flow D and a channel mapped to the data flow E; and
the first channel group is mapped for the first data flow group, where
the first channel is a channel mapped to the first data flow; and
the second channel is a channel mapped to the second data flow.

Optionally, the operation that the first channel group is mapped for the first data flow group includes: the first channel group includes a third channel; and/or the operation that the first channel group is mapped for the first QoS policy group includes: the first channel group includes a third channel; and/or the third channel is one of the following: a channel mapped to a third data flow, and a channel mapped to a third QoS policy; the third data flow is any data flow encompassed in the first data flow group; and the third QoS policy is any QoS policy encompassed in the first QoS policy group.

Optionally, the third acquisition module 91 is further configured to: acquire a processing result of the channel, where the processing result of the channel includes at least one of the following: establishment success, establishment failure, resource preemption or release, handover failure, and handover success; and

the third execution module 92 is further configured to: execute a fifth operation according to the coordination configuration information and the processing result of the channel; where
the fifth operation includes at least one of the following:
in a case that the second channel fails or is released, at least one of the following is executed: the first channel is rejected or released, the QoS policy mapping the first channel is rejected or released, and the first QoS policy is rejected or released;
in a case that establishment of the second channel fails, at least one of the following is executed: the first channel is rejected or released, the QoS policy mapping the first channel is rejected or released, the first QoS policy is rejected, released, or deleted, failure of the QoS policy mapping the first channel is notified, and failure of the first QoS policy is notified;
in a case that handover of the second channel fails, at least one of the following is executed: the first channel is rejected or released, the first channel is not handed over or is rejected to be handed over, the QoS policy mapping the first channel is rejected, released, or deleted, the first QoS policy is rejected, released, or deleted, failure of the QoS policy mapping the first channel is notified, and failure of the first QoS policy is notified;
in a case that a resource of the second channel is preempted or released, at least one of the following is executed: the first channel is rejected or released, the QoS policy mapping the first channel is rejected, released, or deleted, the first QoS policy is rejected, released, or deleted, failure of the QoS policy mapping the first channel is notified, and failure of the first QoS policy is notified;
in a case that establishment of any channel in the first channel group fails or any channel in the first channel group is released, at least one of the following is executed: other channels or all channels in the first channel group are rejected or released, the QoS policy mapping a channel in the first channel group is rejected, released, or deleted, the first QoS policy group is rejected, released, or deleted, failure of the QoS policy mapping a channel in the first channel group is notified, and failure of other QoS policies or all QoS policies in the first QoS policy group is notified;
in a case that establishment of any channel in the first channel group fails, at least one of the following is executed: other channels or all channels in the first channel group are rejected or released, the QoS policy mapping the first channel group is rejected, released, or deleted, the first QoS policy group is rejected, released, or deleted, failure of the QoS policy mapping a channel in the first channel group is notified, and failure of other QoS policies or all QoS policies in the first QoS policy group is notified;
in a case that handover of any channel in the first channel group fails, at least one of the following is executed: other channels or all channels in the first channel group are rejected or released, any channel in the first channel group is rejected to be handed over, the QoS policy mapping a channel in the first channel group is rejected, released, or deleted, the first QoS policy group is rejected, released, or deleted, failure of the QoS policy mapping a channel in the first channel group is notified, and failure of other QoS policies or all QoS policies in the first QoS policy group is notified; and
in a case that a resource of any channel in the first channel group is preempted or released, at least one of the following is executed: other channels or all channels in the first channel group are rejected or released.
Optionally, the third execution module 92 is further configured for at least one of the following:
determining a processing result of the QoS policy; and
transmitting the processing result of the QoS policy, where the processing result of the QoS policy is configured to indicate any one of the following: the QoS policy succeeds, the QoS policy fails, and the QoS policy is released.
The apparatus 90 for processing a service according to the embodiment of the disclosure may implement each procedure implemented in the method embodiment in Fig. 4, and realize the same technical effect, which will not be repeated herein, so as to avoid repetition.

With reference to Fig. 10, a schematic structural diagram of an apparatus for processing a service according to an embodiment of the disclosure is shown. The apparatus is applied to the fourth communication device. As shown in Fig. 10, the apparatus 100 for processing a service includes:
a transmission module 101, where the transmission module is configured to transmit first information; where
the first information includes at least one of the following:
   a first request message, where the first request message is configured for at least one of the following: making a QoS request for a session, making a QoS request for a data flow, requesting coordination processing for a data flow, requesting coordination processing for data flows in the same data flow group, and performing policy authorization; and
   first request information, where the first request information includes at least one of the following: coordination requirement information of a first data flow, coordination requirement information of a second data flow, coordination requirement information of a first data flow group, coordination requirement information of a first QoS request, coordination requirement information of a second QoS request, and coordination requirement information of a first QoS request group;
   the coordination requirement information of a first data flow includes at least one of the following: description information of the first data flow, an importance parameter of the first data flow, information of a terminal to which the first data flow belongs, and information of the second data flow;
   the coordination requirement information of a second data flow includes at least one of the following: description information of the second data flow, an importance parameter of the second data flow, information of a terminal to which the second data flow belongs, and information of the first data flow;
   the coordination requirement information of a first data flow group includes at least one of the following:
      identifier information of the first data flow group or a list formed by identification information of each data flow in the first data flow group;
      third indication information, where the third indication information is configured to indicate at least one of the following: all data flows in the first data flow group are interdependent, data flows in the first data flow group are interdependent, and all data flows in the first data flow group are required to be processed as a whole; and
      a list formed by information of a third data flow, where
      the second data flow is a data flow on which the first data flow is dependent; and
      the third data flow is a data flow encompassed in the first data flow group;
      the coordination requirement information of a first QoS request includes at least one of the following: the first QoS request, an importance parameter of the first QoS request, information of a terminal to which the first QoS request belongs, and the second QoS request;
      the coordination requirement information of a second QoS request includes at least one of the following: the second QoS request, an importance parameter of the second QoS request, information of a terminal to which the second QoS request belongs, and the first QoS request; and
      the coordination requirement information of a first QoS request group includes at least one of the following:
         identifier information of the first QoS request group,
         a list formed by all QoS requests in the first QoS request group,
         third indication information, where the third indication information is configured to indicate at least one of the following: all the QoS requests in the first QoS request group are interdependent, the QoS requests in the first QoS request group are interdependent, and all the QoS requests in the first QoS request group are required to be processed as a whole, where
         the second QoS request is a QoS request on which the first QoS request is dependent. For example, the second QoS request takes a role only if the first QoS request succeeds.

In an implementation, the data flows in the first data flow group are interdependent, and alternatively, all the data flows in the first data flow group are required to be processed as a whole.

Optionally, the information of the first data flow includes at least one of the following: description information of the information of the first data flow, the information of a terminal to which the first data flow belongs, and the importance parameter of the first data flow; and/or
the information of the second data flow includes at least one of the following: description information of the information of the second data flow, the information of a terminal to which the second data flow belongs, and the importance parameter of the second data flow; and/or
the information of a third data flow includes at least one of the following: description information of the third data flow, information of a terminal to which the third data flow belongs, and an importance parameter of the third data flow; and/or
the identification information of a data flow includes at least one of the following: description information of the data flow, and information of a terminal to which the data flow belongs.

Optionally, the first request information is encompassed in the first request message.

Optionally, the first data flow and the second data flow satisfy one of the following: data flows of the same terminal, data flows of different terminals, data flows of the same application server, and data flows of different application servers.

Optionally, any two or more data flows in the first data flow group satisfy one of the following: data flows of the same terminal, data flows of different terminals, data flows of the same application server, and data flows of different application servers.

Optionally, the apparatus 100 for processing a service further includes:
a fourth acquisition module, where the fourth acquisition module is configured to acquire at least one of the following: a processing result of the first request message, a processing result of the first request information, an operation result of the session, a processing result of the QoS request, and/or a processing result of a QoS request of the data flow; and
a fourth execution module, where the fourth execution module is configured to execute a sixth operation according to at least one of the processing result of the first request message, the processing result of the first request information, the operation result of the session, the processing result of the QoS request, and/or the processing result of a QoS request of the data flow; where
the processing result of the first request message includes at least one of the following: success and rejection;
the processing result of the first request information includes at least one of the following: success and rejection;
the operation result of the session includes at least one of the following: success, failure, and release;
the processing result of the QoS request includes at least one of the following: success, failure, and release;
the processing result of a QoS request of the data flow includes at least one of the following: success, failure, and release; and
the sixth operation includes at least one of the following:
   in a case of satisfying at least one of conditions that a QoS request of the second data flow fails or is released, the first request message carrying a QoS request of the second data flow is rejected, the first request information encompassing a QoS request of the second data flow is rejected, and a session transmitting a QoS request of the second data flow is released, at least one of the following is executed: a QoS request of the first data flow is released, revoked, or deleted;
   in a case of satisfying at least one of conditions that a QoS request of any data flow in the first data flow group fails or is released, the first request message carrying a QoS request of any data flow in the first data flow group is rejected, the first request information encompassing a QoS request of any data flow in the first data flow group is rejected, and a session transmitting a QoS request of any data flow in the first data flow group is released, at least one of the following is executed: QoS requests of other data flows or all data flows in the first data flow group are released, revoked, or deleted, and a QoS request of the first data flow group is released, revoked, or deleted;
   in a case of satisfying at least one of conditions that the second QoS request fails or is released, the first request message carrying the second QoS request is rejected, the first request information encompassing the second QoS request is rejected, and a session transmitting the second QoS request is released, at least one of the following is executed: the first QoS request is released, revoked, or deleted; and
   in a case of satisfying at least one of conditions that any QoS request in the first QoS request group fails or is released, the first request message carrying any QoS request in the first QoS request group is rejected, the first request information encompassing any QoS request in the first QoS request group is rejected, and a session transmitting any QoS request in the first QoS request group is released, at least one of the following is executed: other QoS requests or all QoS requests in the first QoS request group are released, revoked, or deleted.

Optionally, the first data flow and the second data flow satisfy at least one of the following: data flows of the same task, data flows of the same service, and data flows of the same application.

Optionally, the data flows in the first data flow group satisfy at least one of the following: data flows of the same task, data flows of the same service, and data flows of the same application.

The apparatus 100 for processing a service according to the embodiment of the disclosure may implement each procedure implemented in the method embodiment in Fig. 5, and realize the same technical effect, which will not be repeated herein, so as to avoid repetition.

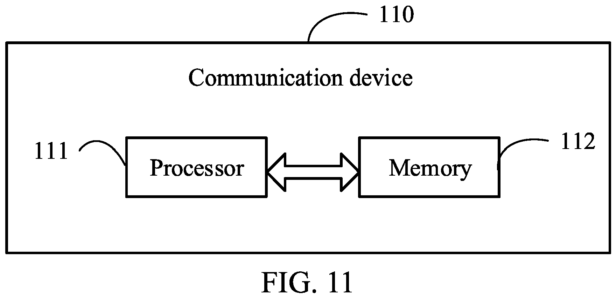

Optionally, as shown in Fig. 11, a communication device 110 is further provided in an embodiment of the disclosure. The communication device includes a processor 111 and a memory 112, where a program or instruction runnable on the processor 111 is stored on the memory 112, and when executed by the processor 111, the program or instruction implements each step in the above embodiment of the method for processing a service, which will not be repeated herein, so as to avoid repetition.

A readable storage medium is further provided in an embodiment of the disclosure. The readable storage medium stores a program or instruction, where when executed by a processor, the program or instruction implements each procedure in the above embodiment of the method for processing a service, and may realize the same technical effect, which will not be repeated herein, so as to avoid repetition.

The processor is the processor in the terminal in the above embodiment. The readable storage medium includes a computer-readable storage medium, such as a computer read only memory (Read Only Memory, ROM), a random access memory (Random Access Memory, RAM), a magnetic disk, and an optical disc.

A chip is further provided in an embodiment of the disclosure. The chip includes a processor and a communication interface, where the communication interface is coupled to the processor, and the processor is configured to run a program or instruction, so as to implement each procedure in the above embodiment of the method for processing a service, and realize the same technical effect, which will not be repeated herein, so as to avoid repetition.

It should be understood that the chip mentioned in the embodiment of the disclosure may also be referred to as a system-level chip, a system chip, a chip system, a chip of a system on chip, etc.

A computer program/program product is further provided in an embodiment of the disclosure. The computer program/program product is stored in a storage medium, and the computer program/program product is executed by at least one processor, so as to implement each procedure in the above embodiment of the method for processing a service, and realize the same technical effect, which will not be repeated herein, so as to avoid repetition.

It should be noted that the terms "include", "comprise", "encompass", or their any other variations herein are intended to cover non-exclusive inclusions. Therefore, processes, methods, articles, or apparatuses including a series of elements further include other elements not explicitly listed or elements inherent to such processes, methods, articles, or apparatuses, except for those elements. Without more limitations, an element defined by the sentence "comprise a..." and "include a..." does not exclude that other identical elements still exist in the processes, methods, articles, or apparatuses including the element. In addition, it should be noted that the scope of the method and apparatus in the implementations of the disclosure is not limited to executing functions in an order shown or discussed, and may further include executing functions in a substantially simultaneous manner or in a reverse order according to the functions involved. For example, the methods described may be executed in an order different from the order described, and various steps may be added, omitted, or combined. In addition, features described with reference to some examples may be combined in other examples.

Through the descriptions in the above implementations, a person skilled in the art can clearly understand that the method in the above embodiment can be implemented by means of software and a necessary general hardware platform, and certainly can also be implemented by means of hardware. In many cases, the former is a better implementation. Based on such understanding, the technical solutions of the disclosure in nature or the part contributing to the related art can be implemented in a form of a computer software product. The computer software product is stored in one storage medium (for example, the ROM/RAM, the magnetic disk, and the optical disc) and includes several instructions for causing one terminal (for example, a mobile phone, a computer, a server, an air conditioner, a network device, etc.) to execute the method in each embodiment of the disclosure.

The embodiments of the disclosure have been described above with reference to the accompanying drawings. However, the disclosure is not limited to the above particular implementations, and the above particular implementations are merely illustrative, but are not restrictive. Those of ordinary skill in the art can also make various forms under the teaching of the disclosure without departing from the spirit of the disclosure and the scope of protection of the claims, and such variations fall within the scope of protection of the disclosure.

## Claims

1. A method for processing a service, comprising:
acquiring, by a first communication device, coordination configuration information, wherein the coordination configuration information comprises at least one of the following: coordination configuration information of a first channel, coordination configuration information of a second channel, and coordination configuration information of a first channel group; and
executing, by the first communication device, a first operation according to the coordination configuration information, wherein
the first operation comprises at least one of the following:
rejecting or releasing the first channel in a case that the second channel fails or is released;
executing, in a case that establishment or resource allocation of the second channel fails, at least one of the following: rejecting establishment of the first channel, rejecting or releasing the first channel, releasing a resource allocated to the first channel, and rejecting allocation of a resource to the first channel;
executing, in a case that handover of the second channel fails, at least one of the following: releasing a resource allocated to the first channel, rejecting allocation of a resource to the first channel, rejecting or releasing the first channel, and not handing over the first channel or rejecting to hand over the first channel;
executing, in a case that a resource of the second channel is preempted or released, at least one of the following: releasing a resource allocated to the first channel, rejecting allocation of a resource to the first channel, and releasing the first channel;
processing all channels in the first channel group as a whole;
rejecting or releasing, in a case that any channel in the first channel group fails or is released, other channels or all the channels in the first channel group;
executing, in a case that establishment or resource allocation of any channel in the first channel group fails, at least one of the following: rejecting establishment of other channels in the first channel group, rejecting allocation of resources to other channels in the first channel group, releasing resources allocated to other channels in the first channel group, and releasing other channels or all the channels in the first channel group;
executing, in a case that handover of any channel in the first channel group fails, at least one of the following: releasing resources allocated to other channels in the first channel group, releasing other channels or all the channels in the first channel group, and rejecting to hand over any channel in the first channel group;
executing, in a case that any channel in the first channel group is preempted, at least one of the following: releasing resources allocated to other channels in the first channel group, and releasing all the channels or other channels in the first channel group;
preferentially allocating a resource to a primary channel; and
preempting a resource of a secondary channel in a case that resources are insufficient;
the coordination configuration information of a first channel comprises at least one of the following: an identifier of the first channel, information of a terminal to which the first channel belongs, information of a superior channel to which the first channel belongs, an importance parameter of the first channel, and information of the second channel;
the coordination configuration information of a second channel comprises at least one of the following: an identifier of the second channel, information of a terminal to which the second channel belongs, information of a superior channel to which the second channel belongs, an importance parameter of the second channel, and information of the first channel; and
the coordination configuration information of a first channel group comprises at least one of the following:
identifier information of the first channel group or a list formed by identification information of each channel encompassed in the first channel group;
first indication information, wherein the first indication information is configured to indicate at least one of the following: all the channels in the first channel group are interdependent, and all the channels in the first channel group are required to be processed as a whole; and
a list formed by information of a third channel, wherein
the second channel is a channel on which the first channel is dependent; and
the third channel is a channel encompassed in the first channel group.

2. The method according to claim 1, wherein
the information of the first channel comprises at least one of the following: the identifier of the first channel, the information of a terminal to which the first channel belongs, the information of a superior channel to which the first channel belongs, and the importance parameter of the first channel; and/or
the information of the second channel comprises at least one of the following: the identifier of the second channel, the information of a terminal to which the second channel belongs, the information of a superior channel to which the second channel belongs, and the importance parameter of the second channel; and/or
the information of a third channel comprises at least one of the following: an identifier of the third channel, information of a terminal to which the third channel belongs, information of a superior channel to which the third channel belongs, and an importance parameter of the third channel; and/or
the identification information of a channel comprises at least one of the following: an identifier of the channel, information of a terminal to which the channel belongs, and information of a superior channel to which the channel belongs.

3. The method according to claim 1 or 2, wherein
the first channel and the second channel satisfy one of the following: the first channel and the second channel are channels in the same superior channel, the first channel and the second channel are channels in different superior channels of the same terminal, and the terminal to which the first channel belongs and the terminal to which the second channel belongs are different; and/or
any two or more channels in the first channel group satisfy one of the following: any two or more channels in the first channel group are channels in the same superior channel, any two or more channels in the first channel group are channels in different superior channels of the same terminal, and any two or more channels in the first channel group are channels of different terminals.

4. The method according to claim 1, wherein the acquiring coordination configuration information of a first channel and/or coordination configuration information of a second channel comprises:
acquiring, by the first communication device, coordination information of a second channel group, wherein the coordination information of a second channel group comprises at least one of the following: the coordination configuration information of a first channel, the coordination configuration information of a second channel, and identifier information of the second channel group.

5. The method according to claim 1, further comprising:
acquiring, by the first communication device, a processing result of a channel, wherein the processing result of a channel comprises at least one of the following: establishment success, establishment failure, resource preemption or release, handover failure, and handover success; and
the executing, by the first communication device, a first operation according to the coordination configuration information comprises:
executing, by the first communication device, the first operation according to the coordination configuration information and the processing result of a channel.

6. A method for processing a service, comprising:
acquiring, by a second communication device, first information; and
executing, by the second communication device, a second operation according to the first information; wherein
the first information comprises at least one of the following:
a first request message, wherein the first request message is configured for at least one of the following: making a QoS request for a session, making a QoS request for a data flow, requesting coordination processing for a data flow, requesting coordination processing for data flows in the same data flow group, and performing policy authorization; and
first request information, wherein the first request information comprises at least one of the following: coordination requirement information of a first data flow, coordination requirement information of a second data flow, coordination requirement information of a first data flow group, coordination requirement information of a first QoS request, coordination requirement information of a second QoS request, and coordination requirement information of a first QoS request group;
the second operation comprises at least one of the following:
executing, in a case that a QoS request of the second data flow fails or is rejected, at least one of the following: rejecting a QoS request of the first data flow, revoking, releasing, or deleting a QoS policy mapped for a QoS request of the first data flow, notifying failure of a QoS request of the first data flow, deactivating the first data flow, and notifying deactivation of the first data flow;
executing, in a case that a QoS request of any data flow in the first data flow group fails or is rejected, at least one of the following: rejecting QoS requests of other data flows or all data flows in the first data flow group, revoking, releasing, or deleting QoS policies mapped for QoS requests of other data flows in the first data flow group, notifying failure of QoS requests of other data flows or all data flows in the first data flow group, deactivating other data flows or all data flows in the first data flow group, and notifying deactivation of other data flows or all data flows in the first data flow group;
executing, in a case that the second QoS request fails or is rejected, at least one of the following: rejecting the first QoS request, revoking, releasing, or deleting a QoS policy mapped for the first QoS request, and notifying failure of the first QoS request;
executing, in a case that any QoS request in the first QoS request group fails or is rejected, at least one of the following: rejecting other QoS requests or all QoS requests in the first QoS request group, revoking, releasing, or deleting QoS policies mapped for other QoS requests in the first QoS request group, and notifying failure of other QoS requests or all QoS requests in the first QoS request group;
determining a quality of service (QoS) policy for the data flow and/or the QoS request;
executing a seventh operation according to a processing result of the QoS policy;
determining dependency information of the QoS policy; and
transmitting second information, wherein the second information comprises at least one of the following: a first QoS policy, a second QoS policy, and a first QoS policy group;
the first QoS policy comprises at least one of the following: an identifier of the first QoS policy, an importance parameter of the first QoS policy, related information of the second QoS policy, and information of the second data flow;
the second QoS policy comprises at least one of the following: an identifier of the second QoS policy, an importance parameter of the second QoS policy, related information of the first QoS policy, and information of the first data flow;
information of the first QoS policy group comprises at least one of the following:
identifier information of the first QoS policy group or a list formed by identification information of each QoS policy encompassed in the first QoS policy group;
second indication information, wherein the second indication information is configured to indicate at least one of the following: all QoS policies in the first QoS policy group are interdependent, all QoS policies in the first QoS policy group are required to be processed as a whole, all data flows in the first QoS policy group are interdependent, and all data flows in the first QoS policy group are required to be processed as a whole; and
a list formed by a third QoS policy, wherein
the third QoS policy comprises at least one of the following: an identifier of the third QoS policy, information of a terminal to which the third QoS policy belongs, information of a PDU session to which the third QoS policy belongs, and an importance parameter of the third QoS policy;
the second QoS policy is a QoS policy on which the first QoS policy is dependent;
the third QoS policy is a QoS policy encompassed in the first QoS policy group; and
the second data flow is a data flow on which the first data flow is dependent; and
the seventh operation comprises at least one of the following:
executing, in a case that the second QoS policy fails or is released, at least one of the following: rejecting, releasing, revoking, or deleting the first QoS policy, rejecting, releasing, or deleting a third QoS request, notifying failure of a third QoS request, deactivating the first data flow, and notifying deactivation of the first data flow, wherein the third QoS request is one of the following: the QoS request of the first data flow, the first QoS request, and a QoS request mapping the first QoS policy; and
executing, in a case that any QoS policy in the first QoS policy group fails or is released, at least one of the following: rejecting, releasing, revoking, or deleting other QoS policies or all QoS policies in the first QoS policy group, rejecting, releasing, or deleting a fourth QoS request, notifying failure of a fourth QoS request, deactivating the other data flows or all the data flows in the first data flow group, and notifying deactivation of the other data flows or all the data flows in the first data flow group, wherein the fourth QoS request is one of the following: a QoS request mapping a QoS policy in the first QoS policy group, a QoS request of the first data flow group, and a QoS request of the first QoS request group.

7. The method according to claim 6, wherein
the related information of the first QoS policy comprises at least one of the following: the identifier of the first QoS policy, information of a terminal to which the first QoS policy belongs, information of a superior QoS policy to which the first QoS policy belongs, and the importance parameter of the first QoS policy; and/or
the related information of the second QoS policy comprises at least one of the following: the identifier of the second QoS policy, information of a terminal to which the second QoS policy belongs, information of a superior QoS policy to which the second QoS policy belongs, and the importance parameter of the second QoS policy; and/or
the identification information of a QoS policy comprises at least one of the following: an identifier of the QoS policy, information of a terminal to which the QoS policy belongs, and information of a superior QoS policy to which the QoS policy belongs.

8. The method according to claim 6, wherein the determining a QoS policy for the data flow and/or the QoS request comprises at least one of the following:
mapping the same QoS policy for the first data flow and the second data flow;
the same QoS policy is mapped for data flows having a dependency relationship;
determining dependency information of the QoS policy;
mapping an importance class requirement of the data flow into the importance parameter of the QoS policy;
mapping a QoS parameter of the QoS policy according to a QoS parameter requirement of the data flow;
mapping the same QoS policy for the first QoS request and the second QoS request;
the same QoS policy is mapped for QoS requests having a dependency relationship,
mapping an importance class requirement of the QoS request into the importance parameter of the QoS policy; and
mapping a QoS parameter of the QoS policy according to a QoS parameter requirement of the QoS request.

9. The method according to claim 8, wherein the mapping the same QoS policy for the first data flow and the second data flow, and/or the mapping a QoS parameter of the QoS policy according to a QoS parameter requirement of the data flow comprise/comprises: mapping, in a case that QoS identifiers mapped to QoS parameter requirements of the first data flow and the second data flow are different, and alternatively, QoS parameter requirements of the first data flow and the second data flow are different, the QoS parameter of the QoS policy according to a stricter QoS parameter requirement of the first data flow and the second data flow; and/or
the step that the same QoS policy is mapped for data flows having a dependency relationship, and/or the step that a QoS parameter of the QoS policy is mapped according to a QoS parameter requirement of the data flow comprise/comprises: mapping, in a case that QoS identifiers mapped to QoS parameter requirements of the data flows having a dependency relationship are different, and alternatively, QoS parameter requirements of the data flows having a dependency relationship are different, the QoS policy according to a strictest QoS parameter requirement among all QoS parameter requirements; and/or
the mapping the same QoS policy for the first QoS request and the second QoS request, and/or the mapping a QoS parameter of the QoS policy according to a QoS parameter requirement of the QoS request comprise/comprises: mapping, in a case that QoS identifiers mapped to QoS parameter requirements of the first QoS request and the second QoS request are different, and alternatively, QoS parameter requirements of the first QoS request and the second QoS request are different, the QoS parameter of the QoS policy according to a stricter QoS parameter requirement of the first QoS request and the second QoS request; and/or
the step that the same QoS policy is mapped for QoS requests having a dependency relationship, and/or the step that a QoS parameter of the QoS policy is mapped according to a QoS parameter requirement of the QoS request comprise/comprises: in a case that QoS identifiers mapped to QoS parameter requirements of the QoS requests having a dependency relationship are different, and alternatively, QoS parameter requirements of the QoS requests having a dependency relationship are different, the QoS policy is mapped according to a strictest QoS parameter requirement among all QoS parameter requirements.

10. The method according to claim 6 or 8, wherein the determining dependency information of the QoS policy comprises at least one of the following:
determining, in a case that a data flow A is dependent on a data flow B, at least one of the following: the first QoS policy comprises a QoS policy mapped to the data flow A, the second QoS policy comprises a QoS policy mapped to the data flow B, the second data flow in the first QoS policy comprises the data flow A, and the first data flow in the second QoS policy comprises the data flow B;
determining, in a case that the first data flow is a data flow A, the data flow A is dependent on a data flow B, and the data flow B is dependent on a data flow C, at least one of the following: the second QoS policy comprises a QoS policy mapped to the data flow B and a QoS policy mapped to the data flow C, and the second data flow in the first QoS policy comprises the data flow B and the data flow C;
determining, in a case that the second data flow is a data flow C, a data flow A is dependent on a data flow B, and the data flow B is dependent on the data flow C, at least one of the following: the first QoS policy comprises a QoS policy mapped to the data flow A and a QoS policy mapped to the data flow B, and the first data flow in the second QoS policy comprises the data flow A and the data flow B;
determining, in a case that a data flow D and a data flow E are interdependent, the first data flow is the data flow D, and the first QoS policy is a QoS policy mapped to the data flow D, at least one of the following: the second QoS policy comprises a QoS policy mapped to the data flow E, and the second data flow in the first QoS policy comprises the data flow E;
determining, in a case that a data flow D and a data flow E are interdependent, the first data flow is the data flow E, and the first QoS policy is a QoS policy mapped to the data flow E, at least one of the following: the second QoS policy comprises a QoS policy mapped to the data flow D, and the second data flow in the first QoS policy comprises the data flow D;
generating the first QoS policy group in a case that a data flow D and a data flow E are interdependent, wherein the first QoS policy group comprises a QoS policy mapped to the data flow D and a QoS policy mapped to the data flow E; and
mapping the first QoS policy group for the first data flow group; and
determining, in a case that a QoS request A is dependent on a QoS request B, at least one of the following: the first QoS policy comprises a QoS policy mapped to the QoS request A, the second QoS policy comprises a QoS policy mapped to the QoS request B, the second QoS request in the first QoS policy comprises the QoS request A, and the first QoS request in the second QoS policy comprises the QoS request B;
determining, in a case that the first QoS request is a QoS request A, the QoS request A is dependent on a QoS request B, and the QoS request B is dependent on a QoS request C, at least one of the following: the second QoS policy comprises a QoS policy mapped to the QoS request B and a QoS policy mapped to the QoS request C, and the second QoS request in the first QoS policy comprises the QoS request B and the QoS request C;
determining, in a case that the second QoS request is a QoS request C, a QoS request A is dependent on a QoS request B, and the QoS request B is dependent on the QoS request C, at least one of the following: the first QoS policy comprises a QoS policy mapped to the QoS request A and a QoS policy mapped to the QoS request B, and the first QoS request in the second QoS policy comprises the QoS request A and the QoS request B;
determining, in a case that a QoS request D and a QoS request E are interdependent, the first QoS request is the QoS request D, and the first QoS policy is a QoS policy mapped to the QoS request D, at least one of the following: the second QoS policy comprises a QoS policy mapped to the QoS request E, and the second QoS request in the first QoS policy comprises the QoS request E;
determining, in a case that a QoS request D and a QoS request E are interdependent, the first QoS request is the QoS request E, and the first QoS policy is a QoS policy mapped to the QoS request E, at least one of the following: the second QoS policy comprises a QoS policy mapped to the QoS request D, and the second QoS request in the first QoS policy comprises the QoS request D;
generating, the first QoS policy group in a case that a QoS request D and a QoS request E are interdependent, wherein the first QoS policy group comprises a QoS policy mapped to the QoS request D and a QoS policy mapped to the QoS request E; and
mapping the first QoS policy group for the first QoS request group; wherein
the first QoS policy is a QoS policy mapped for the first data flow and/or the first QoS request; and
the second QoS policy is a QoS policy mapped for the second data flow and/or the second QoS request.

11. The method according to claim 10, wherein the operation of mapping the first QoS policy group for the first data flow group comprises: the first QoS policy group comprises the third QoS policy; wherein
the third QoS policy is a QoS policy mapped to a third data flow; and
the third data flow is a data flow in the first data flow group.

12. The method according to claim 6, wherein after the transmitting second information, the method further comprises:
acquiring, by the second communication device, a processing result of the QoS policy, wherein the processing result of the QoS policy comprises at least one of the following: success, failure, and release; and
executing, by the second communication device, a third operation according to the second information and/or the processing result of the QoS policy, wherein
the third operation comprises at least one of the following:
executing, in a case that the second QoS policy fails or is released, at least one of the following: rejecting, releasing, revoking, or deleting the first QoS policy, rejecting, releasing, or deleting the QoS request of the first data flow, rejecting, releasing, or deleting the first QoS request, rejecting or releasing the QoS request mapping the first QoS policy, notifying failure of the third QoS request, deactivating the first data flow, and notifying deactivation of the first data flow, wherein the third QoS request is one of the following: the QoS request of the first data flow, the first QoS request, and the QoS request mapping the first QoS policy; and
executing, in a case that any QoS policy in the first QoS policy group fails or is released, at least one of the following: rejecting, releasing, revoking, or deleting other QoS policies in the first QoS policy group, rejecting, releasing, or deleting the QoS request mapping a QoS policy in the first QoS policy group, rejecting, releasing, or deleting the QoS request of the first data flow group, rejecting, releasing, or deleting the QoS request of the first QoS request group, and notifying failure of the fourth QoS request, wherein the fourth QoS request is one of the following: the QoS request mapping a QoS policy in the first QoS policy group, the QoS request of the first data flow group, and the QoS request of the first QoS request group.

13. The method according to claim 6, further comprising at least one of the following:
determining, by the second communication device, a processing result of the QoS request; and
transmitting, by the second communication device, the processing result of the QoS request, wherein the processing result of the QoS request is configured to indicate any one of the following: the QoS request succeeds, the QoS request fails, and the QoS request is released.

14. A method for processing a service, comprising:
acquiring, by a third communication device, first information and/or second information; and
executing, by the third communication device, a fourth operation according to the first information and/or the second information; wherein
the first information comprises at least one of the following:
a first request message, wherein the first request message is configured for at least one of the following: making a QoS request for a session, making a QoS request for a data flow, requesting coordination processing for a data flow, requesting coordination processing for data flows in the same data flow group, and performing policy authorization; and
first request information, wherein the first request information comprises at least one of the following: coordination requirement information of a first data flow, coordination requirement information of a second data flow, coordination requirement information of a first data flow group, coordination requirement information of a first QoS request, coordination requirement information of a second QoS request, and coordination requirement information of a first QoS request group;
the second information comprises at least one of the following: a first QoS policy, a second QoS policy, and a first QoS policy group;
the fourth operation comprises at least one of the following:
executing, in a case that the second QoS policy fails or is rejected, at least one of the following: rejecting the first QoS policy, releasing or revoking a channel mapped for the first QoS policy, notifying failure of the first QoS policy, and notifying failure of the second QoS policy;
executing, in a case that any QoS policy in the first QoS policy group is rejected or fails, at least one of the following: rejecting other QoS policies or all QoS policies in the first QoS policy group, releasing or revoking channels mapped for other QoS policies in the first QoS policy group, and notifying failure of other QoS policies or all QoS policies in the first QoS policy group;
determining a channel for the data flow;
determining a channel for the QoS policy;
executing an eighth operation according to a processing result of the channel;
determining dependency information of the channel; and
transmitting coordination configuration information, wherein the coordination configuration information comprises at least one of the following: coordination configuration information of a first channel, coordination configuration information of a second channel, and coordination configuration information of a first channel group;
the coordination configuration information of a first channel comprises at least one of the following: an identifier of the first channel, information of a terminal to which the first channel belongs, information of a superior channel to which the first channel belongs, an importance parameter of the first channel, and information of the second channel;
the coordination configuration information of a second channel comprises at least one of the following: an identifier of the second channel, information of a terminal to which the second channel belongs, information of a superior channel to which the second channel belongs, an importance parameter of the second channel, and information of the first channel; and
the coordination configuration information of a first channel group comprises at least one of the following:
identifier information of the first channel group or a list formed by identification information of each channel encompassed in the first channel group;
first indication information, wherein the first indication information is configured to indicate at least one of the following: all channels in the first channel group are interdependent, and all channels in the first channel group are required to be processed as a whole; and
a list formed by information of a third channel, wherein
the second channel is a channel on which the first channel is dependent; and
the third channel is a channel encompassed in the first channel group; and
the eighth operation comprises at least one of the following:
executing, in a case of satisfying at least one of conditions that the second channel fails, the second channel is released, and a resource of the second channel is preempted, at least one of the following: rejecting, releasing, revoking, or not handing over the first channel, rejecting or releasing a QoS policy mapping the first channel, rejecting or releasing the first QoS policy, notifying failure of a QoS policy mapping the first channel, and notifying failure of the first QoS policy; and
executing, in a case of satisfying at least one of conditions that any channel in the first channel group fails, any channel is released, and a resource of any channel is preempted, at least one of the following: rejecting, releasing, revoking, or not handing over other channels or all the channels in the first channel group, rejecting or releasing a QoS policy mapping a channel in the first channel group, rejecting or releasing the first QoS policy group, notifying failure of a QoS policy mapping a channel in the first channel group, and notifying failure of the other QoS policies or all the QoS policies in the first QoS policy group.

15. The method according to claim 14, wherein the determining a channel for the data flow comprises at least one of the following:
mapping the same channel for the first data flow and the second data flow, and alternatively, mapping individual channels for the first data flow and the second data flow respectively, wherein
no channels/channel mapped to the first data flow and/or the second data flow are/is configured for other data flows except for the first data flow and/or the second data flow;
the same channel is mapped for data flows having a dependency relationship; and
determining dependency information of the channel.

16. The method according to claim 14 or 15, wherein the operation of determining dependency information of the channel comprises at least one of the following:
determining, in a case that a QoS policy A is dependent on a QoS policy B, at least one of the following: the first channel comprises a channel mapped to the QoS policy A, and the second channel comprises a channel mapped to the QoS policy B;
determining, in a case that the first QoS policy is a QoS policy A, the QoS policy A is dependent on a QoS policy B, and the QoS policy B is dependent on a QoS policy C, at least one of the following: the second channel comprises a channel mapped to the QoS policy B and a channel mapped to the QoS policy C;
determining, in a case that the second QoS policy is a QoS policy C, a QoS policy A is dependent on a QoS policy B, and the QoS policy B is dependent on the QoS policy C, at least one of the following: the first channel comprises a channel mapped to the QoS policy A and a channel mapped to the QoS policy B;
determining, in a case that a QoS policy D and a QoS policy E are interdependent, the first QoS policy is the QoS policy D, and the first channel is a channel mapped to the QoS policy D, at least one of the following: the second channel comprises a channel mapped to the QoS policy E;
determining, in a case that a QoS policy D and a QoS policy E are interdependent, the first QoS policy is the QoS policy E, and the first channel is a channel mapped to the QoS policy E, at least one of the following: the second channel comprises a channel mapped to the QoS policy D;
generating the first channel group in a case that a QoS policy D and a QoS policy E are interdependent, wherein the first channel group comprises a channel mapped to the QoS policy D and a channel mapped to the QoS policy E; and
mapping the first channel group for the first QoS policy group, wherein
the first channel is a channel mapped to the first QoS policy; and
the second channel is a channel mapped to the second QoS policy.

17. The method according to claim 14, wherein the determining a channel for the QoS policy comprises at least one of the following:
mapping the same channel for the first QoS policy and the second QoS policy, and alternatively, mapping individual channels for the first QoS policy and the second QoS policy respectively, wherein
no channels/channel mapped to the first QoS policy and/or the second QoS policy are/is configured for other QoS policies except for the first QoS policy and/or the second QoS policy;
the same channel is mapped for QoS policies having a dependency relationship; and
determining dependency information of the channel.

18. The method according to claim 17, wherein the mapping the same channel for the first QoS policy and the second QoS policy comprises: mapping, in a case that QoS parameters of the first QoS policy and the second QoS policy are different, the channel according to a stricter QoS parameter of the first QoS policy and the second QoS policy; and/or
the mapping the same channel for QoS policies having a dependency relationship comprises: in a case that QoS parameters of the QoS policies having a dependency relationship are different, the channel is mapped according to a strictest QoS parameter among all QoS parameter requirements.

19. The method according to claim 14 or 17, wherein the determining dependency information of the channel comprises at least one of the following:
determining, in a case that a data flow A is dependent on a data flow B, at least one of the following: the first channel comprises a channel mapped to the data flow A, and the second channel comprises a channel mapped to the data flow B;
determining, in a case that the first data flow is a data flow A, the data flow A is dependent on a data flow B, and the data flow B is dependent on a data flow C, at least one of the following: the second channel comprises a channel mapped to the data flow B and a channel mapped to the data flow C;
determining, in a case that the second data flow is a data flow C, a data flow A is dependent on a data flow B, and the data flow B is dependent on the data flow C, at least one of the following: the first channel comprises a channel mapped to the data flow A and a channel mapped to the data flow B;
determining, in a case that a data flow D and a data flow E are interdependent, the first data flow is the data flow D, and the first channel is a channel mapped to the data flow D, at least one of the following: the second channel comprises a channel mapped to the data flow E;
determining, in a case that a data flow D and a data flow E are interdependent, the first data flow is the data flow E, and the first channel is a channel mapped to the data flow E, at least one of the following: the second channel comprises a channel mapped to the data flow E;
generating the first channel group in a case that a data flow D and a data flow E are interdependent, wherein the first channel group comprises a channel mapped to the data flow D and a channel mapped to the data flow E; and
mapping the first channel group for the first data flow group, wherein
the first channel is a channel mapped to the first data flow; and
the second channel is a channel mapped to the second data flow.

20. The method according to claim 14, wherein the operation of mapping the first channel group for the first data flow group comprises: the first channel group comprises a third channel; and/or
the operation of mapping the first channel group for the first QoS policy group comprises: the first channel group comprises the third channel, wherein
the third channel is one of the following: a channel mapped to a third data flow, and a channel mapped to a third QoS policy;
the third data flow is any data flow encompassed in the first data flow group; and
the third QoS policy is any QoS policy encompassed in the first QoS policy group.

21. The method according to claim 14, wherein after the transmitting coordination configuration information, the method further comprises:
acquiring, by the third communication device, the processing result of the channel, wherein the processing result of the channel comprises at least one of the following: establishment success, establishment failure, resource preemption or release, handover failure, and handover success; and
executing, by the third communication device, a fifth operation according to the coordination configuration information and the processing result of the channel, wherein
the fifth operation comprises at least one of the following:
executing, in a case that the second channel fails or is released, at least one of the following: rejecting or releasing the first channel, rejecting or releasing the QoS policy mapping the first channel, and rejecting or releasing the first QoS policy;
executing, in a case that establishment of the second channel fails, at least one of the following: rejecting or releasing the first channel, rejecting, releasing, or deleting the QoS policy mapping the first channel, rejecting, releasing, or deleting the first QoS policy, notifying failure of the QoS policy mapping the first channel, and notifying failure of the first QoS policy;
executing, in a case that handover of the second channel fails, at least one of the following: rejecting or releasing the first channel, not handing over the first channel or rejecting to hand over the first channel, rejecting, releasing, or deleting the QoS policy mapping the first channel, rejecting, releasing, or deleting the first QoS policy, notifying failure of the QoS policy mapping the first channel, and notifying failure of the first QoS policy;
executing, in a case that a resource of the second channel is preempted or released, at least one of the following: rejecting or releasing the first channel, rejecting, releasing, or deleting the QoS policy mapping the first channel, rejecting, releasing, or deleting the first QoS policy, notifying failure of the QoS policy mapping the first channel, and notifying failure of that the first QoS policy;
executing, in a case that establishment of any channel in the first channel group fails or any channel in the first channel group is released, at least one of the following: rejecting, releasing, or deleting the other channels or all the channels in the first channel group, rejecting, releasing, or deleting the QoS policy mapping a channel in the first channel group, rejecting or releasing the first QoS policy group, notifying failure of the QoS policy mapping a channel in the first channel group, and notifying failure of the other QoS policies or all the QoS policies in the first QoS policy group;
executing, in a case that establishment of any channel in the first channel group fails, at least one of the following: rejecting, releasing, deleting the other channels or all the channels in the first channel group, rejecting, releasing, or deleting a QoS policy mapping the first channel group, rejecting or releasing the first QoS policy group, notifying failure of the QoS policy mapping a channel in the first channel group, and notifying failure of the other QoS policies or all the QoS policies in the first QoS policy group;
executing, in a case that handover of any channel in the first channel group fails, at least one of the following: rejecting, releasing, or deleting the other channels or all the channels in the first channel group, rejecting to hand over any channel in the first channel group, rejecting, releasing, or deleting the QoS policy mapping a channel in the first channel group, rejecting, releasing, or deleting the first QoS policy group, notifying failure of the QoS policy mapping a channel in the first channel group, and notifying failure of the other QoS policies or all the QoS policies in the first QoS policy group; and
executing, in a case that a resource of any channel in the first channel group is preempted or released, at least one of the following: rejecting or releasing the other channels or all the channels in the first channel group, notifying failure of the QoS policy mapping a channel in the first channel group, and notifying failure of the other QoS policies or all the QoS policies in the first QoS policy group.

22. The method according to claim 14, further comprising at least one of the following:
determining, by the third communication device, a processing result of the QoS policy; and
transmitting, by the third communication device, the processing result of the QoS policy, wherein the processing result of the QoS policy is configured to indicate any one of the following: the QoS policy succeeds, the QoS policy fails, and the QoS policy is released.

23. A method for processing a service, comprising:
transmitting, by a fourth communication device, first information; wherein
the first information comprises at least one of the following:
a first request message, wherein the first request message is configured for at least one of the following: making a QoS request for a session, making a QoS request for a data flow, requesting coordination processing for a data flow, requesting coordination processing for data flows in the same data flow group, and performing policy authorization; and
first request information, wherein the first request information comprises at least one of the following: coordination requirement information of a first data flow, coordination requirement information of a second data flow, coordination requirement information of a first data flow group, coordination requirement information of a first QoS request, coordination requirement information of a second QoS request, and coordination requirement information of a first QoS request group;
the coordination requirement information of a first data flow comprises at least one of the following: description information of the first data flow, an importance parameter of the first data flow, information of a terminal to which the first data flow belongs, and information of the second data flow;
the coordination requirement information of a second data flow comprises at least one of the following: description information of the second data flow, an importance parameter of the second data flow, information of a terminal to which the second data flow belongs, and information of the first data flow;
the coordination requirement information of a first data flow group comprises at least one of the following:
identifier information of the first data flow group or a list formed by identification information of each data flow in the first service flow group;
third indication information, wherein the third indication information is configured to indicate at least one of the following: all data flows in the first data flow group are interdependent, data flows in the first data flow group are interdependent, and all data flows in the first data flow group are required to be processed as a whole; and
a list formed by information of a third data flow, wherein
the second data flow is a data flow on which the first data flow is dependent; and
the third data flow is a data flow encompassed in the first data flow group;
the coordination requirement information of a first QoS request comprises at least one of the following: the first QoS request, an importance parameter of the first QoS request, information of a terminal to which the first QoS request belongs, and the second QoS request;
the coordination requirement information of a second QoS request comprises at least one of the following: the second QoS request, an importance parameter of the second QoS request, information of a terminal to which the second QoS request belongs, and the first QoS request; and
the coordination requirement information of a first QoS request group comprises at least one of the following:
identifier information of the first QoS request group,
a list formed by all QoS requests in the first QoS request group,
third indication information, wherein the third indication information is configured to indicate at least one of the following: all the QoS requests in the first QoS request group are interdependent, the QoS requests in the first QoS request group are interdependent, and all the QoS requests in the first QoS request group are required to be processed as a whole, wherein
the second QoS request is a QoS request on which the first QoS request is dependent.

24. The method according to claim 23, wherein
the information of the first data flow comprises at least one of the following: description information of the information of the first data flow, the information of a terminal to which the first data flow belongs, and the importance parameter of the first data flow; and/or
the information of the second data flow comprises at least one of the following: description information of the information of the second data flow, the information of a terminal to which the second data flow belongs, and the importance parameter of the second data flow; and/or
the information of a third data flow comprises at least one of the following: description information of the third data flow, information of a terminal to which the third data flow belongs, and an importance parameter of the third data flow; and/or
the identification information of a data flow comprises at least one of the following: description information of the data flow, and information of a terminal to which the data flow belongs.

25. The method according to claim 23, wherein the first request information is encompassed in the first request message.

26. The method according to claim 23, wherein
the first data flow and the second data flow satisfy one of the following: data flows of the same terminal, data flows of different terminals, data flows of the same application server, and data flows of different application servers; and/or
any two or more data flows in the first data flow group satisfy one of the following: data flows of the same terminal, data flows of different terminals, data flows of the same application server, and data flows of different application servers.

27. The method according to claim 23, wherein after the transmitting first information, the method further comprises:
acquiring, by the fourth communication device, at least one of the following: a processing result of the first request message, a processing result of the first request information, an operation result of the session, a processing result of the QoS request, and/or a processing result of a QoS request of the data flow; and
executing, by the fourth communication device, a sixth operation according to at least one of the processing result of the first request message, the processing result of the first request information, the operation result of the session, the processing result of the QoS request, and the processing result of a QoS request of the data flow; wherein
the processing result of the first request message comprises at least one of the following: success and rejection;
the processing result of the first request information comprises at least one of the following: success and rejection;
the operation result of the session comprises at least one of the following: success, failure, and release;
the processing result of the QoS request comprises at least one of the following: success, failure, and release;
the processing result of a QoS request of the data flow comprises at least one of the following: success, failure, and release; and
the sixth operation comprises at least one of the following:
executing, in a case of satisfying at least one of conditions that a QoS request of the second data flow fails or is released, the first request message carrying a QoS request of the second data flow is rejected, the first request information encompassing a QoS request of the second data flow is rejected, and a session transmitting a QoS request of the second data flow is released, at least one of the following: releasing, revoking, or deleting a QoS request of the first data flow;
executing, in a case of satisfying at least one of conditions that a QoS request of any data flow in the first data flow group fails or is released, the first request message carrying a QoS request of any data flow in the first data flow group is rejected, the first request information encompassing a QoS request of any data flow in the first data flow group is rejected, and a session transmitting a QoS request of any data flow in the first data flow group is released, at least one of the following: releasing, revoking, or deleting QoS requests of other data flows or all data flows in the first data flow group, and releasing, revoking, or deleting a QoS request of the first data flow group;
executing, in a case of satisfying at least one of conditions that the second QoS request fails or is released, the first request message carrying the second QoS request is rejected, the first request information encompassing the second QoS request is rejected, and a session transmitting the second QoS request is released, at least one of the following: releasing, revoking, or deleting the first QoS request; and
executing, in a case of satisfying at least one of conditions that any QoS request in the first QoS request group fails or is released, the first request message carrying any QoS request in the first QoS request group is rejected, the first request information encompassing any QoS request in the first QoS request group is rejected, and a session transmitting any QoS request in the first QoS request group is released, at least one of the following: releasing, revoking, or deleting other QoS requests or all QoS requests in the first QoS request group.

28. The method according to claim 23, wherein
the first data flow and the second data flow satisfy at least one of the following: data flows of the same task, data flows of the same service, and data flows of the same application; and/or
the data flows in the first data flow group satisfy at least one of the following: data flows of the same task, data flows of the same service, and data flows of the same application.

29. An apparatus for processing a service, comprising:
a first acquisition module, wherein the first acquisition module is configured to acquire coordination configuration information, and the coordination configuration information comprises at least one of the following: coordination configuration information of a first channel, coordination configuration information of a second channel, and coordination configuration information of a first channel group; and
a first execution module, wherein the first execution module is configured to execute a first operation according to the coordination configuration information; wherein
the first operation comprises at least one of the following:
rejecting or releasing the first channel in a case that the second channel fails or is released;
executing, in a case that establishment or resource allocation of the second channel fails, at least one of the following: rejecting establishment of the first channel, rejecting or releasing the first channel, releasing a resource allocated to the first channel, and rejecting allocation of a resource to the first channel;
executing, in a case that handover of the second channel fails, at least one of the following: releasing a resource allocated to the first channel, rejecting allocation of a resource to the first channel, rejecting or releasing the first channel, and not handing over the first channel or rejecting to hand over the first channel;
executing, in a case that a resource of the second channel is preempted or released, at least one of the following: releasing a resource allocated to the first channel, rejecting allocation of a resource to the first channel, and releasing the first channel;
processing all channels in the first channel group as a whole;
rejecting or releasing, in a case that any channel in the first channel group fails or is released, other channels or all the channels in the first channel group;
executing, in a case that establishment or resource allocation of any channel in the first channel group fails, at least one of the following: rejecting establishment of other channels in the first channel group, rejecting allocation of resources to other channels in the first channel group, releasing resources allocated to other channels in the first channel group, and releasing other channels or all the channels in the first channel group;
executing, in a case that handover of any channel in the first channel group fails, at least one of the following: releasing resources allocated to other channels in the first channel group, releasing other channels or all the channels in the first channel group, and rejecting to hand over any channel in the first channel group;
executing, in a case that any channel in the first channel group is preempted, at least one of the following: releasing resources allocated to other channels in the first channel group, and releasing all the channels or other channels in the first channel group;
preferentially allocating a resource to a primary channel; and
preempting a resource of a secondary channel in a case that resources are insufficient;
the coordination configuration information of a first channel comprises at least one of the following: an identifier of the first channel, information of a terminal to which the first channel belongs, information of a superior channel to which the first channel belongs, an importance parameter of the first channel, and information of the second channel;
the coordination configuration information of a second channel comprises at least one of the following: an identifier of the second channel, information of a terminal to which the second channel belongs, information of a superior channel to which the second channel belongs, an importance parameter of the second channel, and information of the first channel; and
the coordination configuration information of a first channel group comprises at least one of the following:
identifier information of the first channel group or a list formed by identification information of each channel encompassed in the first channel group;
first indication information, wherein the first indication information is configured to indicate at least one of the following: all the channels in the first channel group are interdependent, and all the channels in the first channel group are required to be processed as a whole; and
a list formed by information of a third channel, wherein
the second channel is a channel on which the first channel is dependent; and
the third channel is a channel encompassed in the first channel group.

30. An apparatus for processing a service, comprising:
a second acquisition module, wherein the second acquisition module is configured to acquire first information; and
a second execution module, wherein the second execution module is configured to execute a second operation according to the first information; wherein
the first information comprises at least one of the following:
a first request message, wherein the first request message is configured for at least one of the following: making a QoS request for a session, making a QoS request for a data flow, requesting coordination processing for a data flow, requesting coordination processing for data flows in the same data flow group, and performing policy authorization; and
first request information, wherein the first request information comprises at least one of the following: coordination requirement information of a first data flow, coordination requirement information of a second data flow, coordination requirement information of a first data flow group, coordination requirement information of a first QoS request, coordination requirement information of a second QoS request, and coordination requirement information of a first QoS request group;
the second operation comprises at least one of the following:
executing, in a case that a QoS request of the second data flow fails or is rejected, at least one of the following: rejecting a QoS request of the first data flow, revoking, releasing, or deleting a QoS policy mapped for a QoS request of the first data flow, notifying failure of a QoS request of the first data flow, deactivating the first data flow, and notifying deactivation of the first data flow;
executing, in a case that a QoS request of any data flow in the first data flow group fails or is rejected, at least one of the following: rejecting QoS requests of other data flows or all data flows in the first data flow group, revoking, releasing, or deleting QoS policies mapped for QoS requests of other data flows in the first data flow group, notifying failure of QoS requests of other data flows or all data flows in the first data flow group, deactivating other data flows or all data flows in the first data flow group, and notifying deactivation of other data flows or all data flows in the first data flow group;
executing, in a case that the second QoS request fails or is rejected, at least one of the following: rejecting the first QoS request, revoking, releasing, or deleting a QoS policy mapped for the first QoS request, and notifying failure of the first QoS request;
executing, in a case that any QoS request in the first QoS request group fails or is rejected, at least one of the following: rejecting other QoS requests or all QoS requests in the first QoS request group, revoking, releasing, or deleting QoS policies mapped for other QoS requests in the first QoS request group, and notifying failure of other QoS requests or all QoS requests in the first QoS request group;
determining a quality of service (QoS) policy for the data flow and/or the QoS request;
executing a seventh operation according to a processing result of the QoS policy;
determining dependency information of the QoS policy; and
transmitting second information, wherein the second information comprises at least one of the following: a first QoS policy, a second QoS policy, and a first QoS policy group, wherein
the first QoS policy comprises at least one of the following: an identifier of the first QoS policy, an importance parameter of the first QoS policy, related information of the second QoS policy, and information of the second data flow;
the second QoS policy comprises at least one of the following: an identifier of the second QoS policy, an importance parameter of the second QoS policy, related information of the first QoS policy, and information of the first data flow;
information of the first QoS policy group comprises at least one of the following:
identifier information of the first QoS policy group or a list formed by identification information of each QoS policy encompassed in the first QoS policy group;
second indication information, wherein the second indication information is configured to indicate at least one of the following: all QoS policies in the first QoS policy group are interdependent, all QoS policies in the first QoS policy group are required to be processed as a whole, all data flows in the first QoS policy group are interdependent, and all data flows in the first QoS policy group are required to be processed as a whole; and
a list formed by a third QoS policy, wherein
the third QoS policy comprises at least one of the following: an identifier of the third QoS policy, information of a terminal to which the third QoS policy belongs, information of a PDU session to which the third QoS policy belongs, and an importance parameter of the third QoS policy;
the second QoS policy is a QoS policy on which the first QoS policy is dependent;
the third QoS policy is a QoS policy encompassed in the first QoS policy group; and
the second data flow is a data flow on which the first data flow is dependent; and
the seventh operation comprises at least one of the following:
executing, in a case that the second QoS policy fails or is released, at least one of the following: rejecting, releasing, revoking, or deleting the first QoS policy, rejecting, releasing, or deleting a third QoS request, notifying failure of a third QoS request, deactivating the first data flow, and notifying deactivation of the first data flow, wherein the third QoS request is one of the following: the QoS request of the first data flow, the first QoS request, and a QoS request mapping the first QoS policy; and
executing, in a case that any QoS policy in the first QoS policy group fails or is released, at least one of the following: rejecting, releasing, revoking, or deleting other QoS policies or all the QoS policies in the first QoS policy group, rejecting, releasing, or deleting a fourth QoS request, notifying failure of a fourth QoS request, deactivating other data flows or all the data flows in the first data flow group, and notifying deactivation of other data flows or all the data flows in the first data flow group, wherein the fourth QoS request is one of the following: a QoS request mapping a QoS policy in the first QoS policy group, a QoS request of the first data flow group, and a QoS request of the first QoS request group.

31. An apparatus for processing a service, comprising:
a third acquisition module, wherein the third acquisition module is configured to acquire first information and/or second information; and
a third execution module, wherein the third execution module is configured to execute a fourth operation according to the first information and/or the second information; wherein
the first information comprises at least one of the following:
a first request message, wherein the first request message is configured for at least one of the following: making a QoS request for a session, requesting coordination processing for two or more data flows, requesting coordination processing for data flows in the same data flow group, and performing policy authorization; and
first request information, wherein the first request information comprises at least one of the following: coordination requirement information of a first data flow, coordination requirement information of a second data flow, coordination requirement information of a first data flow group, coordination requirement information of a first QoS request, coordination requirement information of a second QoS request, and coordination requirement information of a first QoS request group;
the second information comprises at least one of the following: a first QoS policy, a second QoS policy, and a first QoS policy group;
the fourth operation comprises at least one of the following:
executing, in a case that the second QoS policy fails or is rejected, at least one of the following: rejecting the first QoS policy, releasing or revoking a channel mapped for the first QoS policy, notifying failure of the first QoS policy, and notifying failure of the second QoS policy;
executing, in a case that any QoS policy in the first QoS policy group is rejected or fails, at least one of the following: rejecting other QoS policies or all QoS policies in the first QoS policy group, releasing or revoking channels mapped for other QoS policies in the first QoS policy group, and notifying failure of other QoS policies or all QoS policies in the first QoS policy group;
determining a channel for the data flow;
determining a channel for the QoS policy;
executing an eighth operation according to a processing result of the channel;
determining dependency information of the channel; and
transmitting coordination configuration information, wherein the coordination configuration information comprises at least one of the following: coordination configuration information of a first channel, coordination configuration information of a second channel, and coordination configuration information of a first channel group;
the coordination configuration information of a first channel comprises at least one of the following: an identifier of the first channel, information of a terminal to which the first channel belongs, information of a superior channel to which the first channel belongs, an importance parameter of the first channel, and information of the second channel;
the coordination configuration information of a second channel comprises at least one of the following: an identifier of the second channel, information of a terminal to which the second channel belongs, information of a superior channel to which the second channel belongs, an importance parameter of the second channel, and information of the first channel;
the coordination configuration information of a first channel group comprises at least one of the following:
identifier information of the first channel group or a list formed by identification information of each channel encompassed in the first channel group;
first indication information, wherein the first indication information is configured to indicate at least one of the following: all the channels in the first channel group are interdependent, and all the channels in the first channel group are required to be processed as a whole; and
a list formed by information of a third channel, wherein
the second channel is a channel on which the first channel is dependent; and
the third channel is a channel encompassed in the first channel group; and
the eighth operation comprises at least one of the following:
executing, in a case of satisfying at least one of conditions that the second channel fails, the second channel is released, and a resource of the second channel is preempted, at least one of the following: rejecting, releasing, revoking, or not handing over the first channel, rejecting or releasing a QoS policy mapping the first channel, rejecting or releasing the first QoS policy, notifying failure of a QoS policy mapping the first channel, and notifying failure of the first QoS policy; and
executing, in a case of satisfying at least one of conditions that any channel in the first channel group fails, any channel is released, and a resource of any channel is preempted, at least one of the following: rejecting, releasing, revoking, or not handing over other channels or all the channels in the first channel group, rejecting or releasing a QoS policy mapping a channel in the first channel group, rejecting or releasing the first QoS policy group, notifying failure of a QoS policy mapping a channel in the first channel group, and notifying failure of the other QoS policies or all the QoS policies in the first QoS policy group.

32. An apparatus for processing a service, comprising:
a transmission module, wherein the transmission module is configured to transmit first information; wherein
the first information comprises at least one of the following:
a first request message, wherein the first request message is configured for at least one of the following: making a QoS request for a session, making a QoS request for a data flow, requesting coordination processing for a data flow, requesting coordination processing for data flows in the same data flow group, and performing policy authorization; and
first request information, wherein the first request information comprises at least one of the following: coordination requirement information of a first data flow, coordination requirement information of a second data flow, coordination requirement information of a first data flow group, coordination requirement information of a first QoS request, coordination requirement information of a second QoS request, and coordination requirement information of a first QoS request group;
the coordination requirement information of a first data flow comprises at least one of the following: description information of the first data flow, an importance parameter of the first data flow, information of a terminal to which the first data flow belongs, and information of the second data flow;
the coordination requirement information of a second data flow comprises at least one of the following: description information of the second data flow, an importance parameter of the second data flow, information of a terminal to which the second data flow belongs, and information of the first data flow;
the coordination requirement information of a first data flow group comprises at least one of the following:
identifier information of the first data flow group or a list formed by identification information of each data flow in the first data flow group;
third indication information, wherein the third indication information is configured to indicate at least one of the following: all the data flows in the first data flow group are interdependent, the data flows in the first data flow group are interdependent, and all the data flows in the first data flow group are required to be processed as a whole; and
a list formed by information of a third data flow, wherein
the second data flow is a data flow on which the first data flow is dependent; and
the third data flow is a data flow encompassed in the first data flow group;
the coordination requirement information of a first QoS request comprises at least one of the following: the first QoS request, an importance parameter of the first QoS request, information of a terminal to which the first QoS request belongs, and the second QoS request;
the coordination requirement information of a second QoS request comprises at least one of the following: the second QoS request, an importance parameter of the second QoS request, information of a terminal to which the second QoS request belongs, and the first QoS request; and
the coordination requirement information of a first QoS request group comprises at least one of the following:
identifier information of the first QoS request group,
a list formed by all QoS requests in the first QoS request group,
third indication information, wherein the third indication information is configured to indicate at least one of the following: all the QoS requests in the first QoS request group are interdependent, the QoS requests in the first QoS request group are interdependent, and all the QoS requests in the first QoS request group are required to be processed as a whole, wherein
the second QoS request is a QoS request on which the first QoS request is dependent.

33. A communication device, comprising a processor and a memory, wherein a program or instruction runnable on the processor is stored on the memory, and when executed by the processor, the program or instruction implements steps of the method for processing a service according to any one of claims 1-5, steps of the method for processing a service according to any one of claims 6-13, steps of the method for processing a service according to any one of claims 14-22, or steps of the method for processing a service according to any one of claims 23-28.

34. A readable storage medium, storing a program or instruction, wherein when executed by a processor, the program or instruction implements steps of the method for processing a service according to any one of claims 1-5, steps of the method for processing a service according to any one of claims 6-13, steps of the method for processing a service according to any one of claims 14-22, or steps of the method for processing a service according to any one of claims 23-28.
